# EUROPÄISCHE PATENTSCHRIFT

(11) **EP 2 055 448 B1**
(45) Veröffentlichungstag und Bekanntmachung des Hinweises auf die Patenterteilung: **30.03.2011**
(21) Anmeldenummer: 08021275.6
(22) Anmeldetag: 04.10.2005
(51) Int. Cl.: B25J 17/02

(54) **Parellelkinematische Vorrichtung**
Parallel cinematic device
Dispositif à cinématique parallèle

(30) Priorität: 11.10.2004 AT 16942004; 11.10.2004 AT 16952004; 12.10.2004 AT 17022004; 26.04.2005 AT 7012005; 19.05.2005 AT 8612005
(43) Veröffentlichungstag der Anmeldung: 06.05.2009
(62) Teilanmeldung aus: 05790667.9
(73) Patentinhaber: Ehrenleitner, Franz, 72213 Altensteig-Walddorf (DE)
(72) Erfinder: Ehrenleitner, Franz, 72213 Altensteig-Walddorf (DE)
(74) Vertreter: Patentanwälte Barger, Piso & Partner

(56) Entgegenhaltungen:
- EP-A- 0 112 099
- SU-A1- 1 222 538
- PATENT ABSTRACTS OF JAPAN Bd. 1999, Nr. 01, 29. Januar 1999 (1999-01-29) -& JP 10 277974 A (NISHIMURA EIZOU), 20. Oktober 1998 (1998-10-20)
- THOMAS F ET AL: "Coordinate-free formulation of a 3-2-1 wire-based tracking device using Cayley-Menger determinants" PROCEEDINGS OF THE 2003 IEEE INTERNATIONAL CONFERENCE ON ROBOTICS AND AUTOMATION. ICRA 2003. TAIPEI, TAWAN, SEPT. 14 - 19, 2003, PROCEEDINGS OF THE IEEE INTERNATIONAL CONFERENCE ON ROBOTICS AND AUTOMATION, NEW YORK, NY : IEEE, US, Bd. VOL. 1 OF 3, 14. September 2003 (2003-09-14), Seiten 355-361, XP010666723 ISBN: 0-7803-7736-2
- H.BRUYNINCKX: "Closed-Form Forward Position Kinematics for a (3-1-1-1) Fully Parallel Manipulator" IEEE TRANSACTIONS ON ROBOTICS AND AUTOMATION, Bd. 14, Nr. 2, April 1998 (1998-04), Seiten 326-328, XP002358805
- BRUYNINCKX H: "The 321-HEXA: a fully-parallel manipulator with closed-form position and velocity kinematics" ROBOTICS AND AUTOMATION, 1997. PROCEEDINGS., 1997 IEEE INTERNATIONAL CONFERENCE ON ALBUQUERQUE, NM, USA 20-25 APRIL 1997, NEW YORK, NY, USA,IEEE, US, Bd. 3, 20. April 1997 (1997-04-20), Seiten 2657-2662, XP010235946 ISBN: 0-7803-3612-7

## Beschreibung

Die Erfindung betrifft mechanische parallelkinematische Vorrichtungen entsprechend dem Oberbegriff das Anspruches 1. Die Ausbildung von sogenannten Tripelpunkten ist in der Parallelkinematik bekannt, es wird dazu auf die JP-A-10 277 974 und die weiter unten ausführlich abgehandelte Literatur verwiesen, für die Theorie insbesondere auf die ,,New 6-DOF parallel robotic structure actuated by wires", die "Coordinate-free formulation of a 3-2-1 wire-based tracking device" und die "Uncertainty model and singularities of 3-2-1 wire-based tracking systems".

Alle derartigen Gebilde haben, wie ebenfalls weiter unten erläutert, den großen Nachteil, in der Praxis wegen der Komplexität ihrer Anlenkpunkte und der Schwierigkeiten beim Bestimmen der Bewegungen trotz ihrer vielen Vorteile gegenüber den klassischen seriell-kinematischen Vorrichtungen ins Hintertreffen zu gelangen.

Parallelkinematische Vorrichtungen weisen zumindest zwei zueinander entlang mehrerer Freiheitsgrade bewegliche feste Bauteile, eine feste Plattform und eine bewegliche Plattform, auf, beispielsweise Hubtische, Hängebahnen, Hubroboter, Knickarmroboter, Bagger, Fräsen, Krane, Schneideinrichtungen, Messeinrichtungen, Handhabungsroboter, etc..

Alle diese letzten Endes auf das Problem der ausreichend genauen und raschen Bewegung entlang mehrerer Freiheitsgrade zwischen einer Basis oder Grundplattform oder festen Plattform und einer Arbeitsplattform bzw. beweglichen Plattform oder Endplattform zurückzuführenden Detailprobleme werden seit langem mittels der sogenannten "seriellen Kinematik" gelöst: Dabei wird auf der Grundplattform, die zumeist aber nicht zwingend (z.Bsp. Hängebahn) raumfest in einem Inertialsystem angeordnet ist, ein Gebilde entlang eines Freiheitsgrades bewegt, auf diesem Gebilde ein weiteres Gebilde um einen anderen Freiheitsgrad, usw., bis zum Schluss, je nach Anzahl der notwendigen Freiheitsgrade und entsprechend vielen Gebilden die Endplattform erreicht wird, die beispielsweise im Falle einer Werkzeugmaschine das gewünschte Werkzeug aufweist, im Falle eines Fördermittels das Fördergut trägt etc.. Diese serielle Kinematik hat sich vielfach bewährt, insbesondere weil es möglich ist, die aneinander gereihten Freiheitsgrade zu "orthogonalisieren" d.h. dass eine Bewegung entlang eines Freiheitsgrades die Lage der Endplattform nur in dessen Richtung beeinflusst, die Lage bezüglich aller anderen Richtungen aber konstant bleiben.

Dadurch wird ein einfacher und anschaulicher Steuer- und Regelmechanismus für die Bewegung ermöglicht.

Nachteilig aber sind die Additionen aller Toleranzen in allen jeweils anfallenden Richtungen, die hohen zu bewegenden toten Massen der verschiedenen Zwischenplattformen und die Notwendigkeit, speziell ausgestaltete Elemente für die einzelnen Freiheitsgrade vorzusehen. Man denke dabei nur an eine Fräsmaschine, bei der Support entlang einer Schiene mittels einer Spindel verfahren wird, worauf auf dem Support ein Schlitten mit einer passenden Stellvorrichtung normal zur Spindelachse verfahren wird etc..

Andere Lösungen dieses Grundproblems sind schon seit langem von Reifentestmaschinen, den nach ihrem Erfinder so genannten Gough-Plattformen, und bei Flugsimulatoren zur Bewegung der Kabine, die das Cockpit darstellt, nach ihrem Erfinder Stewart-Plattform genannt, bekannt. Diese alternative Kinematik erhielt die Bezeichnung "Parallelkinematik", weil zur gezielten Bewegung der Endplattform eine parallele (eigentlich simultane) Betätigung aller Antriebe entlang aller Achsen notwendig ist und weil im allgemeinen auch alle. Damit ist die Problematik der Parallelkinematik schon im wesentlichen angedeutet, sie erfordert einen hohen Steuer- und Regelaufwand (damit auch Rechenaufwand) für die gewünschte Bewegung der beweglichen Plattform.

Der Rechenaufwand wird besonders dadurch in die Höhe getrieben, dass keine geschlossenen Lösungen für die Steuerung vorliegen und daher iterativ gerechnet werden muß. Dies führt insbesondere bei langen Wegen der beweglichen Plattform, seien es nun Winkel oder Längen, noch zum Problem der weit überlinear ansteigenden Rechenarbeit und dem Problem der nicht (leicht) zu erkennenden Verzweigung der Lösungen. Eine derartige Verzweigung kann dazu führen, dass die Aktuatoren (Aktuator, zumeist Stäbe, gegebenenfalls auch Seile od.dergl., deren Länge veränderlich ist oder deren Fußpunkt, das ist der Anlenkpunkt an der festen Plattform, beweglich ist, aber aus der US 5,966,991 A ist auch eine rotatorische Parallelkinematik bekannt) falsch betätigt werden und es zur Kollision von Stäben kommt.

Wie man aus der Vorgabe, dass jeder Aktuator nur einen Freiheitsgrad festlegen soll, die anderen fünf aber nicht beeinträchtigen soll, leicht erkennen kann, sind extrem aufwendige, hochgenaue und damit teure Lager für jeden der Antriebe notwendig.

Um dies zu verdeutlichen Folgendes:

Bei einer Vorrichtung mit allen sechs Freiheitsgraden zwischen der festen und der bewegten Plattform benötigt man sechs Stäbe, von denen jeder in fünf Freiheitsgraden frei sein muss, somit sind dreißig Bewegungsricht möglichts genau und somit vorgespannt zu verwirklichen, z.B. zwei Kardangelenke und ein Achsial-Radiallager pro Stab oder ein Kardangelenk und ein Kugelgelenk pro Stab. Damit einher geht die problematische Kalibrierung von Parallelkinematiken, darunter versteht man die Berücksichtigung mechanischer Ungenauigkeiten im Rechenmodell für die Ansteuerung der Bewegung der einzelnen Stäbe. Dem Problem der Kalibrierung wurde im Werk: Kinematics, Dynamics and Design of Machinery von Kenneth J. Waldron und Gary L. Kinzel einiger Raum gewidmet. Es wird auch, auf Seite 419, eine orthogonalisierte 3-2-1 Kinematik dargestellt, bei der die sechs als Stäbe ausgebildeten Aktuatoren jeweils parallel zu den Achsen eines kartesischen Koordinatensystems liegen, wobei drei der Stäbe in einem Punkt der beweglichen Plattform gelagert sind, zwei weitere in einem anderen Punkt der beweglichen Plattform und schließlich der letzte einzeln für sich. Diese Anordnung wird für extrem kleine Bewegungen als vorteilhaft wegen der Möglichkeit angesehen, bei der Berechnung der Folgen der Längenveränderung eines Stabes die Lage und Länge aller anderen Stäbe als konstant bleibend anzusehen, wodurch die Bewegungsgleichungen entkoppelt werden. Dies geht nur für derart geringe Änderungen, wie sie in der Praxis nicht vorkommen.

Andere Werke, die sich theoretisch mit der Kalibrierung beschäftigen, sind die nach der Priorität dieser Anmeldung im November 2004 veröffentlichte Studie: ,,New 6-DOF parallel robotic structure actuated by wires", die sich mit der Frage der Abweichung der tatsächlichen Position einer beweglichen Plattform, die an sechs Seilen aufgehängt ist, von der jeweils berechneten Position aufgrund verschiedener Toleranzen und Fehler beschäftigt. Die Kinematik selbst ist stets eine hängende Stuartplattform.

Auch ein weiteres Dokument: "Coordinate-free formulation of a 3-2-1 wire-based tracking device" von Federico Thjomas, Erika Ottaviano, Lluis Ros und Marco Ceccarelli, beschäftigt sich ausschließlich mit den Problemen der Lagebestimmung einer hängenden Plattform beschäftigt, wobei eine 3-2-1 Kinematik im Vergleich zu einer 2-2-2-Kinematik dargelegt wird. Dabei werden ausschließlich verschiedene Singularitäten und die Auswirkung von Toleranzen und deren mathematischer Behandlung erläutert. Festgehalten muss aber werden, dass (Seite 2, spaltenübergreifend) festgestellt wird, dass die Bewegungsgleichungen einer solchen 3-2-1 Kinematik in geschlossener Form bestimmt werde können und zu acht Lösungen führen, was die minimale Lösungszahl für direkt kinematische Vorrichtung mit sechs Freiheitsgraden darstellt.

Es ist diese Veröffentlichung aufgrund ihres theoretischen Charakters ohne jeden Hinweis auf eine praktische Durchführung und auch ohne Hinweis auf eine mögliche Umbildung zu einer Stabkinematik ohne groβen Wert für eine solche.Es sollen ja mit dieser Arbeit auch nur die verschiedenen Probleme theoretisch behandelt werden, weshalb dieses Fehlen keinen Mangel darstellt, sondern systemkonform ist.

Der Artikel "Uncertainty model and singularities of 3-2-1 wire-based tracking systems" von den gleichen Autoren wie das vorstehende Dokument behandelt ausschließlich die Probleme, die entstehen, wenn gewisse Schnurlängen nicht genau bekannt sind und verschiedene Winkellagen vorliegen, die zu Singularitäten führen könnten. Es ist aus diesem Grund diese Druckschrift ohne Relevanz für praktische Parallelkinematiken.

Die DE 102 57 108 A, die auf den Anmelder zurückgeht, betrifft eine Laufkatze mit einem Traggestell für eine Autokarosserie od. dergl., wobei die Verbindung zwischen der Lauf katze und dem Traggestell über zwei zick-zack-förmig angeordnete Rahmen erfolgt, die um zwei horizontale, zueinander parallele Achsen verschwenkbar sind. Mittels Seilen wird einerseits die Lage der unteren Achse zur Laufkatze und andererseits die Lage des Traggestelles bezüglich dieser Achse festgelegt. Wenn man diese Anordnung als Parallelkinematik mit zwei Freiheitsgraden interpretiert, so stellt sie ein höchst interessantes Zwitterwesen aus Seilkinematik und rotatorischer Parallelkinematik dar, hat aber keinerlei Zusammenhang mit einer Parallelkinematik mit längenveränderlichen Aktuatoren.

Die EP 1 106 563 A, zwischenzeitlich erteilt und in einem Einspruchsverfahren verfangen, offenbart eine Seilkinematik mit zumindest einem schräg zu den vertikalen Halteseilen verlaufenden Stabilisierungsseil. Die Anlenkpunkte der Seile sind dabei nach konstruktiven Gesichtspunkten: Platzbedarf der Rollen, Haspeln und Motoren, etc. ausgewählt und nicht nach kinematischen Pinzipien.

Die DE 101 00 377 A, die ebenfalls auf den Anmelder zurückgeht, betrifft einen Tauch-roboter für Lackieranlagen von Fahrzeugkarosserien. Dieser Tauchroboter ist in Form eines Gelenkviereckes ausgebildet, wobei am Wagen die Basis und am zu lackierenden Fahrzeug die Koppel ausgebildet ist, die beiden Kurbeln haben gleiche Länge, sodass es möglich ist, das Gelenkviereck nach Art eines Gelenkparaflelogramms zu bewegen. Dazu kommt noch, dass an einer der beiden Kurbeln, geoffenbart ist dies für die in Fahrtrichtung gesehen hinten liegende Kurbel, das Ende seinerseits frei gegenüber dem Rest der Kurbel drehbar ist wodurch verschiedene Schrägstellungen der Karosserie ermöglicht werden. In Kombination mit der Betätigung der hinteren Kurbel lassen sich eine ganze Reihe von bewegungen ausführen, wobei aber alle diese Bewegungen ausschließlich die sogenannte Ebene Kinematik betreffen.

Wollte man diese Vorrichtung als Parallelkinematik ansprechen, so wäre es eine rein rotative Parallelkinematik, dazu kommt noch, dass durch die Unterteilung der hinteren Kurbel zwangsläufig eine serielle Kinematik vorliegt.

Die DE 101 03 837 A, die ebenfalls auf den Anmelder zurückgeht, betrifft, wie die vorstehend genannte Druckschrift, eine Lackiervorrichtung für Fahrzeugkarosserien und eine ausschließlich Ebene Kinematik. Als Besonderheit, die tatsächlich als eine Art Parallelkinematik angesehen werden kann, ist die Art der Verschwenkbarkeit des Fahrzeugschwerpunktes um den Transportwagen in Verbindung mit der Drehung des Fahrzeuges um eine Querachse anzusehen.

Diese Drehungen erfolgen einerseits durch eine Kurbel und andererseits durch ein Gelenkparallelogramm, das die Drehung der Karosserie um das Ende der Kurbel, an dem sie befestigt ist, bewirkt. Es kann somit diese Kinematik als eine Art rotative Parallelkinematik angesehen werden, doch gelangt man bei einer solchen Betrachtungsweise sehr schnell auf große begriffliche Schwierigkeiten, wenn man berücksichtigt, dass es aus folgenden Gründen keine feste Plattform gibt: Die Enden des Parallelogramms, die sich auf der Seite des Transportwagens befinden und eigentlich die feste Plattform bilden sollten, bewegen sich ja bezüglich der tatsächlich festen Plattform, die durch den Fußpunkt des Schwenkarmes gebildet ist, ebenfalls. Es liegt also auch hier ein serieller kinematischer Abschnitt im Bereich einer teilweisen parallelen Kinematik vor.

Die WO 03/004223 A, deren Inhalt hiermit durch Bezugnahme dem Inhalt dieser Arnneldung einverleibt wird, ist ein umfangreiches Pamphlet, das eine ganz ertaunliche Vorrichtung betrifft, nämlich eine zentralsymmetrische, parallele Stabkinematik, die durch Fußpunktverschiebung betätigt wird. Zusätzlich weist das dargestellte Ausführungsbeispiel einen Drehmechanismus für eine Werkzeugplattform auf der beweglichen Plattform auf, dieser seriell ausgebildete Drehmechanismus wird durch eine Drehstange und einen Motor über eine entsprechende Kupplung betätigt. Es wird auch auf die Möglichkeit eingegangen, kinematisch überbestimmte Systeme zu verwenden und Fußpunktmechanismen in Kombination mit längenveränderlichen Aktuatoren einzusetzen. Der Aufbau dieser Vorrichtung ist folgender: An der festen Plattform sind zentralsymmetrisch sechs vertikale Schienen für die Verschiebung der Fußpunkte vorgesehen. Drei Stäbe sind länger, drei kürzer ausgebildet, die kürzeren greifen an einem "tiefer" liegenden Bereich der beweglichen Plattform an und sind um 60° bezüglich der längern Stäbe versetzt.

Damit erreicht man eine im wesentlichen entlang der Zentralachse verfahrbare bewegliche Plattform, was auch durch die Fig. 4 dieser Druckschrift belegt wird. Diese zeigt die Anordnung der oben beschriebenen Konfiguration, um sie beweglicher zu gestalten, auf einer Stuartplattform, somit die serielle Kopplung zweier Parallelkinematiken. Es wird aber bei dieser Ausführungsform interessanterweise die Bewegung der einen Parallelkinematik überhaupt nicht zur Bewegung der anderen verwendet, d.h. die gesamte Bewegung der zweiten Parallelkinematik erfolgt von sich heraus auf der Zwischenplattform, sodass hier eigentlich nur eine Aggregation und keine Kombination vorliegt.

Die WO 03/059581 A, deren Inhalt hiermit durch Bezugnahme dem Inhalt dieser Anmeldung einverleibt wird, betrifft eine originelle Kinematik, die auf der Basis der Fußpunktverschiebung arbeitet, wobei verschiedene Kraftecke bzw. -scheren vorgesehen sind.

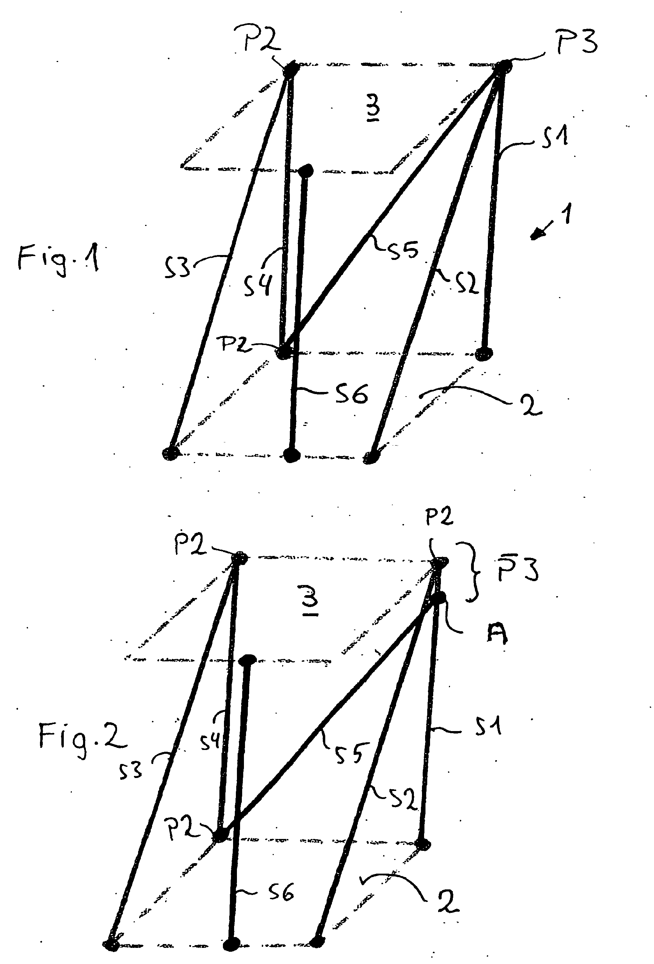

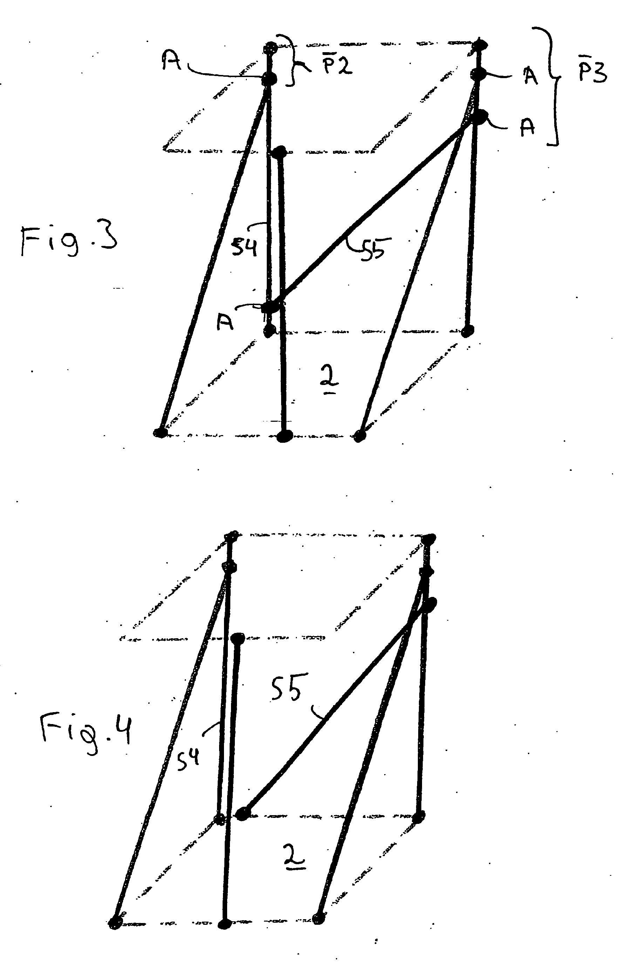

Unter einem Krafteck sind zwei an einem gemeinsamen Punkt angreifende Stäbe bzw. Aktuatoren zu verstehen, unter Kraftschere bzw. kurz Schere ein Krafteck mit zumindest einem Aktuator. Bei dieser Druckschrift weisen die Kraftecke bzw. -scheren aber ihr Doppelgelenk nicht an der beweglichen Plattform auf, sondern an Aktuatoren, die die Fußpunktverschiebung bewirken. Diese Aktuatoren arbeiten im wesentlichen rotatorisch, sodass letztlich durch die besondere Ausbildung der Fußpunktverschiebung wieder ein serielles Element in die -Kinematik eingebracht wird. Dies geht auch aus einem Vergleich der Fig. 2 und 3 hervor, da die Fig. 3 die Fußpunktverschiebung in fast perfekter Analogie zur vorstehend abgehandelten WO 03/004223 A zeigt.

Für die Bewegung größerer Lasten bzw. das Übertragen größerer Kräfte ist aus dieser Druckschrift nichts Vorbildhaftes zu entnehmen, da die Umleitung der Kräfte zwischen den beweglichen Fußpunkten und den Aktuatoren, die diese Fußpunktbewegung durchführen, noch mehr zwischen den Hebeln die diese fußpunktverschiebung besorgen und ihrer Haltestange extrem ungünstig ist. Auch für größere Arbeitsbereiche ist diese Vorrichtung, nicht zu verwenden, da ihr relativer Platzbedarf (Verhältnis Platzbedarf/Arbeitsvolumen) sehr groß ist.

Einen hervorragenden Überblick über die geschichtliche Entwicklung und die Grundlagen der parallelkinematischen Vorrichtungen samt Angabe der wichtigsten Patente gibt Illian Bonev im Artikel ,,The True Origins of Parallel Robots" auf der Homepage http://www.parallemic.org des,, The Parallel Mechanisms Information Center".

All die oben genannten Probleme und Unzulänglichkeiten realer parallelkinematischer Vorrichtungen in der Praxis sind wohl die Gründe dafür, dass trotz der genannten und anerkannten Vorteile der erste Prototyp einer Werkzeugmaschine mit Parallelkinematik erst 1994 auf der IMTS in Chicago vorgestellt wurde.

Bei näherer Betrachtung fällt auch auf, dass die Parallelkinematik unter dem Problem leidet, nur geringe Schwenkwinkel zuzulassen, da ansonsten die Stäbe einander ins Gehege kommen, und dass es Stellungen zwischen den beiden Plattformen gibt, bei denen die Parallelkinematik eine Position einnimmt, die einer sogenannten Singularität entspricht, aus der sie nicht mehr von sich aus gelöst werden kann. Auch der große relative Platzbedarf der Parallelkinematik gemäß dem Stand der Technik ist zu erwähnen, so benötigen noch im Jahr 2003 fertig entwickelte und produzierte Werkzeugmaschinen die einen Arbeitsraum von 0,6 x 0,6 x 0,6 m aufweisen, eine Kubatur von 3,5 x 3,5 x 3,5 m.

Trotz dieser Nachteile kommt die Parallelkinematik für viele Anwendungsgebiete, insbesondere-wenn-hohe-Bewegungsdynamik und hohe Wiederholgenauigkeiten der anzufahrenden Positionen bzw. der zu befahrenden Wege verlangt werden und ganz speziell, wenn diese Anforderungen mit der Notwendigkeit hoher Steifigkeit der Konstruktion einhergeht, mehr und mehr zur Anwendung. Dabei hat das hervorragende Verhältnis von bewegbarer Last zu Eigengewicht, das bis 2:1 reicht, während serielle Kinematik nur 1:20 erzielt, und so zu merklicher Energieersparnis führt, einen wesentlichen Anteil am Wunsch, die parallele Kinematik vermehrt einzusetzen.

Dazu kommt noch, dass die einzelnen Teile der Parallelkinematiken nur eine geringe mechanische Komplexität aufweisen und dass in vielen Fällen für alle oder zumindest eine Mehrzahl der abzudeckenden Freiheitsgrade identische Bauteile verwendet werden können, sodass der Aufbau der Parallelkinematiken an sich einfach und kostengünstig ist.

Im Hinblick auf diesen einfachen und modularen Aufbau, aber auch für die anderen genannten Eigenschaften wird auf den sogenannten DELTA-Roboter, das Hexapod und den IRB 940 Tricept verwiesen.

Eine mit dem schon damals lange bekannten Hexapod kinematisch vollständig identische Konstruktion, die dennoch patentiert wurde, ist aus der EP 1 095 549 B, entsprechend der DE 199 51 840 A, bekannt: Sie betrifft eine Dreipunkt-Anhängevorrichtung für ein Zugfahrzeug, die mittels sechs in ihrer Länge verstellbaren Stäben in sechs Freiheitsgraden bezüglich des Zugfahrzeuges bewegt werden kann. Im Sinne der Nomenklatur dieser Beschreibung entspricht das Zugfahrzeug der festen Plattform und die Anhängevorrichtung der beweglichen Plattform.

Eine Anwendung der Parallelkinematik auf sogenannte Mikromanipulatoren mit Bewegungsbereichen von wenigen Millimetern oder noch darunter, dafür aber hoher Anfahrgenauigkeit, ist aus den aus einer gemeinsamen Anmeldung hervorgegangenen US 6,671,975 B und US 6,769,194 B bekannt. Die Vorrichtung beruht auf dem Hexapod und verbessert die Präzision der Längenänderungen der Stäbe durch den Einsatz von Piezoelementen.

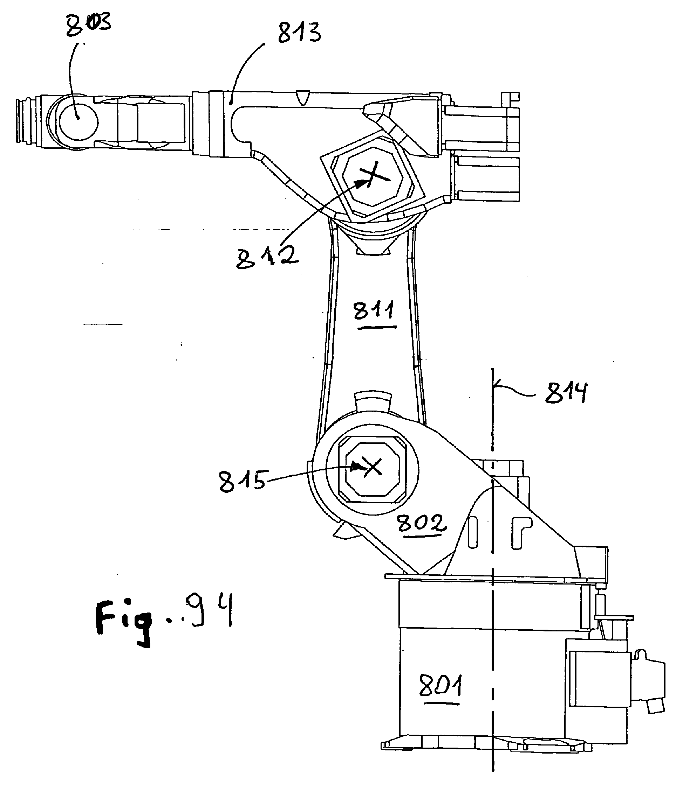

Eine besondere Art der Kinematik, die nicht unter die Parallelkinematik fällt, aber wegen ihrer Weiterentwicklung-genannt-werden soll, ist aus der Praxis bekannt, in Fig. 94 der vorliegenden Beschreibung dargestellt und wird weiter unten ausführlicher behandelt: Es handelt sich um einen Roboter mit einer um eine vertikale Achse drehbaren "festen Plattfom". Auf dieser festen Plattform ist, um eine horizontale Achse mittels eines Motors schwenkbar, ein im wesentlichen zwischen vertikaler Lage und fast horizontaler Lage verschwenkbarer Tragarm angeordnet, an dessen freiem Ende ein Werkzeughalter um eine zur genannten horizontalen Achse parallele Achse verschwenkbar montiert ist. Bei üblichen Robotern dieses Aufbaues, beispielsweise von KUKA, ist- ein Stellmotor zwischen Arm Werkzeughalter vorgesehen, der die Winkellage bestimmt.

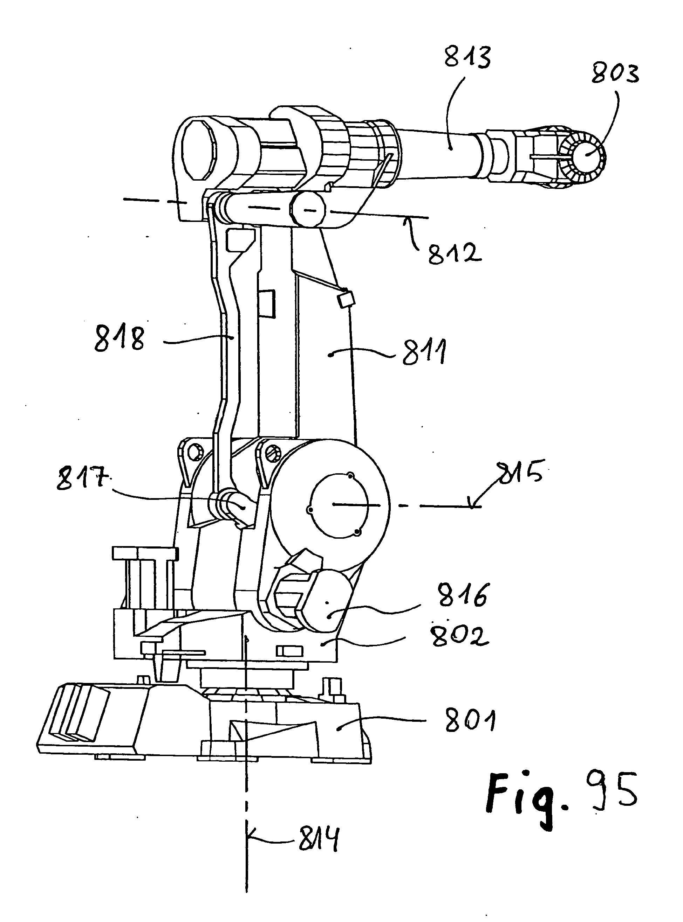

Beim einem ähnlichen vorbekannten Roboter von ABB, in der vorliegenden Beschreibung anhand der Fig. 95 näher erläutert, ist zur Vermeidung der Anordnung des Gewichtes des Stellmotors am bewegten Werkzeughalter der Stellmotor am unteren Ende des Armes angeordnet und betätigt über einen Radialstummel einen Stellarm, der parallel zum Tragarm verläuft und an passender Stelle des Werkzeughalters gelenkig angreift. Dadurch könnten der Stellarm und der Tragarm als Stäbe und der Werkzeughalter als bewegliche Plattform angesehen werden, wobei aber die Bewegung und Positionierung durch reine Drehmomentbelastung der Stäbe (zu der dann noch die eigentliche Last als Druck- bzw. Biegebelastung kommt) erreicht wird, sodass hier trotz der Stäbe und der Art ihrer Anordnung eine rotatorische Parallelkinematik (wenn überhaupt eine Parallelkinematik), ähnlich der in der oben genannten US 5,966,991 A beschriebenen, vorliegt.

Ausgehend von diesem Stand der Technik ist es Ziel der Erfindung, eine Parallelkinematik für die eingangs genannten Anwendungsgebiete zu schaffen, die auf der Kombination von Aktuatoren (durch Fusspunktverschiebung wirkende Stäbe konstanter Länge oder längenveränderliche Stäbe, gegebenenfalls auch längenveränderliche Seile oder andere Zugmittel) und passiven Stäben beruht, wobei insbesondere die Probleme der komplexen Steuerung und der Lagerung vermieden oder zumindest deutlich reduziert werden soll.

Erfindungsgemäß geschieht dies durch die im Anspruch 1 definierte Vorrichtung.

Dabei ist der Begriff "nahe" in den Ausdrücken "nahe benachbart" und "nahe des Angriffspunktes an der beweglichen Plattform" so zu verstehen, dass ein gewisser Abstand zwischen den entsprechenden Angriffspunkten vorhanden ist.

Es ist daher so, dass in der kinematischen Kette zumindest an einer Stelle drei Stäbe mittelbar oder unmittelbar an einem Punkt, einem sogenannten Pseudo-Tripelpunkt, angreifen bzw. enden. Dadurch sind die linearen Freiheitsgrade definiert, die mathematische Lösung der Steuerung wird geschlossen, damit gegenüber den offenen Lösungen gemäß dem Stand der Technik wesentlich meist um den Faktor eintausend, vereinfacht, und ist beispielsweise über die Winkelfunktionen darstellbar. Dies ermöglicht auch auf einfache Weise eine "Vorsteuerung" der Bewegung. Darüber hinaus wird der Bewegungsablauf der kinematischen Ketten auch wesentlich anschaulicher und es können ohne komplexe Analysen die Fragen der Kollision der einzelnen Bauteile und des Auftretens von Singularitäten beurteilt werden.

Die Bezeichnung mittelbar oder unmittelbar wurde gewählt, da es für die praktische technische Ausführung völlig reicht, wenn einer (oder zwei) der drei Stäbe knapp am Ende eines der anderen beiden Stäbe angreift oder alle drei in unmittelbarer gegenseitiger Nachbarschaft an der Plattform angelenkt sind oder wenn andere Kombinationen der Möglichkeiten der Anordnung der Angriffspunkte vorliegen.

Dadurch wird zwar in einem Stab ein Biegemoment induziert, doch vereinfacht sich die praktische Ausführung des Lagers und es werden dessen mögliche Schwenkwinkel deutlich erhöht, ohne der Vereinfachung der Rechenarbeit oder der Grundlage der Erfindung, nämlich der Definition der linearen Freiheitsgrade, Abbruch zu tun. Bei Tripelpunkten kann je nach Bewegung des passend definierten Kraftecks entweder ein echter Doppelpunkt in Kombination mit einem Angriffspunkt des dritten Stabes in der Nähe des Doppelpunktes oder ein einfacher Angriffspunkt mit zwei in dessen Nähe am ersten Stab angreifenden Stäben ausgebildet sein. In Sonderfällen können auch zwei oder alle drei Stäbe in nächster Nähe an der beweglichen Plattform angreifen, dann kann zwar auf eine iterative Rechnung nicht gänzlich verzichtet werden, aber diese betrifft nur kleine Winkel/Wege und ist um Größenordnungen einfacher und schneller als im Stand der Technik.

Wenn diese mittelbare Ausführung bei Tripelpunkten im Bereich der festen Plattform verwendet wird, so gehen die mathematischen Vorteile teilweise verloren, da die Lage des Fußpunktes des so angebundenen Stabes sich mit der Lage des Stabes, an dem er angelenkt ist, ändert. Die mechanischen Vorteile, insbesondere das Lager betreffend, bleiben aber voll erhalten. Es kann gegebenenfalls nach der geschlossenen Lösung für den Tripelpunkte eine iterative Berechnung der exakten Endlage erfolgen, doch betrifft dies ausschließlich kurze Wege und ist daher auch iterativ ohne großen Aufwand und jedenfalls ohne die oben genannten Probleme möglich Aus mechanischen Gründen ist es bevorzügt, dass der auf Biegung belastete Stab derjenige sein sollte, der nach Analyse des zugrunde liegenden Problems sich als der am geringsten belastete der gesamten kinematischen Vorrichtung, oft einfach "Kinematik" genannt, herausstellt.

Fine vorteilhafte Weiterbildung der Erfindung besteht darin, eine sogenannte überdefinierte bzw. überbestimmte Kinematik zu verwenden. Damit erreicht man eine Erhöhung der Steifigkeit der Vorrichtung, kann die bewegliche Plattform, was oft günstig ist, leichter und damit weniger steif bauen, weil sie durch die überbestimmte Fixierung stabilisiert wird und weil dies, zumindest in einem gewissem Ausmaß, notwendig ist, um die Toleranzen der überbestimmten Führung auszugleichen und so Beschädigungen der Lager bzw. der Aktuatoren (Antriebe, Getriebe und ausführende Organe in ihrer Gesamtheit) zu verhindern.

Eine weitere vorteilhafte Variante der Erfindung, die mit der vorstehend genannten nicht in Widerspruch steht, besteht darin, durch Lager für einzelne Stäbe, die keine allseitige Bewegung zulassen (Kardangelenk statt sphärischer Lagerung), Stäbe "einzusparen" und dafür Biegebeanspruchungen in Kauf zu nehmen. Diese zusätzliche mechanische Beanspruchung ist bei vielen Anwendungsgebieten, bei denen keine großen Kräfte auftreten, z.B. bei der Führung eines Laserkopfes zum Schneiden von Material, leicht zu beherrschen und reduziert den Aufwand und Platzbedarf nochmals.

Eine weitere Ausgestaltung der Erfindung besteht darin, nach der Festlegung der drei in einem Tripelpunkt zusammenlaufenden Stäbe die anderen drei notwendigen Stäbe gemäß den speziellen Systemanforderungen anzuordnen und auszuwählen. Besonders günstig ist es hier, ein weiteres Zeigerpaar bzw. Krafteck (zwei Stäbe, die in einem Punkt angreifen) und einen Einzelstab vorzusehen. Damit reduziert sich der für die Steuerung der Bewegung notwendige mathematische Aufwand nochmals dramatisch und in mechanischer Hinsicht erlaubt eine solche Anordnung den Einsatz von Gleichlaufelementen, Führungen etc..

In der folgenden-Beschreibung und-den Ansprüchen wird zur besseren Lesbarkeit immer von einem ,,Tripelpunkt" gesprochen, es sei denn, es wird speziell die nahe des Punktes angreifenden Variante, der sogenannte "Pseudo-Tripelpunkt" erläutert oder wenn die Unterschiede zwischen Tripelpunkt und Pseudo Tripelpunkt eine erwähnenswerte Rolle spielen.

In einer Anzahl von Fällen können einzelne oder mehrere Stäbe und/oder Aktuatoren durch Zugmittel wie Seile, Ketten, Bänder, etc. ersetzt-werden, dies ändert nichts an der Erfindung an sich. Es spielt auch in zahheichen Anwendungsfällen keine Rolle, ob einzelne oder mehrere Aktuatoren als längenveränderliche Stäbe oder als Stäbe konstanter Länge, aber mit Fußpunktverschiebung (seltener Kopfpunktverschiebung, wegen des steigenden mathematischen Aufwandes) verwendet werden. Der Fachmann auf dem Gebiet der Parallelkinematik kann in Kenntnis der Erfindung die entsprechende Auswahl leicht vornehmen, in der Beschreibung und den Ansprüchen wird daher nicht näher darauf eingegangen.

Die Erfindung wird im folgenden anhand der Zeichnung näher erläutert. Dabei zeigt bzw. zeigen:
die Fig. 1-7 rein schematisch verschiedene Ausbildungen um Verbindungen mit einem Pseudo-tripelpunkt, wobei die Figuren 1,5, 6 und 7 nicht der Erfindung entsprechen,
die Fig. 8 einen Tripelpunkt, der nicht der Erfindung entspricht,
die Fig. 9 eine vergrößerte Ansicht eines Details des Tripelpunktes der Fig. 8,
die Fig. 10 eine erfindungsgemäße Ansführung eines Pseudotripelpunktes in einer Ansicht entsprechend der Ansicht der Fig. 8,
die Fig. 11 ein Detail der Fig. 10,
die Fig. 12-24 Hubtischen mit einer erfindungsgemäßen Verbindung
die Fig. 25-32 Hängebahn mit einer erfindungsgemäßen Verbindung,
die Fig. 33-38 eine erste Variante eines Hubroboters,
die Fig. 39-42 eine zweite Variante eines Hubroboters,
die Fig. 43-49 eine Kinematik mit Knickarm in einem ersten Betriebsmodus,
die Fig. 50-53 die vorstehende Kinematik in einem zweiten Betriebsmodus,
die Fig. 54-64 eine erste Weiterbildung der Kinematik mit Knickarm,
die Fig. 65-68 eine zweite Weiterbildung der Kinematik mit Knickarm,
die Fig. 69-71 eine dritte Weiterbildung der Kinematik mit Knickarm, die Fig 72-79 eine erste Variante einer zweistufigen Kinematik mit Knickarm,
die Fig. 80-90 eine zweite Variante einer zweistufigen Kinematik mit Knickarm,
die Fig. 91 eine erste Variante mit besonders ausgebildeter beweglicher Plattform,
die Fig. 92 eine zweite Variante mit besonders ausgebildeter beweglicher Plattform,
die Fig. 93 eine dritte Variante mit besonders ausgebildeter beweglicher Plattform,
die Fig. 94-95 Roboter gemäß dem Stand der Technik,
die Fig. 96-97 einen ersten Roboter mit einer erfindungsgemäßen Verbindung,
die Fig. 98-99 eine erste Ausgestaltung des ersten Roboters,
die Fig 100 eine zweite Ausgestaltung des ersten Roboters,
die Fig. 101 eine Kombination der beiden Ausgestaltungen,
die Fig. 102-105 eine erste Variante eins zweiten Roboters,
die Fig. 106-108 eine zweite Variante des zweiten Roboters,
die Fig. 109-112 eine-besonders torsionssteife Kinematik,
die Fig. 113-117 eine erste Ausgestaltung der torsionssteifen Kinematik,
die Fig. 118-122 eine zweite Ausgestaltung der torsionssteifen Kinematik,
die Fig. 123-127 eine Kombination der beiden letztgenannten Ausgestaltungen,
die Fig. 128-132 eine erste Ausgestaltung einer besonderen torsionssteifen Kinematik und
die Fig. 133-137 eine Weiterbildung der letztgenannten Ausgestaltung.

### Prinzipielle Erläuterung des Grundgedankens der Erfindung:

In Fig. 1 ist eine rein schematische Darstellung einer Parallelkinematik dargestellt, die in ihrer Gesamtheit mit 1 bezeichnet wird. Wie eingangs der Beschreibung erläutert, verbindet eine solche Kinematik eine feste Plattform 2 mit einer beweglichen Plattform 3, wobei, im Gegensatz zur seriellen Kinematik, keine Zwischenplattformen vorgesehen sind. Die Bezeichnung "feste Plattform" bedeutet nicht notwendigerweise, dass diese in einem Inertialsystem ruht, es wird durch diese Bezeichnung nur unterschieden, von welcher Plattform ausgehend die Bewegung innerhalb des betrachteten Systems erfolgt.

Auf diese Weise erreicht man es, dass die Gesamtkinematik bei der Parallelkinematik aus geschlossenen Ketten besteht, d.h. es gibt verschiedene geschlossene Systeme von Stäben, -die-auf einem Weg von einer Plattform zur anderen und auf einem anderen Weg wieder zurück von dieser anderen Plattform zur einen gehen. Dies ist, man denke nur an die Werkzeugführung einer Drehbank, bei der seriellen Kinematik völlig ausgeschlossen und mit ein Grund für die höhere Steifigkeit aber auch die komplexere Bewegungsmathematik der Parallelkinematiken. Erfindungsgemäß wird nun diese Komplexität, ohne auf die Vorteile der Parallelkinematik zu verzichten, dadurch drastisch verringert, dass zumindest ein Anlenkpunkt vorgesehen wird, von dem drei Stäbe ausgehen.

In Fig. 1 ist eine Parallelkinematik 1 dargestellt, bei der eine feste Plattform 2 mittels sechs Stäben S1 bis S6 mit einer beweglichen Plattform 3 verbunden ist Diese Parallelkinematik 1 verfügt über einen sogenannten Tripelpunkt P3, er ist auf der beweglichen Plattform 3 vorgesehen. Durch das Ausbilden des dreifachen Punktes P3 wird aus den dort angelenkten Stäben S1, S2 und S5 ein Gebilde geschaffen das als ,,Zeigerpaar" oder ,,Krafteck" bezeichnet wird und über einen zusätzlichen Stab verfügt. De facto werden in diesem Punkt eigentlich drei Zeigerpaare gebildet, nämlich jeweils die Kombination S1-S2, S1-S5 und S2-S5. Im dargestellten Ausführungsbeispiel ist ein weiteres Zeigerpaar vorgesehen, das von den Stäben S3 und S4 gebildet wird, die beide im Punkt P2, der, so wie der Punkt P3, auf der beweglichen Plattform 3 angeordnet ist. Ein weiterer Doppelpunkt, P2' wird auf der festen Plattform 2 von den Stäben S4 und S5 ausgebildet.

Durch passende Anordnung der jeweils "anderen" Enden (Fußpunkte) der Stäbe S1, S4 bzw. S2, S3 bleiben diese beiden Zeigerpaare bei einer ganzen Reihe von in der Technik üblichen Anwendungen und Bewegungen stets zueinander in paralleler Lage und können daher auch einer gemeinsamen Bewegungsbeschreibung und somit Regelung unterworden werden.

Der letzte, einzeln, angeordnete Stab S6, der ohne Beschränkung der Allgemeinheit in der dargestellten Position normal zwischen den beiden Plattformen verläuft, bestimmt nun den letzten Freiheitsgrad und definiert die Lage der beweglichen Plattform 3 gegenüber der festen Plattform 2 endgültig.

Wenn man das so aufgebaute Gebilde nun von seiner Kinematik her betrachtet, so ergibt sich klar, dass durch die jeweilige Länge der Stäbe S1, S2 und S5 die Lage des Punktes P3 (immer, -ohne dass es in der weiteren Beschreibung stets angeführt wird, gegenüber der festen Plattform 2, sei diese nun tatsächlich Teil eines Inertialsystems oder ihrerseits in einem solchen beweglich) eindeutig definiert ist, und dass die jeweilige Länge der anderen drei Stäbe S3,S4 und S6 die Winkellage der beweglichen Plattform definiert.

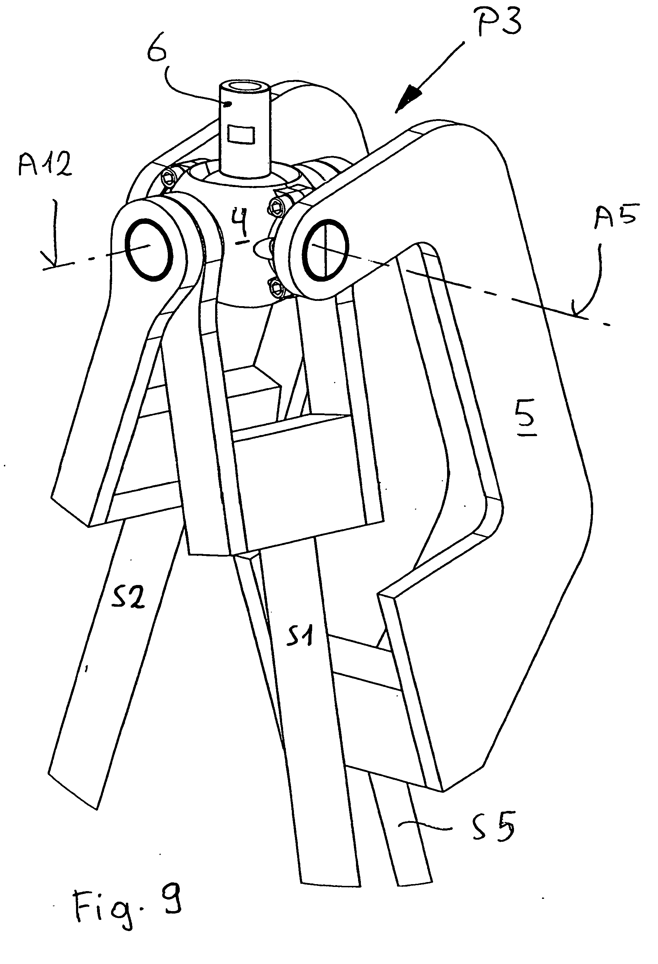

Da die praktische Ausbildung eines Lagers, in dem drei Stäbe sphärisch fixiert sein sollen, aufwendig ist (Fig. 9) und durch die notwendigen Lagerflächen die zulässigen Schwenkwinkel der drei Stäbe stark eingegrenzt sind, gibt es in der Praxis noch keine 3-2-1 Kinematik, die eingans genannten theoretischen Abhandlungen fanden keinen Widerhall. Es ist für die technische Anwendbarkeit aber nach einem grundlegenden Aspekt der Erfindung ohne weiteres möglich und zulässig, und wird als mechanisch vollwertige Alternative angesehen, einen der drei Stäbe an einem anderen der drei Stäbe angreifen zu lassen (Alternativpunkt A), wie dies in Fig. 2 dargestellt ist.

Die mechanische Beanspruchung des Stabes, an dem der andere angreift (im dargestellten Ausführungsbeispiel der Stab S1), kann durch die in der Beschreibungseinleitung angegebenen Maßnahmen in zulässigen Grenzen gehalten werden, die mathematischen Vereinfachungen bleiben so gut wie zur Gänze erhalten und die Problematik der Lagerung der Stäbe an der Plattform wird völlig umgangen. In der Beschreibung und den Zeichnungen wird diese Ausbildung des Tripelpunktes P3 als Pseudotripelpunkt P'3 bezeichnet, auf die Unterschiede wird nur dort eingegangen, wo sie von Bedeutung sind oder im einzelnen erläutert werden.

Die Fig. 3 zeigt eine weitergehende Ausgestaltung in der Richtung, wie sie zwischen der Fig. 1 und Fig. 2 vorgenommen wurde. Es wird bei dieser Variante auch eine Entbündelung der Doppelpunkte P2 auf völlig analoge Weise zur Entbündelung des Tripelpunktes P3 vorgenommen, der ja in der Variante der Fig. 2 zu einem Doppelpunkt P2 und einem Altemativpunkt A wurde. Dabei wurde auch der Doppelpunkt P2' der Stäbe S4 und S5 an der festen Plattform 2 entbündelt, auf die dadurch entstehenden mathematischen Probleme wurde bereits oben hingewiesen. Es besteht diese Konstruktion somit nur mehr aus den üblichen Befestigungspunkten, die an sich kein Bezugszeichen tragen, und den Alternativpunkten A. Analog zur Änderung der Bezeichnung eines Tripelpunktes P3 zu P'3 wird eine Kombination eines solchen normalen Befestigungspunktes und eines Alternativpunktes als P'2 bezeichnet.

Von der Vereinfachung gegenüber der Parallelkinematik gemäß dem Stand oder Technik her gesehen ist die Variante der Fig 4 mit der Variante der Fig. 3 völlig gleichwertig Vom mathematischen Standpunkt aber vorteilhafter, da auch der Stab S5 einen festen Fußpunkt auf der festen Plattform 2 aufweist und daher mathematisch leichter zu beschreiben ist als bei einem beweglichen Fußpunkt gemäß der Fig. 3. Dabei wird der Befestigungspunkt des Stabs S5 an der festen Plattform 2 nicht wie bei Fig. 3 auf den Stab S4 verlegt, sondern als eigener Befestigungspunkt in die unmittelbar Nachbarschaft des Befestigungspunktes des Stabes S4. Damit bleiben alle mechanischen Vorteile gegenüber dem Stand der Technik gewahrt, auch die mathematische Darstellung der Bewegung bleibt vereinfacht und voll erhalten, die Bezeichnung dieses Pseudodoppelpunktes als P'2 trägt dem-Rechnung.

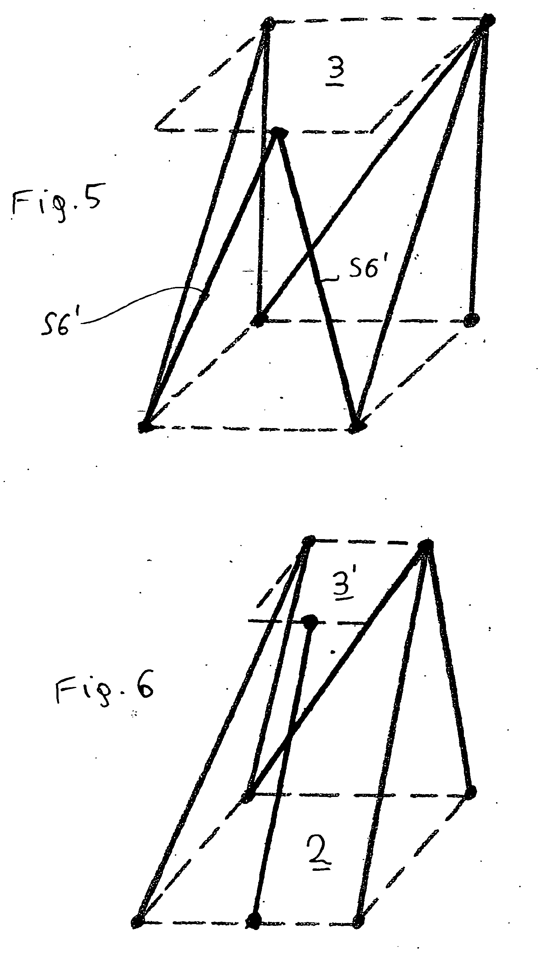

Eine Ausgestaltung, bei der die oben erwähnte Überbestimmung bzw. Redundanz des Systems verwendet wird, ist in Fig. 5 dargestellt. Damit kann im Falle des Versagens eines Teils der Struktur ein Zusammenbruch verhindert werden, was insbesondere in der Fördertechnik von eminenter Bedeutung ist, weiters erlaubt, ja verlangt diese Überbestimmung sogar, dass die bewegliche Plattform 3 nicht steifer ist, als es die Toleranzen der einzelnen kinematischen Elemente zulassen, ohne dass die gesamte Steifigkeit darunter leidet. Hier wird aus Gründen der Übersichtlichkeit wieder auf die ursprüngliche Darstellung mit Tripelpunkten und zweifachen Punkten zurückgegangen, ohne darauf beschränkt zu sein, denn selbstverständlich sind auch hier Pseudodoppelpunkte und Pseudotripelpunkte mit den genannten Vorteilen einsetzbar. Wesentlich ist, dass der Stab S6 ersetzt worden ist durch zwei Stäbe S6', deren Längenänderung so synchronisiert sein muss, dass sie gemeinsam den einen Freiheitsgrad des ursprünglichen S6 nachbilden.

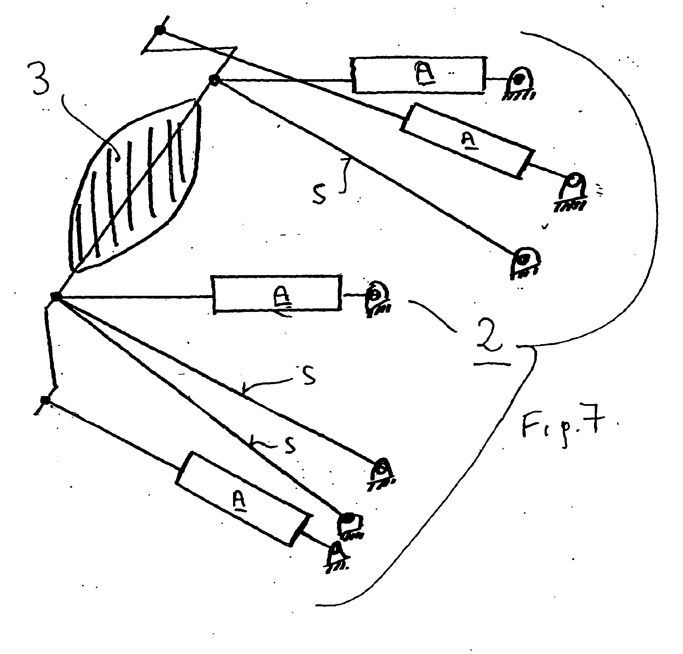

Die Fig. 6 zeigt eine ähnliche Situation wie die Fig. 1, nur dass die bewegliche Plattform 3` deutlich kleiner ausgebildet ist als die feste Plattform 2, wodurch die Lage der einzelnen Stäbe sich naturgemäß ebenfalls ändert. Selbstverständlich müssen die einzelnen Plattformen nicht viereckig und nicht einmal eben sein, wie aus Fig. 7 ersichtlich ist.

Die Fig. 7 zeigt in allgemeiner perspektivischer Darstellung eine Möglichkeit, durch eine Kombination längenveränderlicher Stäbe, angedeutet als hydraulische Zylinder-Kolben-Einheiten A mit Stäben konstanter Länge S, unter Heranziehung- der erfindungsgemäßen Prinzipien eine erfindungsgemäße Parallelkinematik zu schaffen, bei der die Berechnung der Bewegungsgleichungen gegenüber dem Stand der Technik deutlich reduziert ist. Darüber hinaus ist es bei dieser Ausbildung der Kinematik möglich, die bewegliche Plattform 3 um 360° und darüber gegenüber der festen Plattform 2 (Summe aller Fußpunkte) zu drehen, was üblicherweise nicht möglich ist.

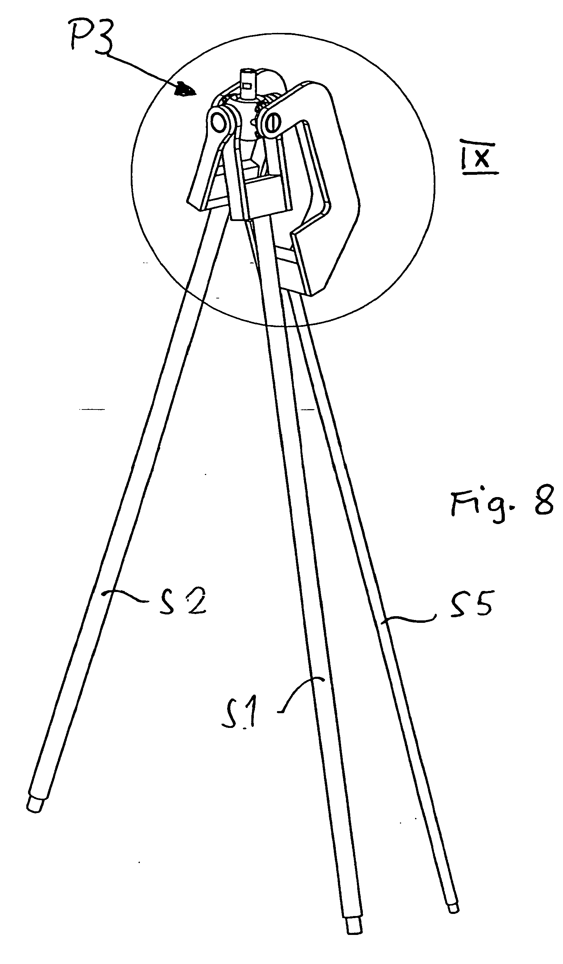

In Fig. 8 und 9 ist ein erfindungsgemäß ausgebildeter Tripelpunkt P3 zur näheren Erläuterung dieses erfindungswesentlichen Bauelementes in einer konstrucktiven Ausgestaltung dargestellt. Die drei in ihm zusammenlaufenden Stäbe S1, S2, S5, analog zur Fig. 1 ausgewählt, sind auf die folgende Weise, die aus Fig. 9 deutlicher zu entnehmen ist, miteinander gekoppelt:

Die Stäbe S1 und S2 die, wie oben erläutert, ein sogenanntes Zeigerpaar oder Krafteck mit der Zeigerachse A12 bilden, greifen, um diese Zeigerachse schwenkbar, zu beiden Seiten einer Hohlkugel 4 an. Der Stab S5 greift über einen Bügel 5 an der Kugel 4 an einer zur Achse A 12 normal angeordneten und sie schneidenden Achse A5 an. Der Schnittpunkt der Achsen A12 und A5 liegt im Mittelpunkt der Hohlkugel 4 und damit auch im Mittelpunkt des sphärischen Teils eines in der Hohlkugel 4 sphärisch drehbar gelagerten Zapfens 6, der mit der beweglichen Plattform 3 (nicht dargestellt) fest verbunden und damit ihr zuzurechnen ist.

Wie aus dieser Konstruktion ersichtlich ist, wird bei Änderung der Länge der Stäbe S1, S2 und S5 (oder bei Verschiebung von deren Fußpunkten [Fig. 8]) die räumliche Lage des Kugelmittelpunktes stets eindeutig definiert. Dabei ist der Bügel 5 um die Achse des Stabes S5 drehbar gelagert und die entsprechenden Bügel der Stäbe S1 und S2 sind um die Achsen dieser Stäbe drehbar gelagert (nur bei ganz speziellen Anordnungsfällen kann dies entfallen), um Verspannungen zu vermeiden.

Es ist leicht ersichtlich, dass die Ausbildung des Punktes P3 gemäß der Fig. 8 und 9 aufwendig ist und dabei doch den Nachteil aufweist, nur geringe Verschwenkungen um den Kugelmittelpunkt zuzulassen, ohne dass es zu Problemen mit aneinander schlagenden Bauteilen (Kollision) kommt.

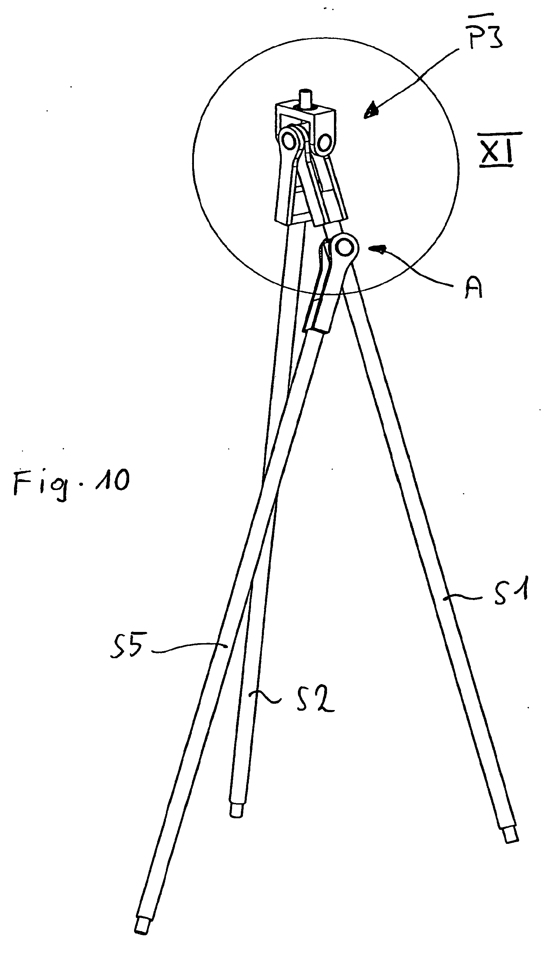

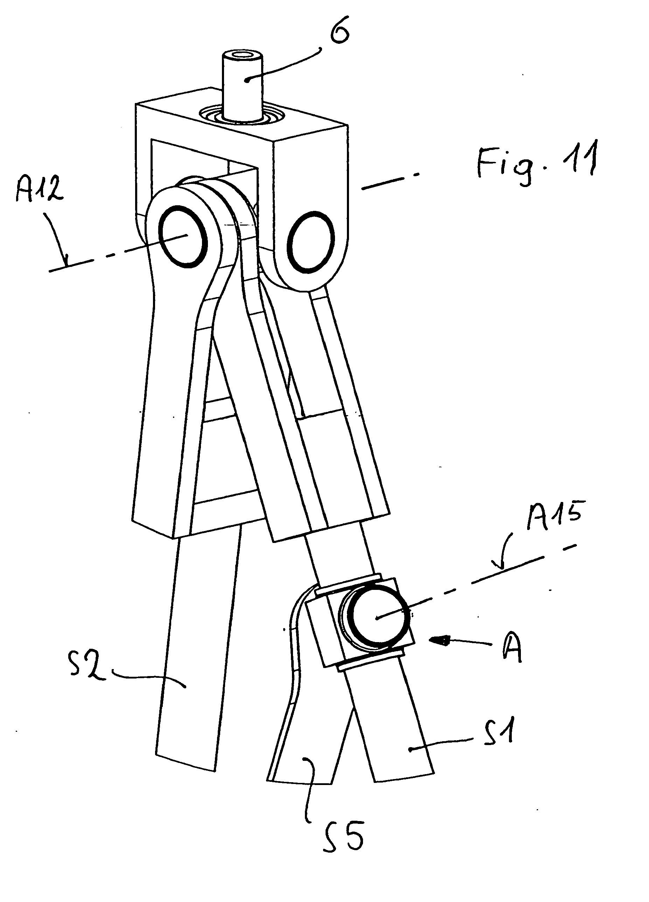

Die Fig. 10 und 11, die in ihren Ansichten im wesentlichen denen der Fig. 8 und 9 entsprechen, stellen nun eine erfindungsgemäße Lösung dieses Problems dar, die, wie bereits erwähnt, die Vorteile der Ausbildung von Tripelpunkten zur Gänze erhält, deren Nachteile aber vollständig vermeidet. Um dies zu erreichen, greift der Stab S5 nicht direkt am Tripelpunkt, sondern in seinem Bereich, in kleinem Abstand von ihm, an einem der beiden anderen am Tripelpunkt endenden Stäben, im dargestellten Beispiel am Stab S1 an. Wie bereits erwähnt, wird bevorzugt, dass dieser alternative Angriffspunkt A an demjenigen der beiden zur Verfügung stehenden Stäbe liegt, der mechanisch weniger belastet ist. Dadurch kann dessen Mebrbelastung durch die Induzierung eines Biegemomentes am Angriffspunkt A leichter abgefangen und beherrscht werden, als bei einem Angriffspunkt auf einem schon an sich hoch belasteten Stab.

Aus Fig. 11. gut ersichtlich ist der einfache Aufbau des nunmehr in seinem Kern einen Doppelpunkt darstellenden Pseudo-Tripelpunktes, statt der komplexen und teuren sphärischen Geometrie kann eine einfache kardanische Aufhängung für den Zapfen 6, der bereits Teil der beweglichen Plattform 3 (nicht dargestellt) ist, gewählt werden.

Die Erfindung sieht nun vor, dass der größte Abstand zwischen den Angriffspunkten der den Pseudo-Tripelpunkt bildenden Verbindungselemente, das ist im dargestellten Beispiel der Abstand zwischen der Achse A12 und der Achse A15 entlang der durch S1 gegebenen Richtung, kürzer ist als 20%b , bevorzugt kürzer als 10 % der kürzesten Länge von S1, S2 und S5. Durch diese Maßnahme werden die erfindungsgemäßen Erfolge erreicht.

Die bisher beschriebenen Ausführungsformen und Varianten der Erfindung sind nun für alle ihre Anwendungen einsetzbar, aber selbstverständlich ist die Erfindung nicht darauf beschränkt. Es kann die Ausbildung eines Angriffspunktes A anders ausgestaltet sein als in den Fig. 10 und 11 dargestellt, es muss bei einem Doppelpunkt, unabhängig davon, ob es sich um einen Pseudo-Tripelpunkt oder um einen echten Doppelpunkt handelt, keine kardanische Aufhängung verwendet werden, sondern es kann auch hier eine sphärische Ausbildung vorgesehen sein, bei der dann nur die Anlenkung an die beiden angreifenden Stäbe einfacher als in Fig. 9 dargestellt, ausfällt, etc..

Der Ort, an dem die Ausbildung eines Pseudotripelpunktes erfolgt, liegt im Sinne der Erfindung so knapp an der betrachteten. Plattform wie es die Konstruktion der Anlenkung erlaubt. Damit werden die in den durchlaufenden Stab eingebrachten Momente und die geometrischen Abweichung vom (idealen) Tripelpunkt klein gehalten. Ersteres ist wegen der Masseersparnis bedeutsam, Letzteres wegen der einfacheren mathematischen Auslegung der Vorrichtung, die dann bis zum Betrieb als mit (idealen) Tripelpunkten versehen konzipiert werden kann und nur für den realen Betrieb mit den adaptierten Bewegungsgleichungen gerechnet werden muss. Als eine Art Faustregel kann angesehen werden, dass die Anlenkung innerhalb von 20%, bevorzugt innerhalb von 10% der Länge des betrachteten Stabes erfolgen soll Bei mehreren Angriffspunkten -an der beweglichen Plattform kann von 20 %, bevorzugt 10 % der Länge des kürzesten Stabes in seiner kürzesten Position ausgegangen werden.

Selbstverständlich sind auch hier Ausnahmen möglich, besonders wenn nur geringe Massen und kleine Kräfte auftreten und hohe Geschwindigkeiten bzw. Beschleunigungen der beweglichen Plattform angestrebt werden. Dann kann durch einen in größerem Abstand von der Plattform angelenkten Aktuator eine Hebelwirkung erzielt werden.

Einen wesentlichen Aspekt der Erfindung, der bei allen folgenden Anwendungsbeispielen erkennbar ist, stellt es dar, dass vom bisher bei Parallelkinematiken (ausgenommen rein rotatorische) üblichen Anordnungsprinzip mit Zentralachse abgegangen wird. Technische Anwendungen sind üblicherweise so aufgebaut, dass Bewegungen in zueinander orthogonalisierten Komponenten verlaufen, wobei fast immer eine Richtung oder zumindest eine Ebene besteht, in der die Hauptbewegung und/oder Hauptbelastung erfolgt. Durch Berücksichtigung dieser Vorgabe macht es die Erfindung möglich, die meisten Verbindungselemente so symmetrisch anzuordnen, dass sie die dabei auftretenden Kräfte bestmöglich übertragen und dass die Hauptbewegung besonders bevorzugt bewirkt und gesteuert wird. Auch die Berechnung der Bewegungsabläufe kann dadurch nochmals vereinfacht und damit beschleunigt werden. Für die Stabilisierung in Richtungen normal zur Symmetrieebene reicht dann zumeist ein einzelner, daher nicht symmetrisch ausgebildeter Stab, Aktuator oder Zugelement.

### Anwendung der Erfindung auf Hubtische:

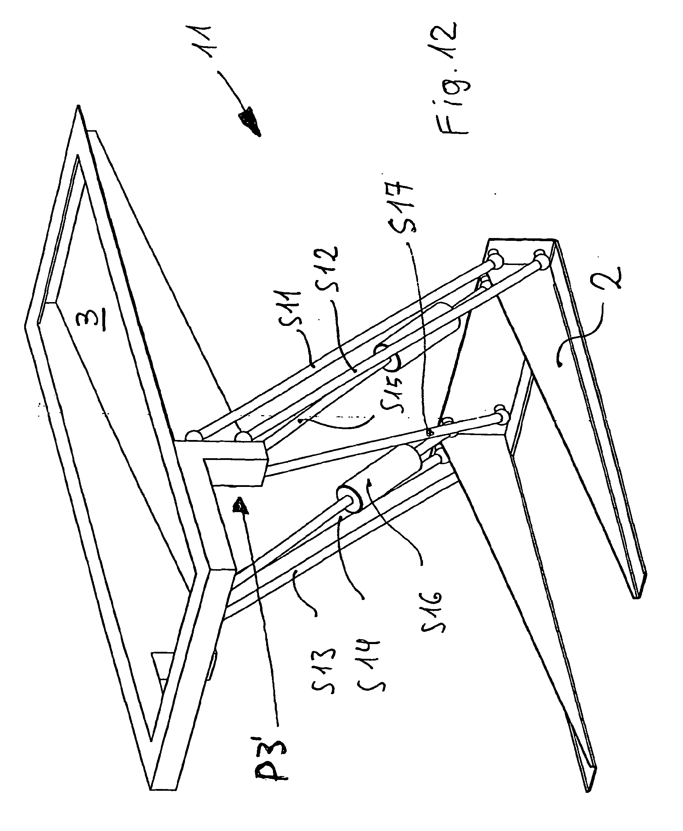

Die Fig. 12 stellt einen erfindungsgemäß ausgebildeten Hubtisch dar, der auf einer Parallelogrammführung beruht. Wie aus Fig. 12, die eine perspektivische Ansicht des in seiner Gesamtheit mit 11 bezeichneten Hubtisches darstellt, hervorgeht, ist eine Grundplattform 2 (es werden in der Beschreibung zur leichteren Vergleichbarkeit der Figuren einander kinematisch entsprechende Teile stets mit dem gleichen Bezugszeichen versehen) und einer beweglichen Plattform 3 samt dem diese beiden Plattformen verbindenden Stabwerk dargestellt. Dabei sind zwei Parallelogramme, einerseits durch die Stäbe S11 und S 12, anderseits durch die Stäbe S13 und S14 ausgebildet. Der Begriff Parallelogramm wird hier in einem allgemeinen Sinn verwendet, denn streng gekommen liegen diese Stäbe nur dann parallel zueinander, wenn die bewegliche Plattform 3 eine solche Position einnimmt, dass ihre Längsmittelebene und die Längsmittelebene der festen Plattform 2 zusammenfallen.

Der Antrieb für die bewegliche Plattform 3, somit der Hubantrieb, wird durch zwei in ihrer Länge veränderliche Stäbe S 15 und S 16 (Aktuatoren) gebildet. Diese Stäbe greifen auf der festen Plattform 2 in einer Höhe an, die im wesentlichen der Höhe des entsprechenden Angriffspunktes der Stäbe S11 und S14 entspricht, an der beweglichen Plattform 3 aber in einer Höhe, die den dortigen Angriffspunkte der Stäbe S12, S13 entspricht. Auf diese Weise werden sogenannte Kraftecke gebildet, die in der Hauptbewegungsrichtung des Hubtisches 11 den Zeigerpaaren der Erfindung entsprechen.

Die Querkräfte werden über einen schräg verlaufenden Stab S 17 aufgenommen, der mit einem Anlenkpunkt auf der beweglichen Plattform 3 im Bereich der Anlenkpunkte des Zeigerpaares liegt und so einen Pseudo-Tripelpunkt P3' bildet.

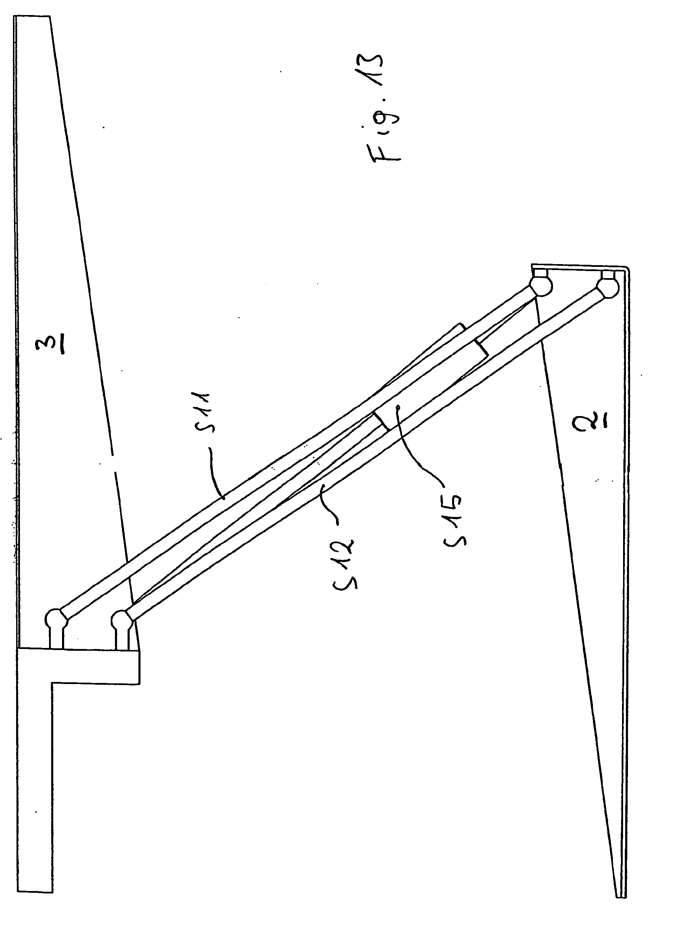

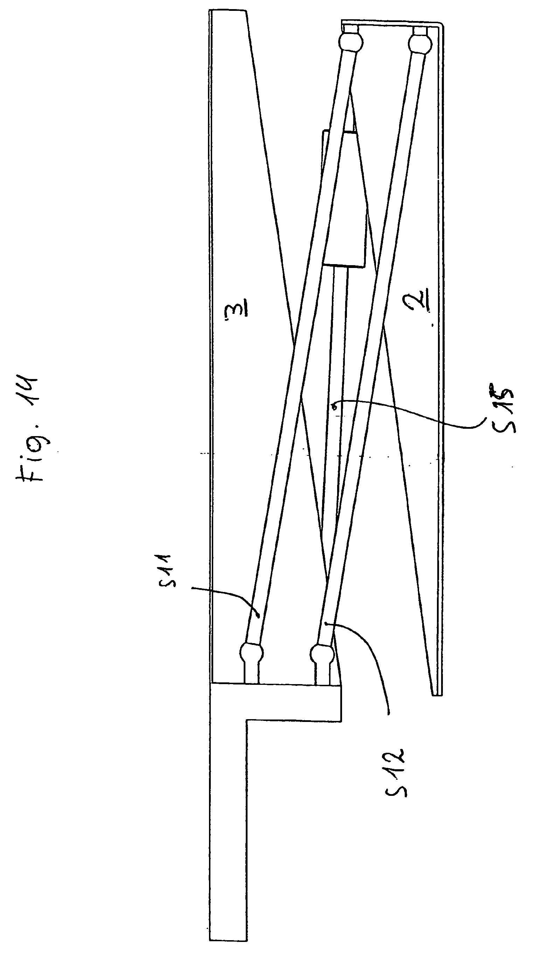

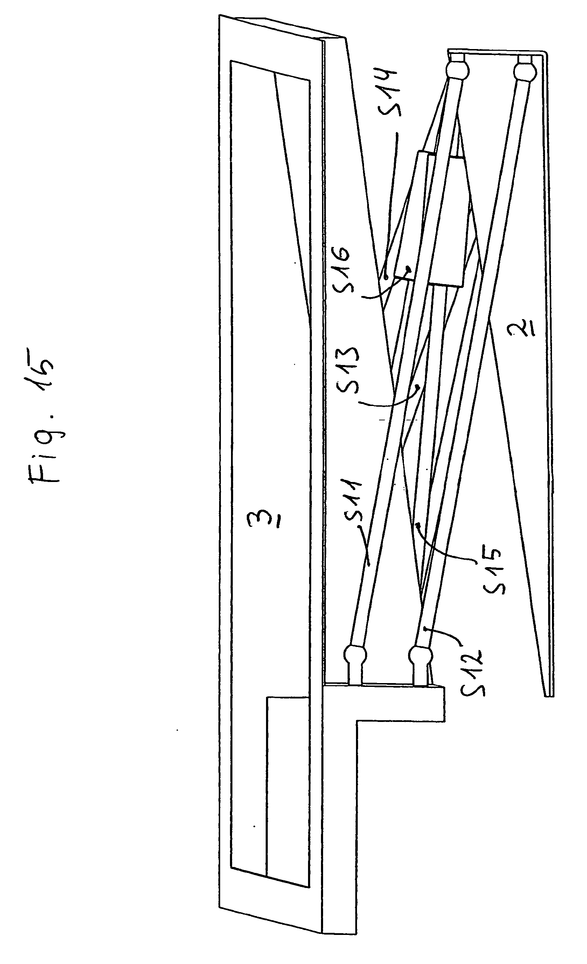

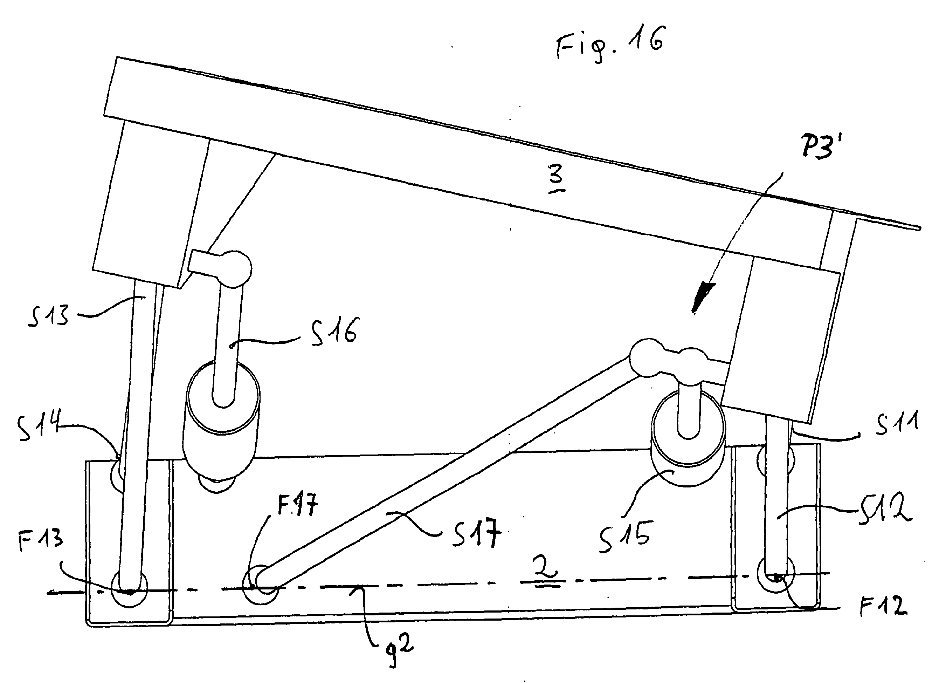

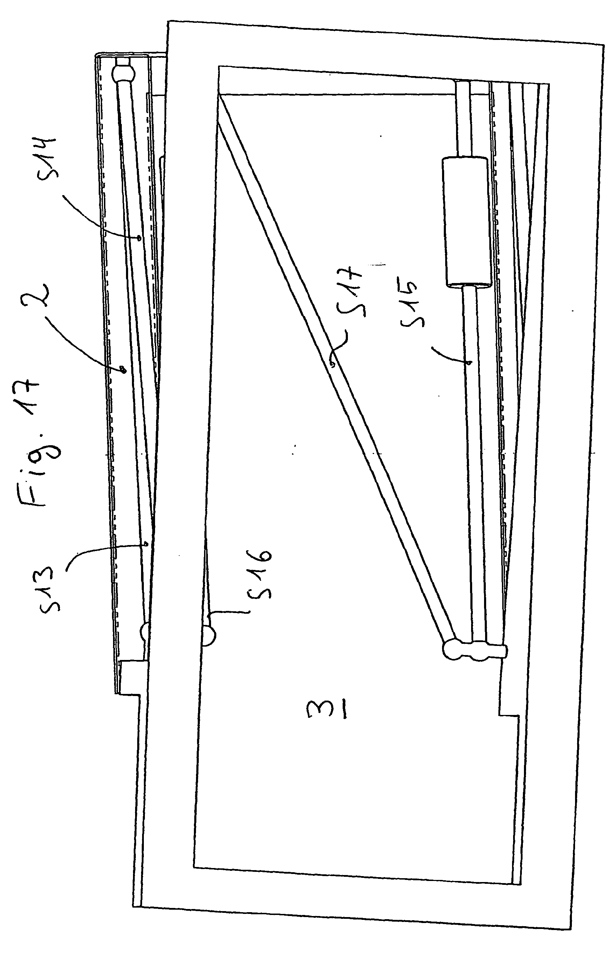

Die Fig. 13 und 14 zeigen in einer Seitenansicht die Situation bei unterschiedlicher Höhenlage der beweglichen Plattform 3, die Fig. 15-17 die Möglichkeit des Schrägstellens der beweglichen Plattform 3 bezüglich der festen Plattform 2 in einer Seitenansicht, einer Stirnansicht und einer Draufsicht. Diese Möglichkeit zur Schrägstellung der beweglichen Plattform, die ja in der praktischen Ausführung dem Hubtisch entspricht, kann, beispielsweise beim Stückguttransport, praktisch sein. Durch die Verdoppelung der einzelnen Elemente ist bei Gleichlauf der Antriebe ein paralleles Heben der beweglichen Plattform gewährleistet. Die bewegliche Plattform bewegt sich gegenüber der festen Plattform nicht wie bei klassischen Hubtischen vertikal nach oben, sondern führt eine Kreisbogenbewegung aus, was in kaum einem Fall nachteilig und in vielen Fällen vorteilhaft ist. Durch die Art der Bewegung und dies Anordnung der Antriebe an den Stäben S15 und S16 erreicht man einen unerwartet gleichmäßigen Kräfteverlauf über die Hubhöhe, der um nicht einmal 10% vom Mittelwert abweicht. Im Vergleich dazu sei darauf hingewiesen, dass im Stand der Technik beim Abheben aus der unteren Endlage Kräfte auftreten, die bis zum Doppelten des Mittelwertes reichen.

Wie aus der Zeichnung unmittelbar ersichtlich ist, ergibt sich durch die Möglichkeit, einzelne der in ihrer Länge als konstant angegebenen Stäbe (passive Stäbe) ebenfalls längenverstellbar auszubilden, eine leicht mögliche Anpassung an Notwendigkeiten wie zusätzliches Verdrehen um eine Achse etc..

Der schräg verlaufende Stab S 17 kann in der dargestellten Variante, bei der sein Anlenkpunkt auf der festen Plattform 2 (Fußpunkt F17) auf der Geraden g2 liegt, die durch die Lager F12 und F13 der inaktiven Stäbe S 12 und S13 geht und solange weder seine Länge noch sein Fußpunkt (gleichbedeutend) geändert werden, als inaktiv angesehen werden und tritt im mathematischen Modell nicht auf

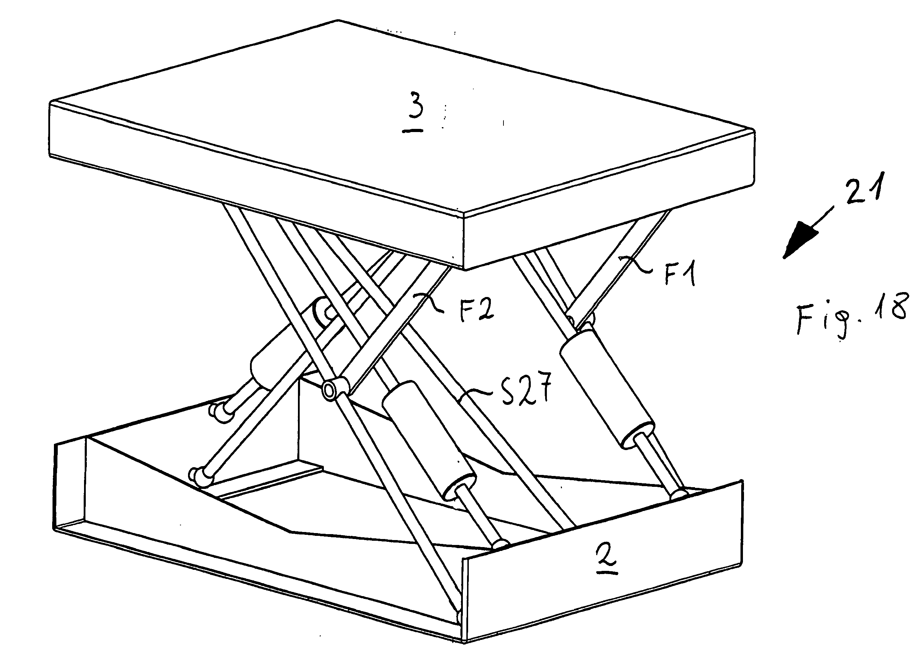

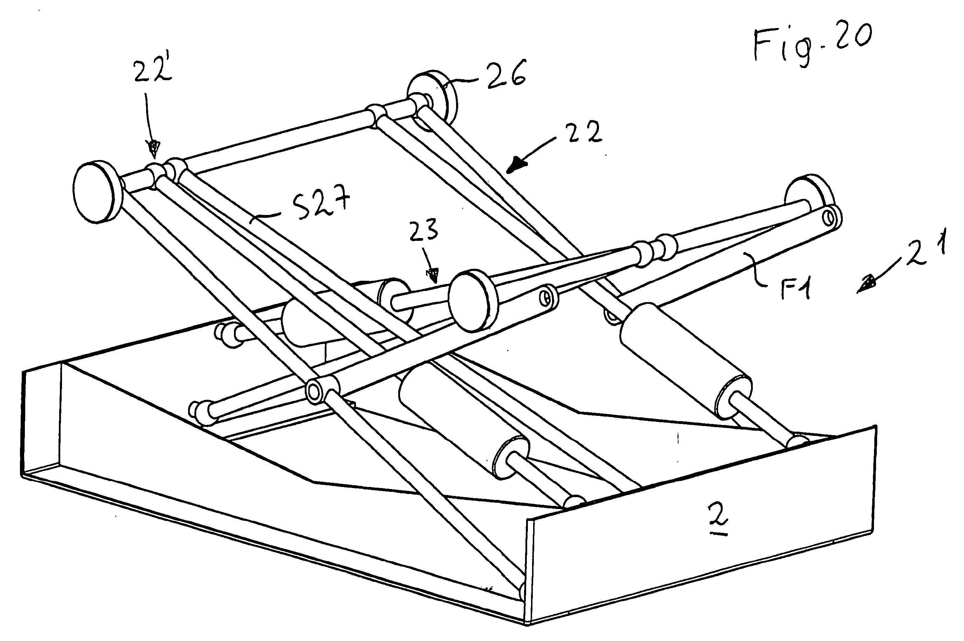

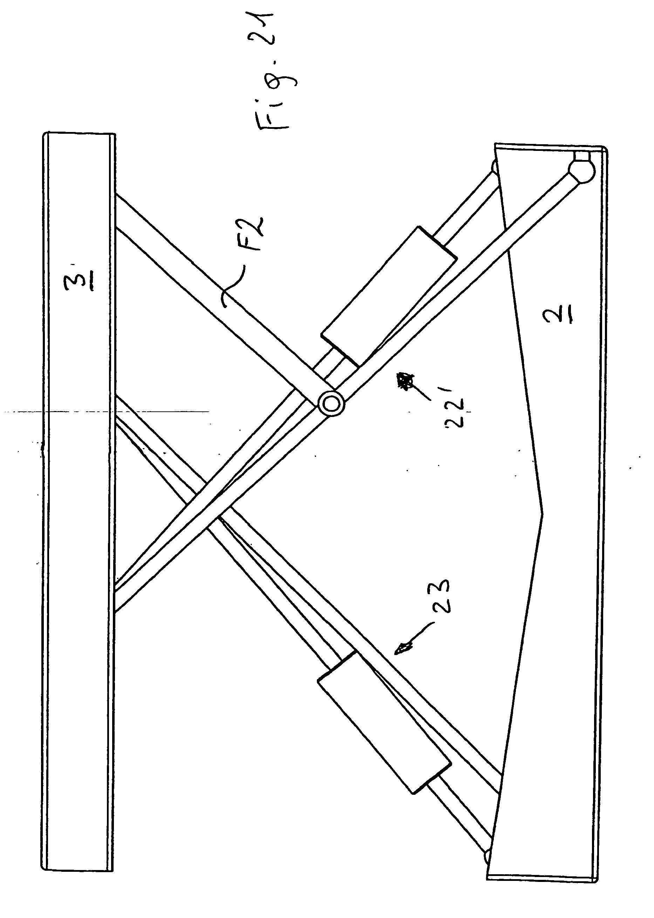

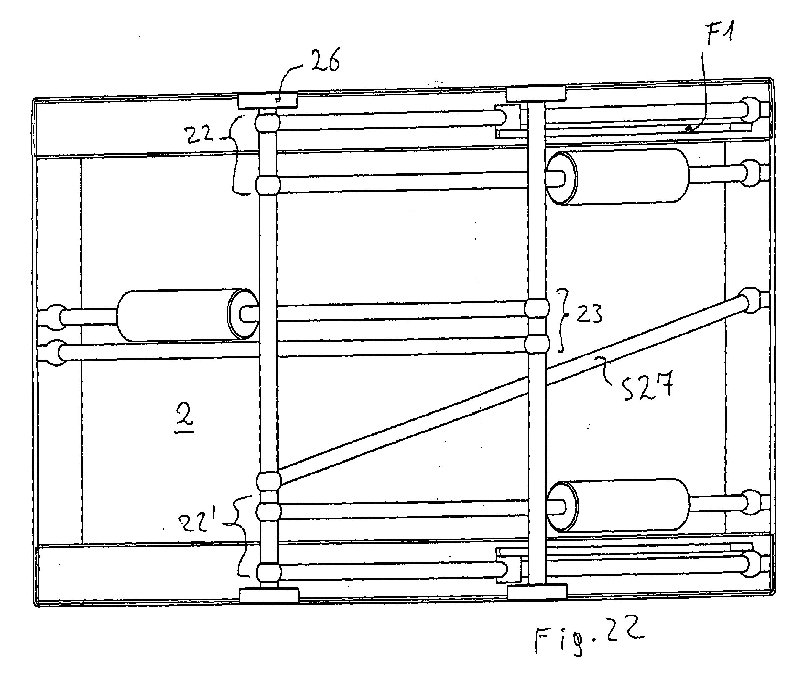

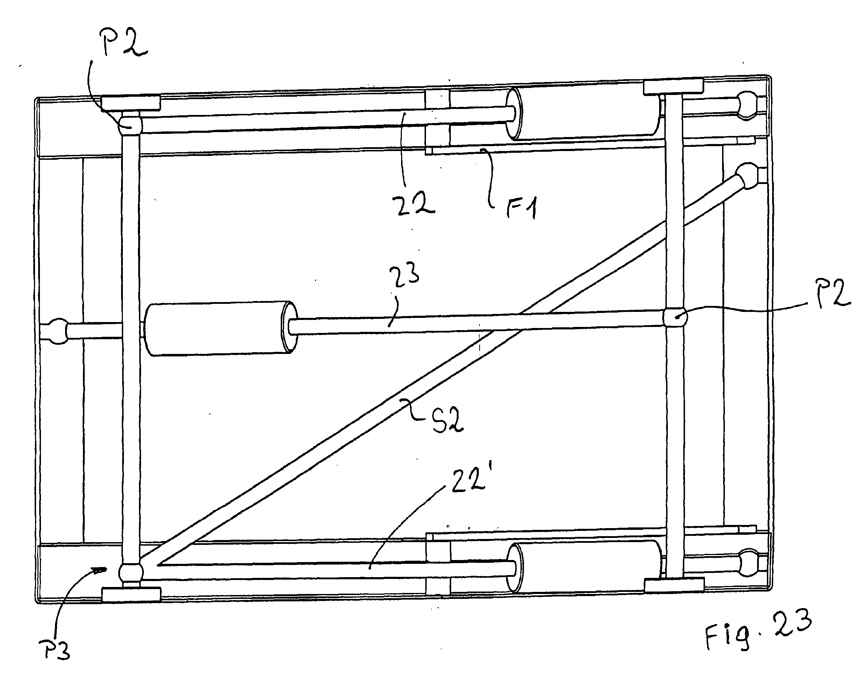

Die Fig. 18 bis 22 zeigen eine Variante 21 eines erfindungsgemäßen Hubtisches mit rein vertikaler-Bewegung der beiden Plattformen zueinander, die Fig. 23 eine Variante in einer Ansicht ähnlich der der Fig. 22. In Fig. 18 ist in perspektivischer Ansicht eine erfindungsgemäße Variante dargestellt, bei der, im Gegensatz zum Hubtisch gemäß den Fig. 12 bis 17, die bewegliche Plattform 3 sich lotrecht zur festen Plattform 2 bewegt. Die erfindungsgemäße Kinematik besteht hier aus drei Zeigerpaaren, wobei jeweils einer der beiden Stäbe mit veränderlicher Länge und somit als Aktuator ausgebildet ist, einem schräg verlaufenden Stab, der analog zum Stab S 17 ausgebildet ist, das dort über diesen Ausgeführte gilt auch hier, und um diese Analogie deutlich zu machen wurde er mit der Bezeichnung S27 versehen.

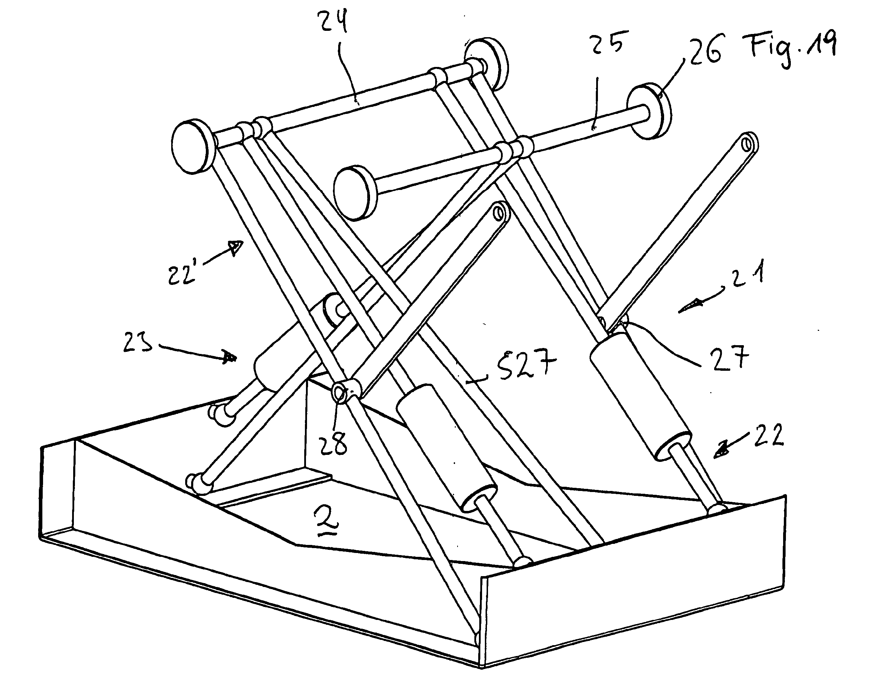

Die vertikale oder lotrechte Bewegung der beiden Plattformen zueinander wird durch einen Führungsmechanismus bestehend aus zwei Führungsarmen F1 und F2 erzielt. Im Detail, wie insbesondere aus einem Zusammenhalt der Fig. 18 und 19 ersichtlich, ist die Vorrichtung folgendermaßen aufgebaut:

Auf der festen Plattform 2 sind drei Zeigerpaare 22, 22' und 23 vorgesehen. Dabei sind die Zeigerpaare 22, 22' fluchtend und symmetrisch zur vertikalen Längssymmetrieebene zueinander angeordnet, und das Zeigerpaar 23 in dieser Längssymmetrieebene liegend und um die vertikale Quer-Symmetrieebene der Vorrichtung gespiegelt. Dabei liegen die Fußpunkte der Stäbe mit konstanter Länge jeweils unter den Fußpunkten der Aktuatoren und leicht seitlich zu ihnen versetzt.

Im Bereich der beweglichen Plattform 3 greifen die Stäbe der erfindungsgemäßen Kinematik an Querwellen 24, 25 an, wobei die Zeigerpaare 22, 22' an der Querwelle 24 angreifen, das Zeigerpaar 23 greift an der Querwelle 25 an. Diese Querwellen 24, 25 tragen an ihren äußeren Enden Rollen 26, die in entsprechenden Schienen (nicht dargestellt) der beweglichen Plattform 3 laufen.

Um nun die bewegliche Plattform 3 in ihrer Lage in der Richtung der Laufbahnen der Rollen 26 zu definieren, sind die Führungsarme F1, F2 an den Schenkeln konstanter Länge der Zeigerpaare 22, 22' gelenkig angelenkt, wobei die Länge von den Fußpunkten dieser Stäbe bis zu den Anlenkpunkten 27, 28 gleich ist der Länge der Führungsarme F1, F2, zwischen diesen Anlenkpunkten 27, 28 und ihren Schwenkpunkten an der beweglichen Plattform 3.

Die Variante der Fig. 23 unterscheidet sich von der Variante gemäß den Fig. 18 bis 22 nur dadurch, dass die Endpunkte der Aktuatoren und der passiven Stäbe tatsächlich "mathematisch genau" in Doppelpunkten P2 bzw. einem Tripelpunkt P3 enden. Die mechanische Ausgestaltung dieser Punkte wurde dabei nicht näher dargestellt, die optisch "ineinanderlaufenden" Stäbe dürfen nicht als Einheit oder gar starre Einheit verstanden werden! Bei den Zeigerpaaren 22, 22' wurden die in dieser Ansicht einander überdeckenden Stäbe zur Verdeutlichung leicht schräg angelenkt, dies ist problemlos möglich, ebenso aber auch die in vertikaler Richtung vollständig fluchtende Anordnung.

Zu diesen beiden Ausführungsformen ist noch festzuhalten, dass durch asynchronen Antrieb der Aktuatoren ein Kippen der-beweglichen Plattform 3 um beide Hauptachsen möglich ist und dass bei Krafteinleitungen parallel zum symmetrisch angeordneten beweglichen Rahmen 3 Momente in den passiven Stäben (das sind die weder längenveränderlichen noch am Fußpunkt bewegbaren Stäbe) induziert werden. Diese Stäbe sind daher entsprechend zu dimensionieren. Dieser Hubtisch kann beispielsweise durch Vorsehen eines schräg angeordneten Zeigerpaares so umgestaltet werden, dass er eine voll bewegliche obere Plattform aufweist, wobei natürlich die Rollen und ihre Bahnen entfallen und die-Verbindung zwischen-den-beiden Plattformen auf die bei der Parallelkinematik übliche Weise erfolgt.

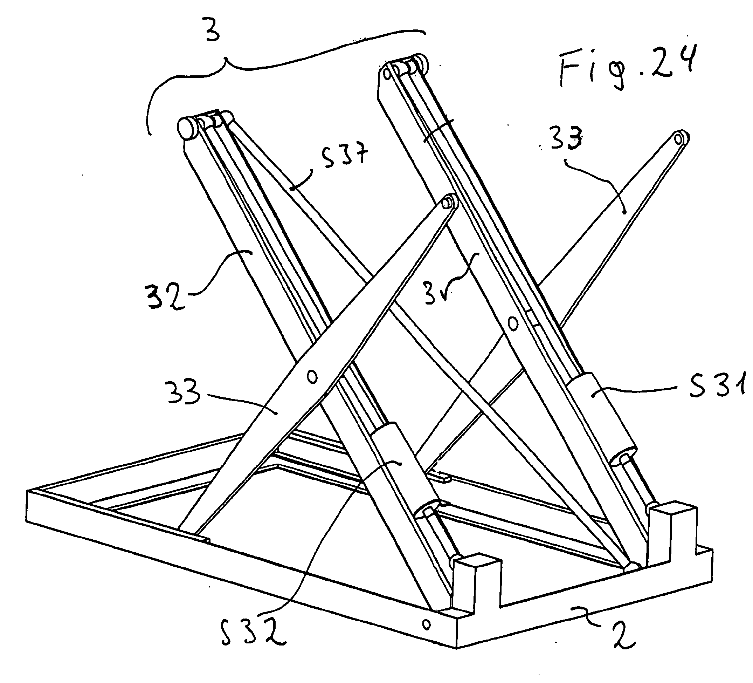

Die Fig. 24 zeigt eine in ihrer Optik "klassisch" erscheinende Ausführungsform 31 eines Hubtisches: Ein in seiner Gesamtheit mit 32 bezeichneter Scherenmechanismus besorgt die Führung der beweglichen Plattform 3, die aus Gründen der Übersichtlichkeit nicht selbst dargestellt ist, sondern nur durch die freien Enden des Scherenmechanismus 32, 33, der Aktuatoren S31 und S32 und des Querstabs S37 angedeutet ist.

Dabei bilden die jeweiligen Schenkel 31, 32 des Scherenmechanismus mit den zugehörigen Stäben S31 bzw. S32 ein Zeigerpaar und besorgen die Hauptbewegung der beiden Plattformen zueinander. Wie in den zuvor besprochenen Ausführungsbeispielen werden Querkräfte über einen schrägen Stab, hier S37, der auch an der beweglichen Plattform 3 den Tripelpunkt bildet, abgeleitet. Durch unterschiedliche Betätigung der beiden Aktuatoren S31 und S32 kann eine Schrägstellung der beweglichen Plattform 3 bezüglich der festen Plattform 2 erreicht werden.

### Anwendung der Erfindung auf Hängebahnen:

Hängebahnen sind mit Hubtischen kinematisch eng verwandt, wobei zufolge der Umkehr der üblichen Situation bei den Hubtischen und den meisten anderen Kinematiken die feste Plattform 2, der Hängerahmen, im Gravitationsfeld der Erde oberhalb der beweglichen Plattform 3, dem Bauteilträger, angeordnet ist, sodass üblicherweise Zug- und Druckkräfte in den einzelnen Bauteilen vertauscht sind. Da insbesondere bei üblichen Parallelkinematiken Stäbe als Aktuatoren und verschiedentlich in passiver Form zur Führung bzw. Unterstützung herangezogen werden, kann dies bei Hängebahnen auf elegante und Platz sparende Weise vielfach durch Seile geschehen. Es werden im Folgenden drei Varianten näher besprochen:

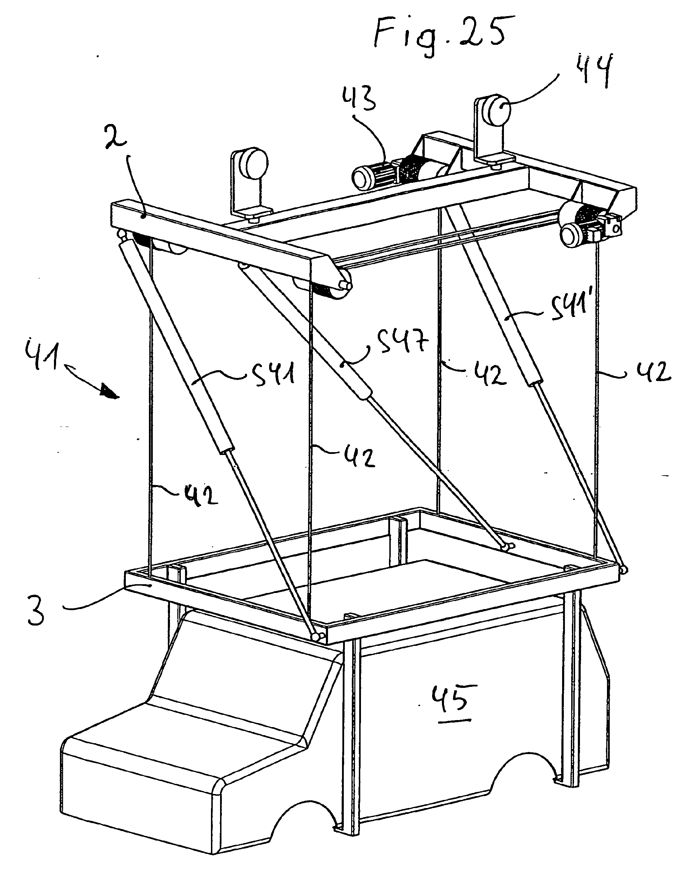

Die Fig. 25 bis 27 zeigen eine elegante, im wesentlichen auf Seilen äufbauende Ausgestaltung, bei der die konstante Vorgabe der Schwerkraft aus den Doppelpunkten ohne konstruktive Adaption Tripelpunkte macht. Bei der dargestellten Vörrichtung 41 hängt die feste Plattform 2 mittels Rollen 44 an einer nicht dargestellten Bahn und bewegt sich entlang dieser Bahn mittels eines nicht dargestellten Antriebs entweder autonom oder in Abhängigkeit eines allen Plattformen gemeinsamen Bewegungsmittels; trotz dieser außerhalb der Kinematik liegenden Bewegung bleibt sie die feste Pattform im Sinne der Erfindung.

Die feste Plattform 2 ist mit der beweglichen Plattform 3, die im dargestellten Ausführungsbeispiel eine Karosserie 45 trägt, mittels vier Seilen 42 verbunden. Diese Seile werden im dargestellten Ausführungsbeispiel einzeln durch Motoren 43 über Seilwinden angehoben bzw. abgesenkt. Die Lagestabilität wird durch drei Aktuatoren bewirkt, wobei die Aktuatoren S41 und S41' in der dargestellten, als "normal" zu bezeichnenden Position der beiden Plattformen 2, 3 zueinander parallel verlaufen und einem Queraktuator S47, der in diesem Fall in der Längsmittelebene der Vorrichtung verläuft, und in dieser Ebene auftretende Kräfte ableitet.

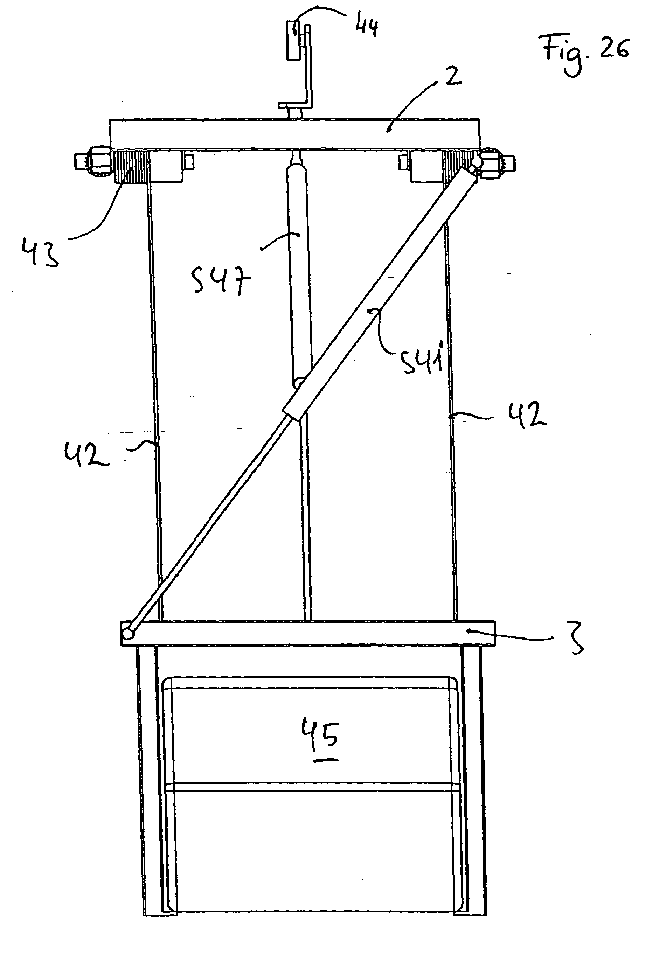

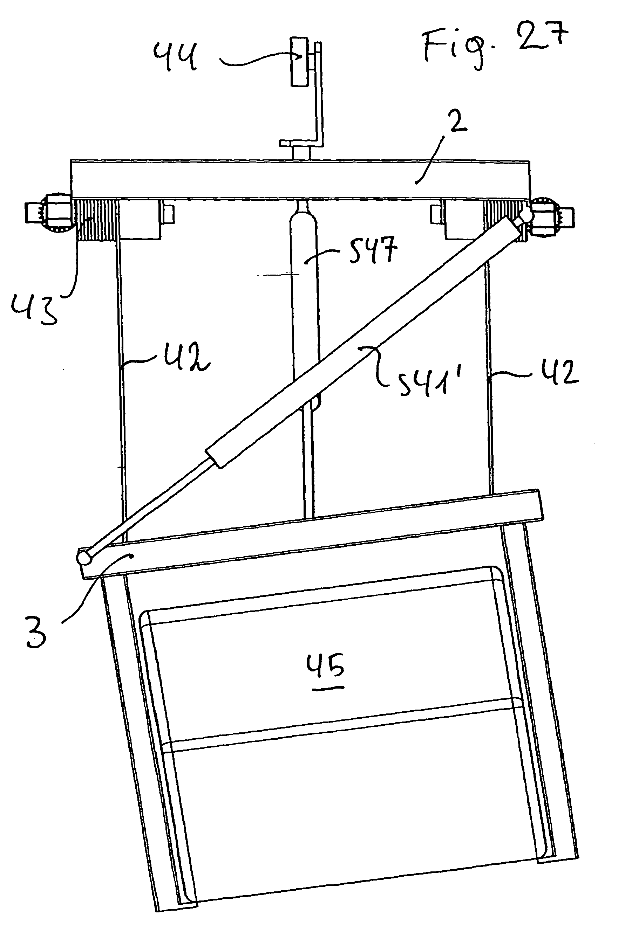

Die Fig. 26 zeigt eine Rückansicht der erfindungsgemäßen Vorrichtung und die Fig. 27 eine Ansicht ähnlich der der Fig. 26, allerdings mit verringertem Abstand zwischen der festen Plattform 2 und der beweglichen Plattform 3 und mit leicht schrägt gestellter Lage der beiden Plattformen zueinander. Dies kann durch entsprechendes Betätigen der Antriebe 43, somit unterschiedliche freie Seillängen 42 und passende Wahl der Länge des Aktuators S41 bzw. S41' erreicht werden. Auch dabei sind die weiter oben erwähnten Vereinfachungen der Berechnung der Bewegungsgleichungen gewährleistet und können genutzt werden.

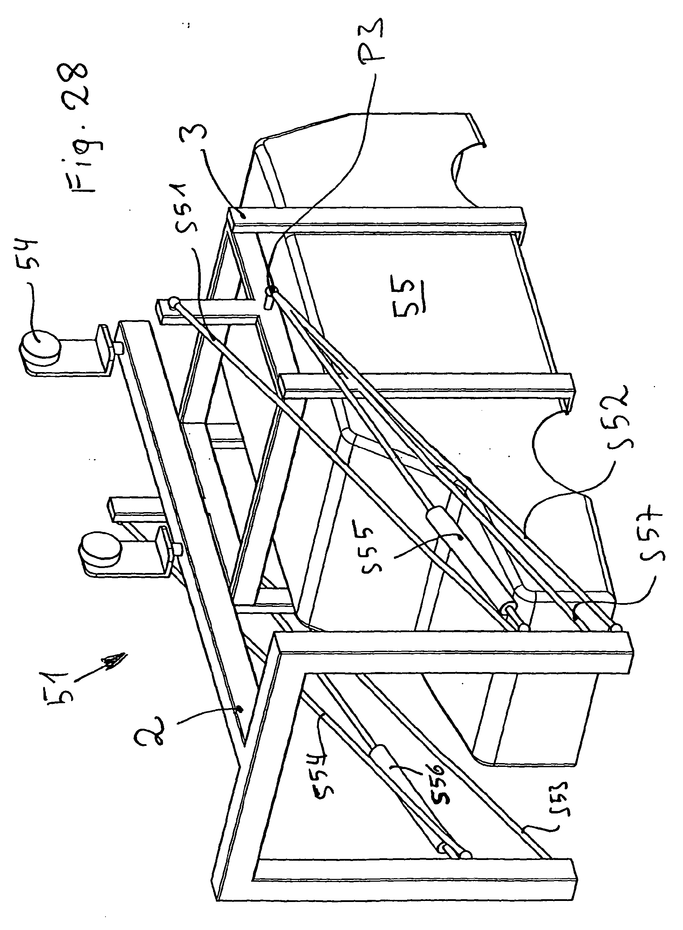

Die Fig. 28-31 zeigen eine Hängebahn, deren Kinematik im wesentlichen eine Umkehr der Kinematik des Hubtisches gemäß Fig. 12-16 darstellt. Die passiven Stäbe S51, S52 auf der einen (in der Figur vorderen) Seite und die passiven Stäbe S53, S54 auf der anderen (in der Figur hinteren) Seite bilden jeweils ein Parallelogramm, zumindest bei symmetrischer Lage der beiden Plattformen und unter Vemachlässigung unterschiedlicher Abstände der Kopfpunkte bzw. Fußpunkte zur Längsmittelebene.

Betätigt werden diese Parallelegramme durch zueinander bei symmetrischer Anordnung der Plattformen 2, 3 parallel verlaufende Aktuatoren S 55 und S56, die Querkräfte werden durch einen schräg verlaufenden passiven Stab S57 aufgenommen.

Augenfällig- ist, dass durch die Notwendigkeit, den Raum zwischen den Zeigerpaaren (Kraftecken) und den Parallelogrammen zur Aufnahme des zu transportierenden Gegenstands, im gezeigten Darstellungsfall eine Karosserie 55, freizulassen, der Querstab oder Diagonalstab S57 mit dem Zeigerpaar (S52, S55) dem er zugeordnet ist, einen sehr spitzen Winkel am Tripelpunkt P3 bildet und daher, um die auftretenden Querkräfte zuverlässig aufnehmen zu-können entsprechend massiv ausgebildet sein muss.

Wie schon bei Fig. 23 ausgeführt, ist auch bei der Darstellung dieser Variante stets zu beachten, dass die in der Zeichnung anscheinend "starr ineinander mündenden" Stäbe nur aus Gründen der Übersichtlichkeit so dargestellt sind und in Wirklichkeit Tripelpunkte, bzw. Pseudotripelpunkte oder Doppelpunkte bzw. Pseudodoppelpunkte bilden, wobei jeder der dort mündenden Stäbe für sich sphärisch bzw. mit der für seine Bewegungen notwendigen Freiheit angelenkt ist.

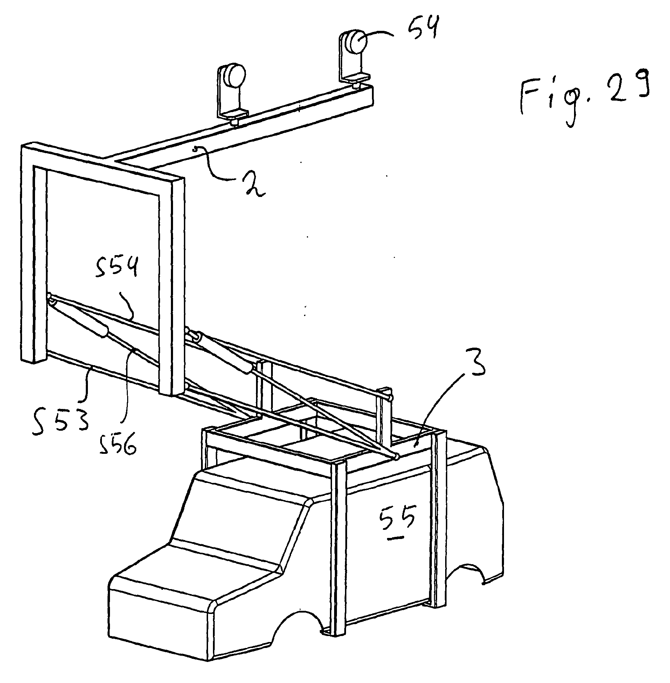

Die Bewegungsmöglichkeitender Vorrichtung 51 gehen aus den Fig. 29-31 weiter hervor, zu beachten ist hier speziell, dass durch die Möglichkeit des Verfahrens der festen Plattform 2 entlang der (nicht dargestellten) Bahn mittels der Tragrollen 54 ein vertikales Absenken bzw. Anheben der beweglichen Plattform 3 möglich ist, (gegenüber einem ortsfesten Koordinatensystem) da ja die Bezeichnung "feste Plattform" nur als Bestimmungsangabe innerhalb des Rahmens der Erfindung anzusehen ist aber offen lässt, ob und wie diese feste Plattform sich gegenüber einem Inertialsystem bewegt.

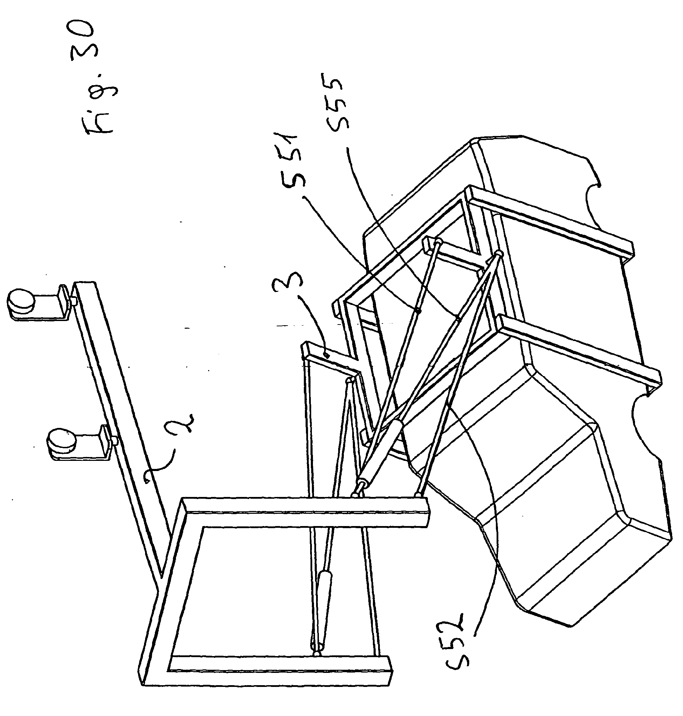

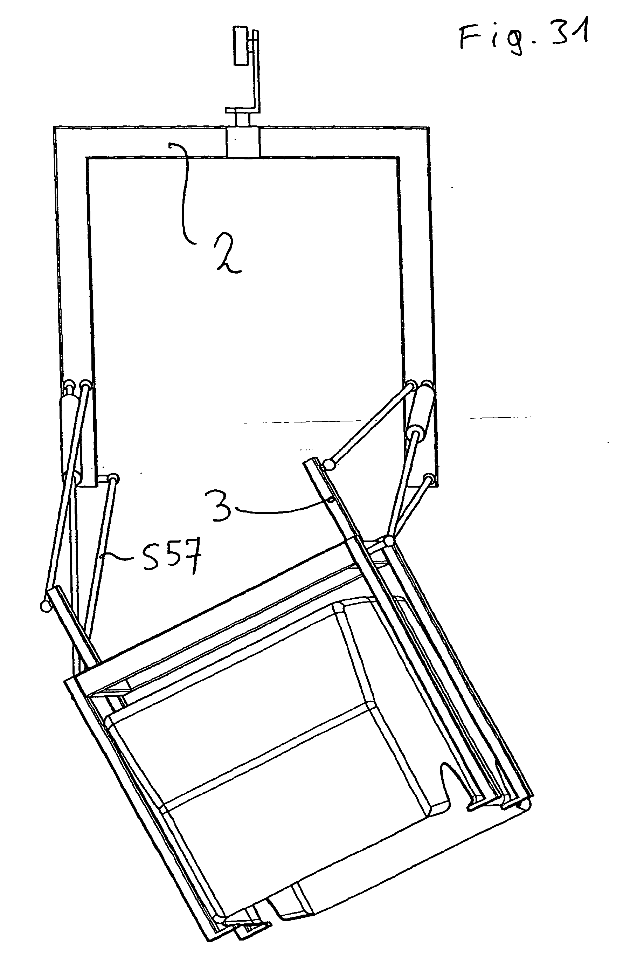

Die Fig. 30 und 31 zeigen die Möglichkeit des Schrägstellens des beweglichen Rahmens 3 gegenüber dem festen Rahmen 2, dabei soll insbesondere darauf verwiesen werden, dass hier in Fig. 30 (so wie in Fig. 29 auch) der schräg verlaufende Stab S57, der die Querkräfte aufnimmt, optisch abgedeckt ist, in Fig. 31 ist er aber gut zu erkennen.

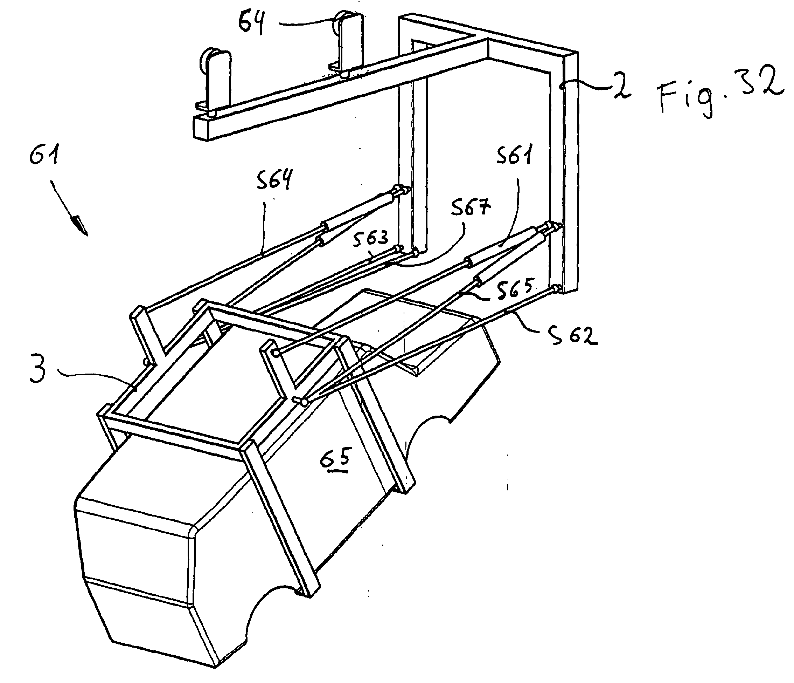

Die Fig. 32 schließlich zeigt eine Hängebahn mit drei Freiheitsgraden, durch Vergleich mit der Ansicht der Fig. 28 oder 30 erkennt man, dass durch den Ersatz zweier passiver Stäbe S51, S54, der Gelenkvierecke durch Aktuatoren S61, S64 eine weitere Drehung-gegenüber der dort dargestellten Vorrichtung möglich wird. Da ansonsten keine Änderung vorgenommen wurde, wird auf eine nähere Darlegung der Kinematik verzichtet.

Die Erfindung ist nicht auf die dargestellten -und erläuterten Ausführungsbeispiele begrenzt, sondern kann verschiedentlich abgewandelt und an die Aufgabengebiete angepaßt werden. Es soll besonders darauf hingewiesen werden, -dass die Bestimmung "parallel" für passive Stäbe, Aktuatoren, Seile etc. je nach den beschriebenen Ausführungsformen nicht für alle Lagen der Plattformen 2, 3 zueinander streng gelten muß, wie insbesondere die Fig. 15,-16; 27; 30, 31 zeigen. Gemeint ist damit immer die Lage der Elemente bei einer."Grundposition" der Plattformen zueinander, und auch dabei können die Anlenkpunkte der Stäbe, Aktuatoren, Seile, so zueinander versetzt sein, dass die Eigenschaft der "Parallelität" nur grosso modo erfüllt ist.

### Anwendung der Erfindung auf Hubroboter:

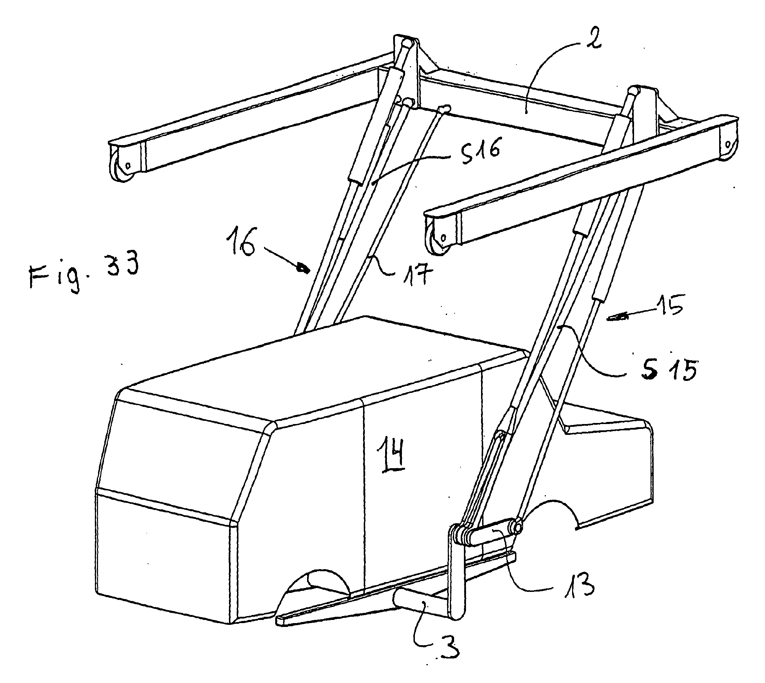

Die Fig. 33-38 zeigen einen fahrbaren Hubroboter, wie er beispielsweise beim Lackieren oder Verzinken oder bei sonstigen Oberflächenbehandlungen großformatiger und entsprechend massereicher Gegenstände, insbesondere von Fahrzeugkarosserien, verwendet wird. Derartige Vorrichtungen sind, wie bereits in der Beschreibungseinleitung erwähnt, beispielsweise aus der DE 101 00 377 A, der DE 101 03 837 A und der DE 102 57 108 A bekannt. Die dort geoffenbarten Vorrichtungen bedienen sich serieller Kinematik bzw. einer Scharniermechanik und weisen die eingangs genannten Nachteile auf.

Zu den Hubrobotern, die hier in der Folge besprochen und näher erläutert werden sollen, ist vorab noch Folgendes auszuführen:

Beim Eintauchen und beim Abtropfen komplexer Gebilde bestehen immer wieder Probleme, die dadurch bedingt sind, dass Luftblasen beim Eintauchvorgang mitgeschleppt werden, die bei der Bewegung mittels einer herkömmlicher Kinematik mehr oder weniger statisch an der Oberfläche des Gegenstandes anliegen und so zu Fehlern in der Beschichtung führen. Es ist, im Stand der Technik bekannt, den zu behandelnden Gegenstand während des Beschichtungsprozesses um eine Achse zu verschwenken, was aber nur in einem sehr kleinen Winkelbereich möglich ist, da es ansonsten zum Auftauchen bzw. Austauchen des Gegenstandes kommt. Man kann so zwar eine lückenlose Beschichtung erreichen, doch kann man nicht verhindern, dass diese Beschichtung im Bereich der Luftblasen stark unterschiedlich ist im Vergleich zu den Gebieten, in denen keine Luftblasen auftreten Genau genommen handelt es sich bei dem entstehenden Unterschied um eine Funktion der Einwirkzeit, der verwendeten - Stromstärke, der-Kippwinkel, der Größe der Luftblasen und, besonders komplex, der Form der Oberfläche in dem Bereich, in dem Luftblasen mitgeschleppt werden.

Gleichermaßen ist es für das möglichst vollständige Abtropfen der Gegenstände zwischen zwei aufeinander folgenden Tauchbecken wichtig, dass nirgendwo Flüssigkeit in Form von Lacken in Vertiefungen oder in Sacklöchern verbleibt. Dies ist nicht nur wegen der Qualität der Beschichtungen wichtig, sondern auch deshalb, weil durch das Mitschleppen der Chemikalien von einem Tauchbecken zum anderen unangenehme und oft für die Qualität der gesamten Beschichtung nachteilige Mischungen sowohl in den Tauchbecken als auch im Bereich der mitgeschleppten Flüssigkeit an der zu behandelnden Oberfläche entstehen, die darüber hinaus die Entsorgung der Bäder erschweren und so die Umwelt beeinträchtigen.

Diese Probleme kann man durch das Vorsehen einer zweiten Kippachse eliminieren oder zumindest stark verringern, doch war es mit der seriellen Kinematik gemäß dem Stand der Technik nicht auf vertretbare Weise möglich, eine zweite Kippachse vorzusehen.

Die Fig. 33-38 zeigen nun eine Ausführungsform einer erfindungsgemäßen parallelen Kinematik, die diese Ziele erreicht und somit die genannten Nachteile vermeidet:

Die Fig. 33 zeigt eine auf Rollen verfahrbare feste Plattform 2 (auf die Möglichkeit, dass auch die feste Plattform an sich verfahrbar ist, wurde weiter oben bereits ausführlich eingegangen) und eine mittels der erfindungsgemäßen Kinematik mit dieser festen Plattform 2 verbundene bewegliche Plattform 3, die als Objektträger dient und im gezeigten Ausführungsbeispiel mit einer Karosserie 14, die rein schematisch angedeutet ist, verbunden ist.

Die Verbindung zwischen der festen Plattform 2 und der beweglichen Plattform 3 erfolgt über zwei Gelenkvierecke 15, 16 und eine sogenannte Querstange 17. Den Gelenkvierecken 15,16, die jeweils aus Aktuatoren gebildet sind, ist eine diagonal verlaufende passive Stang S15, S16 zugeordnet, durch die das Gelenkviereck in zwei Dreiecke, sogenannte Zeigerpaare bzw. Kraftecke, zerlegt wird, mit der Maßgabe, dass jeder passive Stab S15, S 16 zwei Zeigerpaaren zugehörig ist.

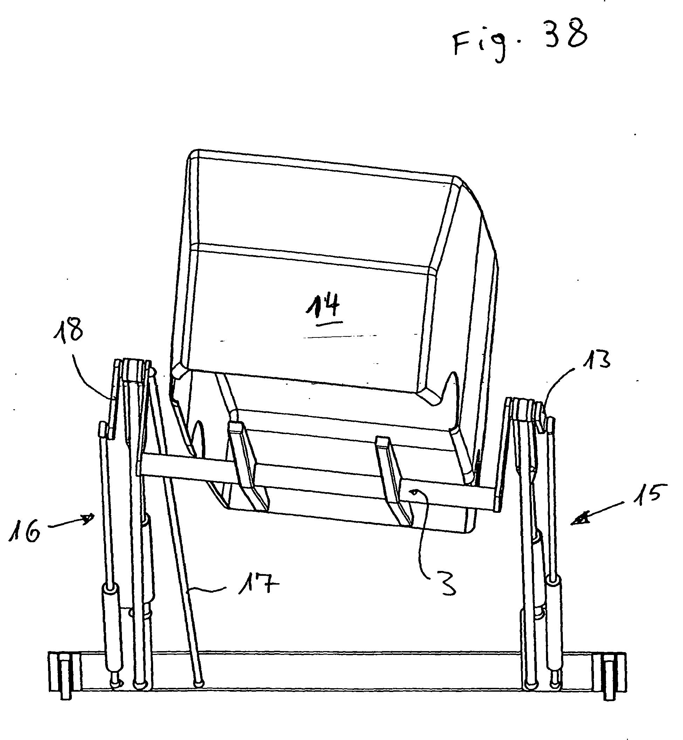

Die Gelenkvierecke müssen nicht im mathematischen Sinn in einer Ebene liegen, es können die Fußpunkte bzw. Kopfpunkte der beteiligten Stäbe auch knapp versetzt zueinander liegen, doch ist es wesentlich, dass im technischen Sinn und im Vergleich zur Größe der Zeigerpaare die "Dicke" eines solchen Gelenkviereckes klein ist gegenüber der Länge seiner Stäbe. Dies gilt nicht nur für dieses Ausführungsbeispiel sondern für die praktische Umsetzung der Erfindung ganz allgemein. Es ist weiters zu bedenken, dass bei Schrägstellungen zwischen den Plattformen 2, 3 (Fig. 38) von Stäben gebildete ,,Ebenen." im mathematischen Sinn überhaupt nicht mehr vorliegen.

Die bewegliche Plattform 3 hat im dargestellten Beispiel die Besonderheit, dass die Gelenkvierecke 15, 16 an Stellen mit unterschiedlicher Winkellage an der beweglichen Plattform 3 angreifen, ähnlich wie dies in allgemeiner Lage in Fig. 7 angedeutet ist. Dies bedeutet, dass der in Fig. 12 sichtbare Hebel 13 der beweglichen Plattform 3 zu seinem hinter der Karosserie befindlichen und daher nicht sichtbaren Pendant nicht parallel verläuft, sondern einen Winkel, bevorzugt von größer als 45° (in der Projektion) einschließt. Dadurch wird es möglich, die bewegliche Plattform 3 und damit die darauf befestigte Karosserie 14 "durchzudrehen", soferne nur die Enden der Karosserie 14 nicht am Querbalken der festen Plattform 2 oder der Wanne, der Decke der Halle, etc. anstoßen.

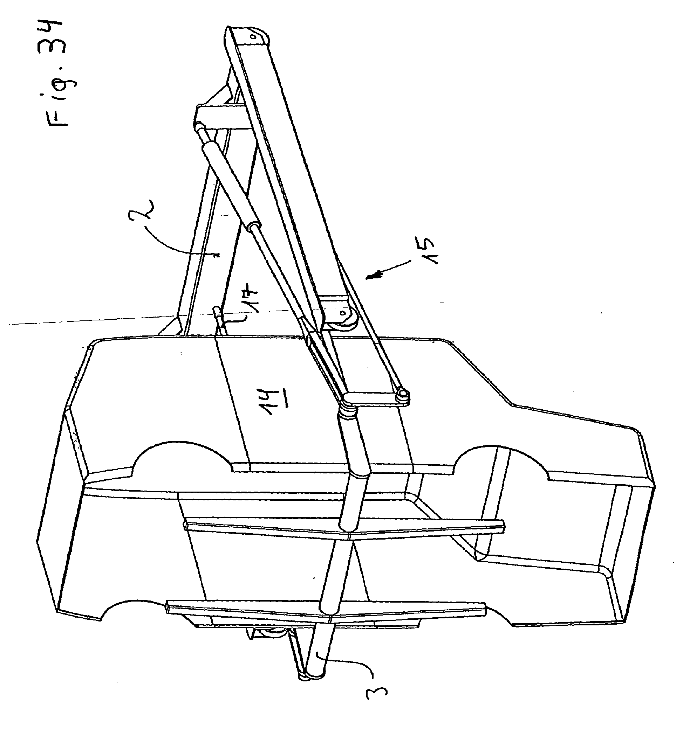

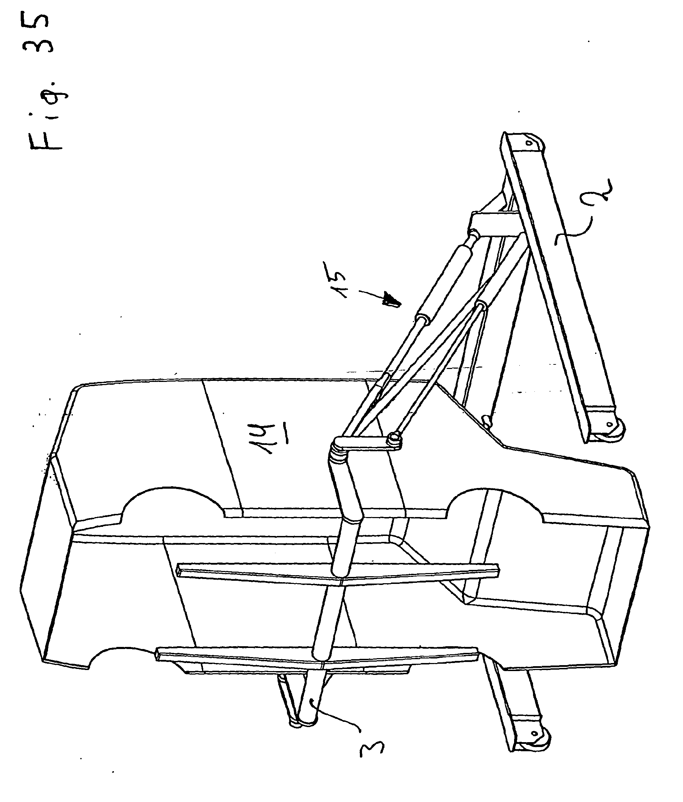

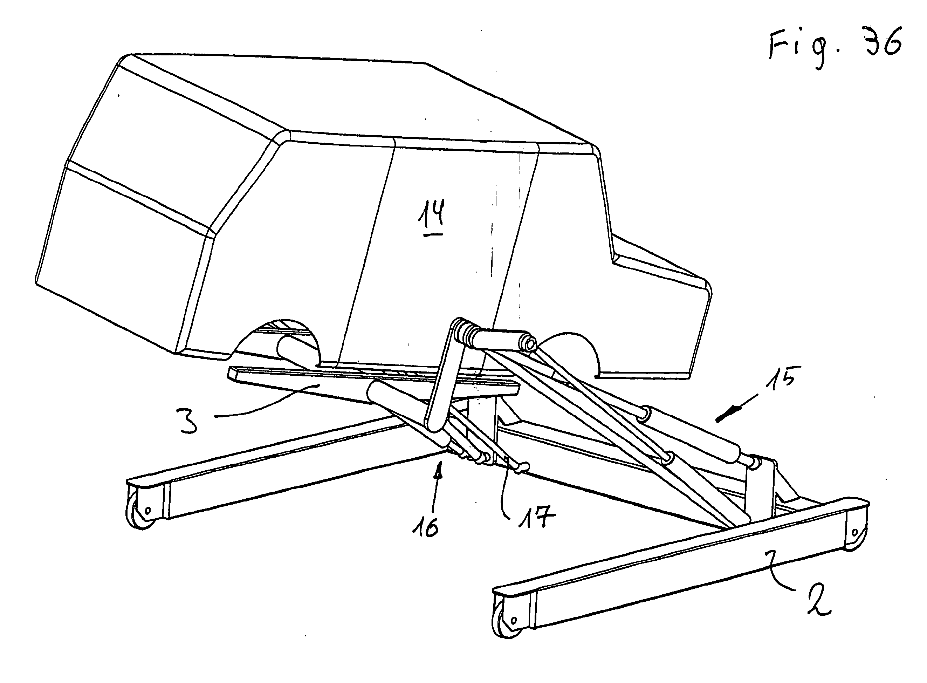

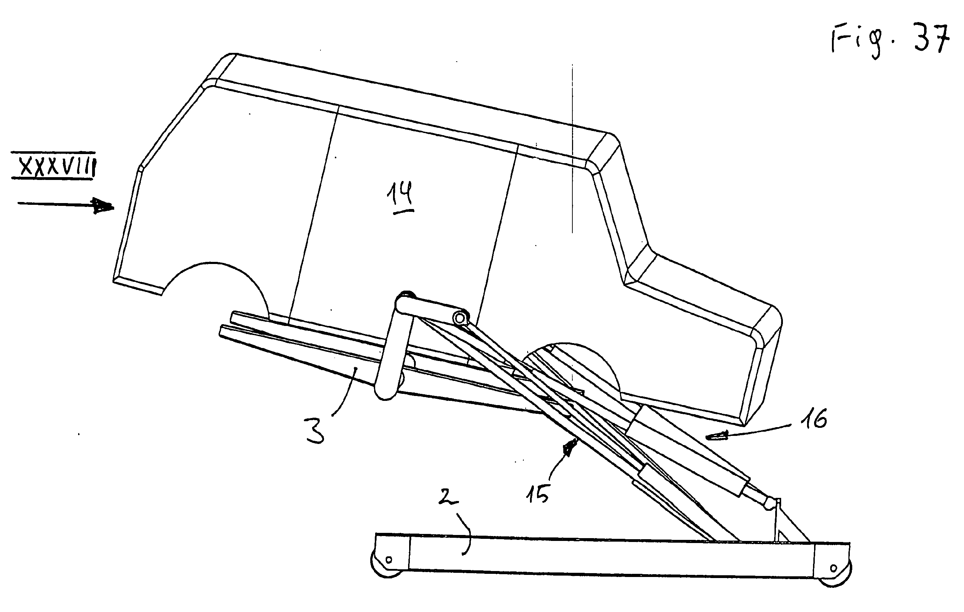

Die Fig. 34 zeigt die Situation mit angehobener und um ca. 90° um die Querachse gedrehter beweglicher Plattform 3, die Fig. 35 zeigt das weitere Anheben der Plattform 3 mit unveränderter Winkellage über die feste Plattform 2-hinaus, die Fig. 36 das Zurückdrehen der beweglichen Plattform 3 und die Fig. 37, in einer Seitenansicht bezüglich der festen Plattform 2 die Möglichkeit des Schrägstellens der beweglichen Plattform 3 und der darauf montierten Karosserie 14. In dieser Darstellung ist trotzt der versehiedenen Überschneidungen deutlich zu erkennen, dass die Gelenkvierecke 15, 16 nicht kongruent zueinander liegen, sondern leicht unterschiedliche Winkel zur Zeichenebene aufweisen, dadurch wird, weil ja die quer verlaufenden Elemente der beweglichen Plattform 3 nun schräg stehen, auch die Lage der Gelenkvierecke aus ihrer parallelen Lage zueinander leicht geändert. In der gesamten Beschreibung wird aber, wo es auf diese Änderungen nicht gerade ankommt, diese geringfügige Abweichung nicht gesondert beschrieben und erwähnt, um die Lesbarkeit nicht zu beeinträchtigen.

Die Fig. 38, die eine Ansicht der Position gemäß Fig. 37 etwa in Richtung des Pfeils XXXVIII zeigt, demonstriert deutlich die unterschiedliche Winkellage der Abschnitte 13, 18 der beweglichen Plattform 3 zueinander und deren Schrägstellung bezüglich der festen Plattform 2. Durch diese unterschiedliche Winkellage (im Raum gesehen "windschief") werden Totpunkte und Singularitäten vermieden und es ist möglich, die Plattform 3 um die plattformseitigen Enden der Winkel 13, 18 in beliebiger Richtung und beliebig oft durchzudrehen, solange nur der mit der Plattform 3 verbundene Gegenstand nicht an der Plattform 2 (oder den einzelnen Stäben) oder der Umgebung anschlägt. In dieser Darstellung ist auch gut ersichtlich, dass die Gelenkvierecke 15, 16 nicht im mathematischen Sinn in einer Ebene liegen, sondern dass die Fußpunkte der Stäbe auf der festen Plattform 2 zueinander versetzt angeordnet sind, und darüber hinaus durch die Schrägstellung der beweglichen Plattform 3 bezüglich der festen Plattform 3 überhaupt leicht windschief zueinander verlaufen. In der Beschreibung und den Ansprüchen ist dies aus Gründen der leichteren Lesbarkeit nicht explizit angeführt, muss jedoch so verstanden werden.

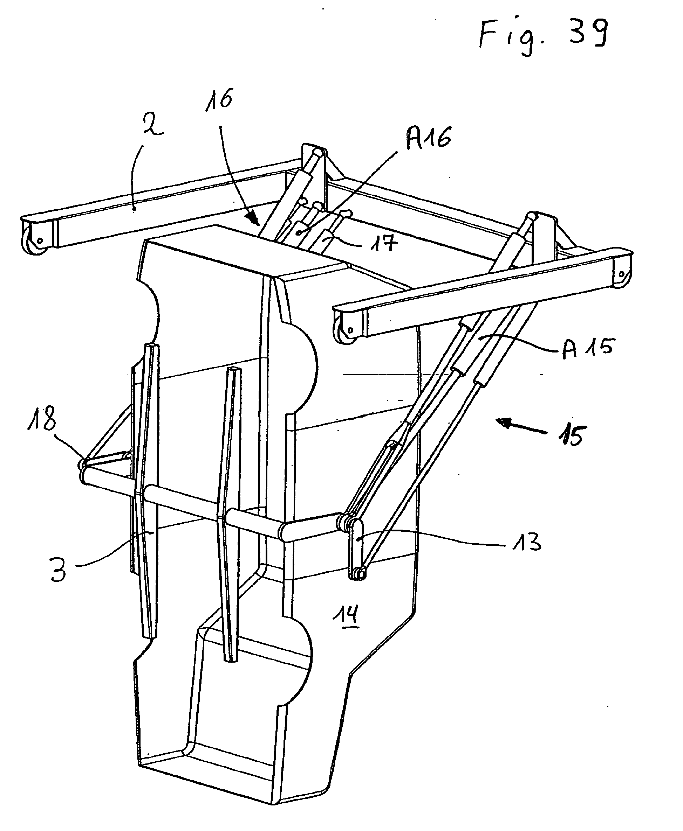

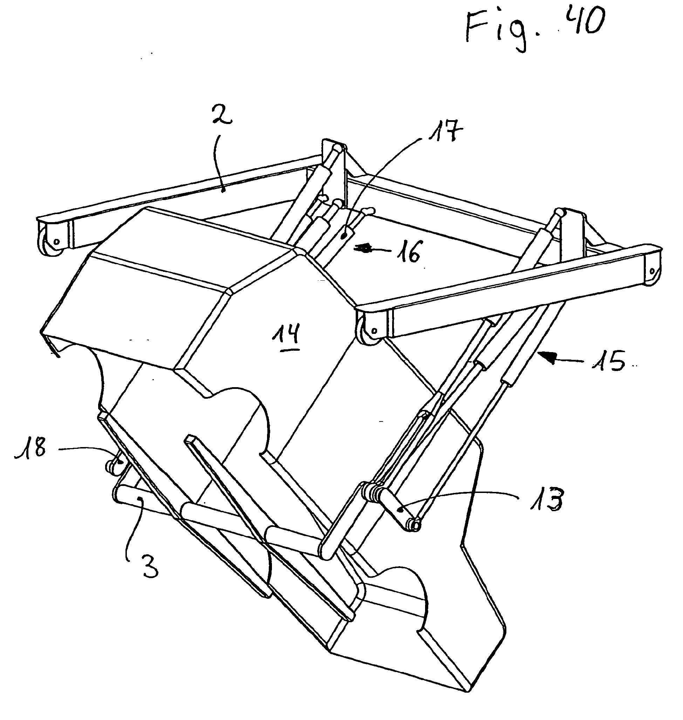

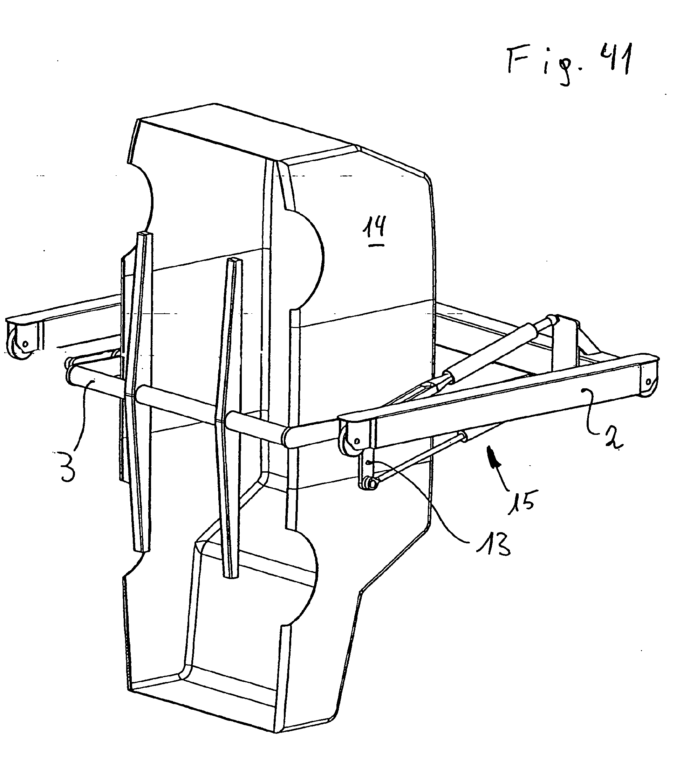

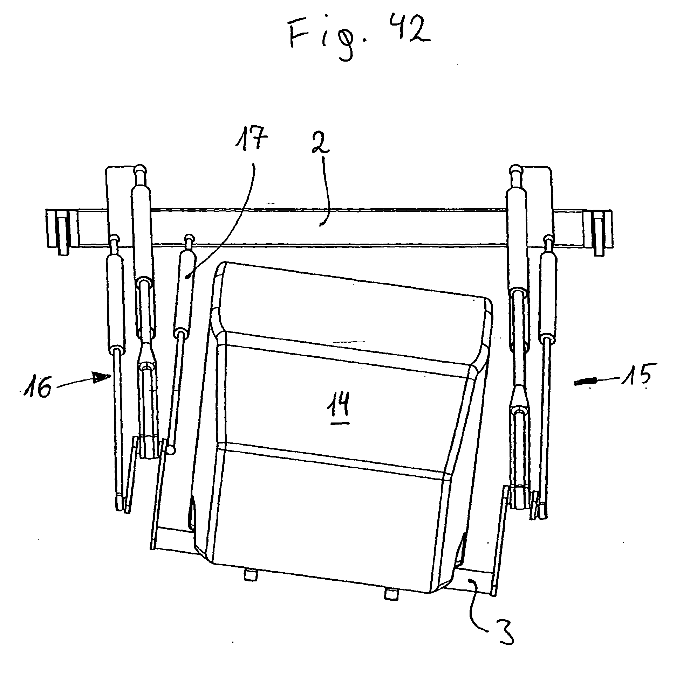

Die Fig. 39-42 zeigen eine weiter flexible Variante, bei der auch die im vorigen Beispiel innerhalb der Gelenkvierecke diagonal verlaufende, passive Stäbe als Aktuatoren A15 bzw. A16 ausgebildet sind und so weitere Freiheitsgrade, insgesamt nunmehr alle sechs, und, mit dem allerdings nicht zur Erfindung gehörenden Verfahren der festen Plattform 2 entlang ihrer Laufbahn, sogar sieben Freiheitsgrade zugänglich werden.

Der große Vorteil dieser Ausbildungsform, die auf den ersten Blick nicht viel zu bringen scheint, liegt darin, dass die Tauch-, Kipp- und Drehmanöver der beweglichen Plattform 3 und damit der Karosserie 14 wie aus der Abfolge der Figuren ersichtlich ist, auf wesentlich kürzerem Weg durchgeführt werden können als bei der ersten dargestellten Ausführungsform gemäß den Fig. 33-38, und dass dadurch die Gefahr der Kollision von Karosserien, die auf benachbarten festen Plattform 2 montiert sind, viel leichter ausgeschlossen werden können. Besonders wichtig ist aber, dass auf diese Weise in der Länge der Behandlungsstraβe erheblich Platz gespart werden kann, was bei den Beiz, Grundier und Lackiervorgängen sowie beim anschließenden Trocknen wegen der notwendigen Einhausungen und Abdichtungen gegenüber der Umgebung einen großen Vorteil mit sich bringt.

Natürlich ist die Erfindung nicht auf die dargestellten Ausführungsbeispiele beschränkt. So kann bei entsprechenden Randbedingungen die dargestellte Kinematik auch ortsfest verwendet werden, es ist dann die feste Plattform 2 tatsächlich eine feste oder drehbare Plattform. Eine derartige Ausbildung der Erfindung kann beispielsweise zum Umsetzen von Werkstücken am Ende einer Fertigungsstraße verwendet werden, es muss dazu nur die bewegliche Plattform 3 passende Greiforgane bzw. Halteorgane besitzen.

Die Schenkel 13, 18 der beweglichen Plattform 3 müssen nicht den dargestellten Winkel miteinander einschließen, die Füßpunkte der Stäbe auf der festen Plattform 2 müssen nicht die dargestellte fluchtende bzw. symmetrische Anordnung aufweisen, wesentlich ist, dass ein Tripelpunkt, sei er nun ein echter oder ein Pseudo-Tripelpunkt, ausgebildet ist, was bevorzugt auf der beweglichen Plattform 3 erfolgt, da dann die Gewinne bei der Rechenarbeit für die Bewegung der beweglichen Plattform gegenüber der festen Plattform im Vergleich zum Stand der Technik am Größten sind.

### Anwendung der Erfindung auf Knickarm-Kinematiken:

Die Erfindung wird im folgenden anhand einiger Anwendungsbeispiele betreffend verschiedene Formen von sogenannten Knickarmen, wie Sie bei Robotern in der industriellen Fertigung verwendet werden, geoffenbart. Derartige Konstruktionen werden, unter anderer Bezeichnung, auch im Kranbau, bei Hebezeugen, sogenannten Manipulatoren, etc., verwendet. Derartige Gebilde bestehen aus einer Basis, einem daran befestigten Oberarm, einem daran vorgesehenen Gelenk, oft Ellenbogen genannt, und einem Unterarm mit Werkzeugträger, Greifer, etc.. Es ist nun die Grundidee der Erfindung, zumindest eine, bevorzugt beide der Untereinheiten Basis Arm Ellenbogen bzw. Ellenbogen Unterarm-Werkzeugträger durch zumindest eine erfindungsgemäße Parallelkinematik zu ersetzen.

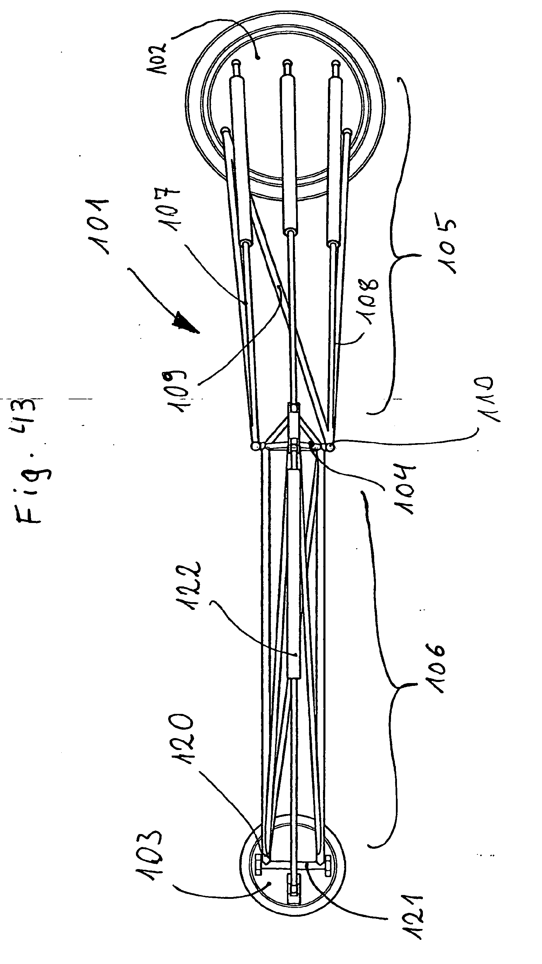

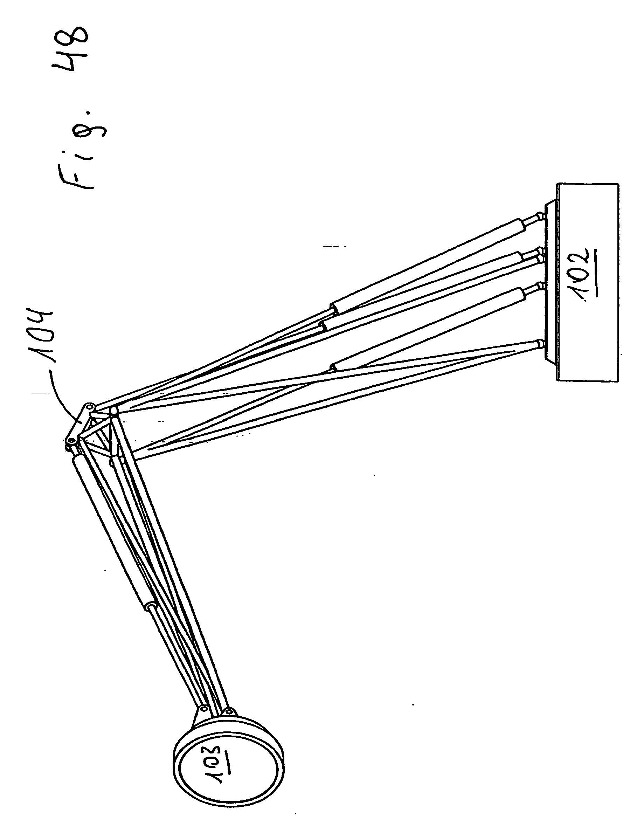

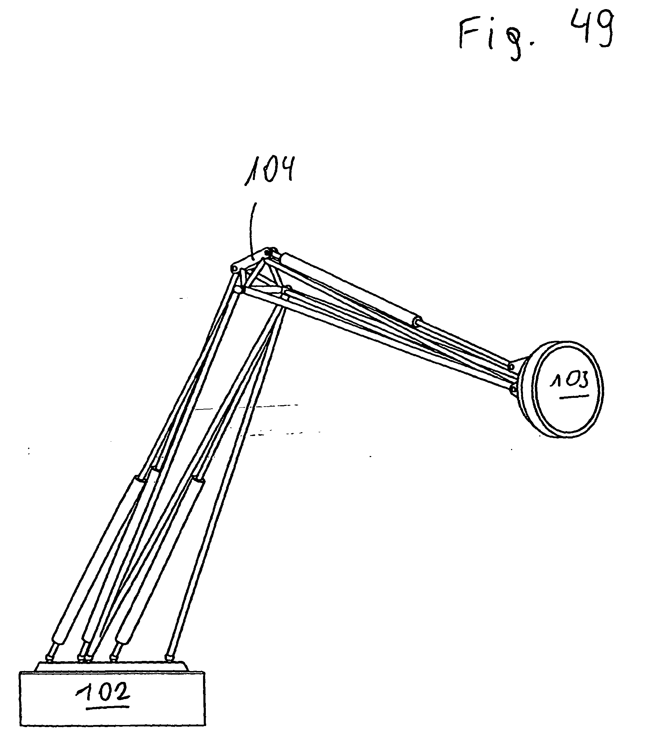

Die Fig. 43 bis 49 zeigen eine erste Variante eines Knickärmes, wie er beispielsweise für einen Roboter oder eine spezielle Hubanefdnung, beispielsweise einen Kran, etc. verwendet werden kann Die Grundidee bei der Verwirklichung des Knickarmes liegt neben der Verwendung von Tripelpunkten oder Pseudo-Tripelpunkten vor allem darin, durch eine serielle Kombination zweier parallelkinematischer Vorrichtungen die bisherigen -Nachteile von mechanischen Systemen; die auf Parallelkinematik beruhen, zu vermeiden.

Wie eingangs erläutert, weisen bekannte Parallelkinematiken den großen Nachteil auf, einen großen Raumbedarf zu besitzen und dabei nur einen sehr geringen Arbeitsbereich zu erfassen. Durch die Erfindung, die vorschlägt, zwei parallelkinematische Systeme in Serie zu schalten, wobei die bewegliche Plattform des ersten Systems als feste Plattform des zweiten Systems dient und somit zu einer Mittelplattform wird, gelingt es, äußert bewegliche und mit einem großen Aktionsradius ausgestattete Vorrichtungen zu schaffen. Die durch das serielle Anordnen von Kinematiken üblichen Nachteile treten überraschenderweise praktisch nicht auf, da einerseits nur eine zweistufige Serie geschaffen wird, insbesondere aber auch, weil durch die parallelkinematische Ausbildung der beiden Stufen der seriellen Kinematik die toten Massen außerordentlich klein sind und da durch die üblicherweise verwendeten Lager, wie oben ausgeführt, meist vorgespannte und damit hochgenaue Lager, eine der wesentlichen Problematiken der seriellen Kinematik, nämlich die Addition der Fehler der Positionierung, keine praktische Rolle spielt.

In den Fig. 43 bis 49 ist nun eine erste Variante eines solchen Knickarmes dargestellt, der an seiner beweglichen Plattform ein Werkzeug, eine Hubvorrichtung, eine Greifvorrichtung, ein Werkstück etc. ergreifen, halten, bearbeiten, führen, heben etc. kann.

Es zeigt dabei die Fig. 43 eine Draufsicht auf einen erfindungsgemäßen Knickarm 101, bestehend im wesentlichen aus einer festen Plattform 102, einer ersten Parallelkinematik 105, einer Zwischenplattform 104, einer zweiten Parallelkinematik 106 und einer beweglichen Plattform 103. Die feste Plattform 102 kann tatsächlich fest verankert sein, beispielsweise im Fundament einer Werkhalle oder an einer Bearbeitungsmaschine, es kann sich, wenn der Knickarm als Kran verwendet wird, die feste Plattform 102 entlang von Schienen bewegen oder zumindest um ihre vertikale Mittelachse drehbar gelagert sein, es kann, wenn der Knickarm 101 als Führung für eine Baggerschaufel dient, die feste Plattform 102 mit einer Tragvorrichtung eines Fahrzeuges verbunden sein u.dgl. mehr.

Die erste Parallelkinematik 105 besteht im dargestellten Ausführungsbeispiel aus zwei Zeigerpaaren bzw. Kraftecken 107, 108, die jeweils aus einem Aktuator und einem passiven Stab bestehen und an der Zwischenplattform 104 Doppelpunkte ausbilden. An einem dieser Doppelpunkte ist durch einen Querstab 109 ein Tripelpunkt 110 ausgebildet, womit all die Vorteile, die in der Einleitung der Beschreibung ausführlich erläutert wurden, erreicht werden.

Es soll, nicht nur zur Fig. 43, sondern zu allen anderen Figuren auch, nochmals darauf hingewiesen werden, dass aus Gründen der einfacheren Darstellung die an Doppelpunkten, Tripelpunkten oder Pseudo-Tripelpunkten beteiligten Stäbe bzw. Verbindungselemente als einfach in diese Punkte einmündend und damit auch als untereinander einmündend dargestellt werden, ohne dass die tatsächliche mechanische Ausbildung der Kinematik in diesem Bereich gezeigt wird. Diese ist in den Fig. 1 bis 11 ausführlich dargestellt und erläutert, sodass aus Gründen der besseren Übersichtlichkeit bei den Figuren, die die gesamten Kinematiken in ihren verschiedenen Ausbildungen zeigen, diese Details nicht dargestellt werden.

Die vorstehend erläuterte erste Parallelkinematik 105 bewegt die Zwischenplattform 104 so, wie es an Hand der Fig. 1 bis 11 dargelegt worden ist. Nunmehr wird diese Zwischenplattform 104 als feste Plattform für eine zweite Parallelkinematik 106 verwendet bzw. angesehen, die ähnlich aufgebaut ist wie die erste Parallelkinematik 105, aber einfacher, nämlich mit nur einem Aktuator 122, ausgebildet ist. Es ist auch hier ein Tripelpunkt bzw. Pseudo-Tripelpunkt 120 an der beweglichen Plattform 103 vorgesehen, sodass auch diese Parallelkinematik erfindungsgemäß ausgebildet ist und alle damit erreichbaren Vorteile erhalten werden. Es ist besonders darauf hinzuweisen, dass bei den Parallelkinematiken gemäß dem Stand der Technik der Rechenaufwand derart kaskadierter Systeme, von denen schön jedes für sich nur iterativ zu lösen ist, absolut unbeherrschbar wäre.

Wie aus den Fig. 43 bis 49 ebenfalls leicht zu erkennen ist, besteht die zweite Parallelkinematik 106 dem Grunde nach aus einer Art Fortsatz der Zwischenplattform 104 und bildet, solange der Aktuator 122 nicht betätigt wird, einfach einen Teil dieser Zwischenplattform 104, die sodann gemeinsam mit der beweglichen Plattform 103 eine "exotische bewegliche Plattform" der ersten parallelkinematischen Vorrichtung 105 darstellt.

Durch die Ausbildung eines der Stäbe der zweiten Parallelkinematik 106 als Aktuator 122 und die passende Anordnung der Anlenkpunkte (Kopfpunkte) der anderen Stäbe an der beweglichen Plattform 103 als Doppelpunkte bzw. als Tripelpunkt wird nun eine Drehmöglichkeit um die durch die Anlenkpunkte an der beweglichen Plattform definierte Achse 121 geschaffen, und so aus der oben erläuterten exotischen beweglichen Plattform der ersten Parallelkinematik 105 eine Zwischenplattform 104 mit anschließender zweiter Parallelkinematik 106.

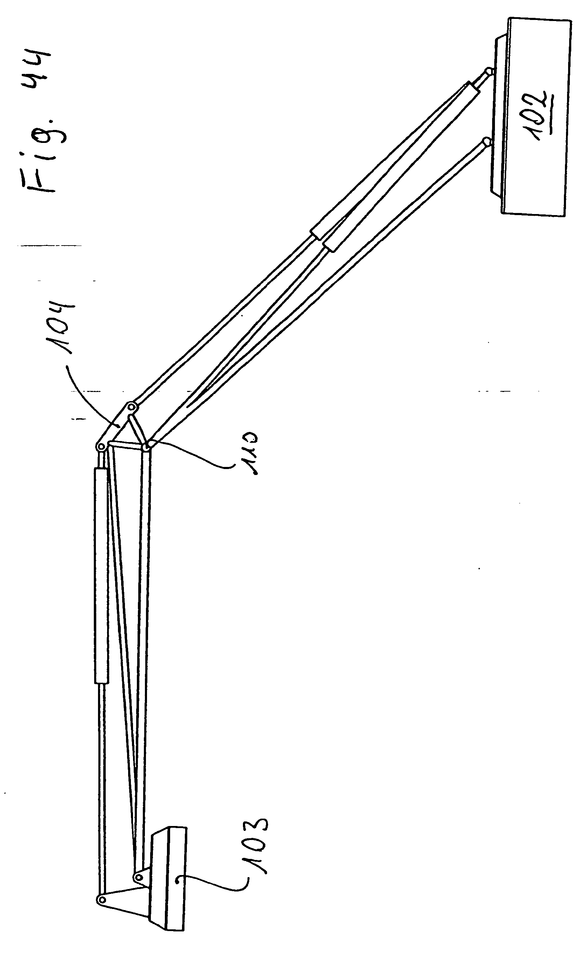

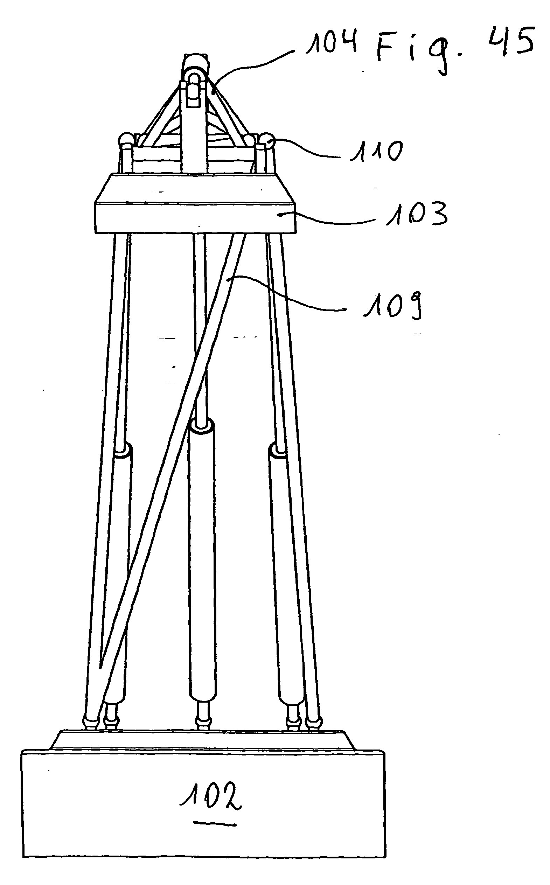

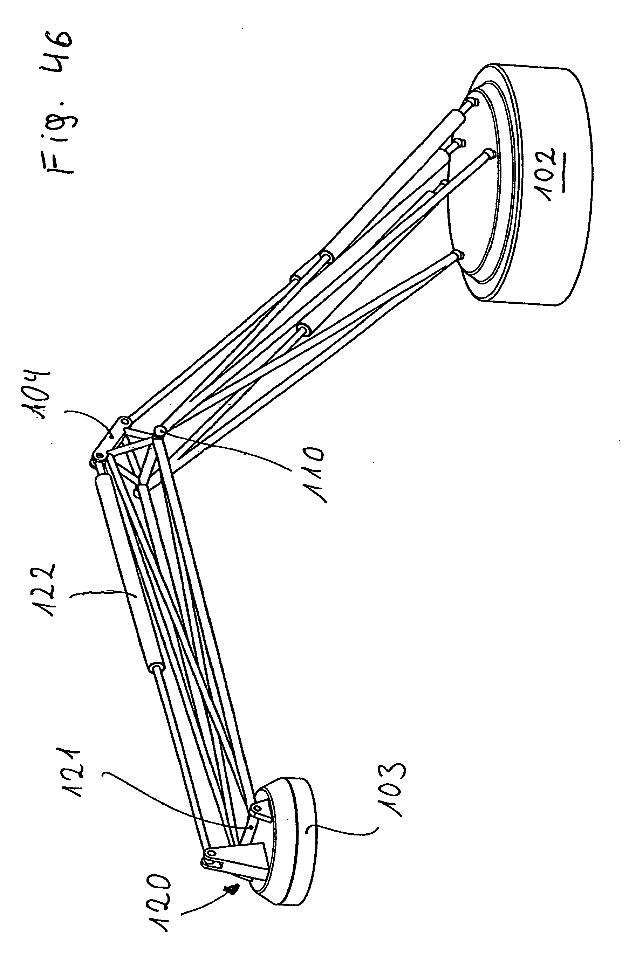

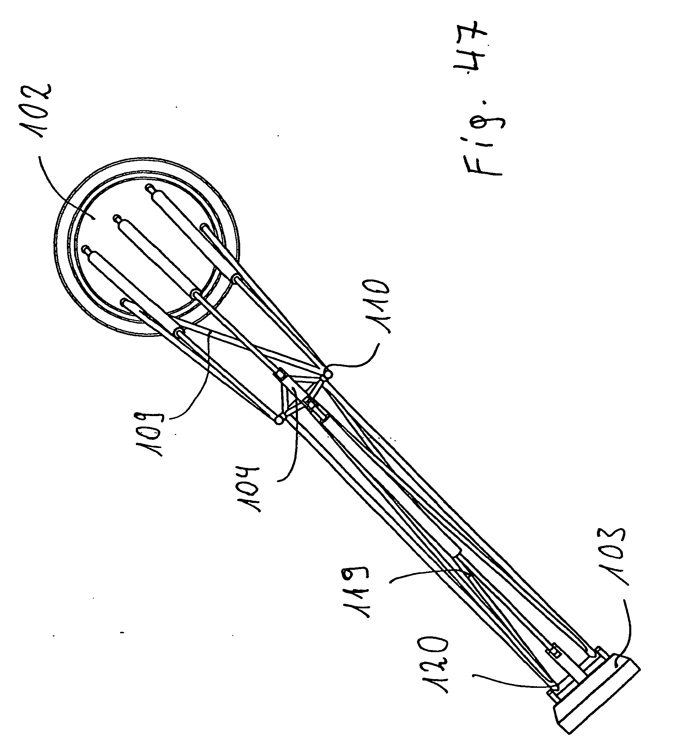

Die vielfältigen Bewegungsmöglichkeiten dieser Kinematik gehen aus den folgenden Figuren hervor, in denen aus Gründen der Übersichtlichkeit nur mehr die jeweils bedeutsamsten Bezugszeichen eingetragen sind. Dabei zeigt die Fig. 44 eine Seitenansicht des Knickarmes in der Stellung der Fig. 43 und die Fig. 45 eine Frontalansicht in dieser Stellung. Die Fig. 46 zeigt eine perspektivische Ansicht, die Fig. 47, 48 und 49 zeigen Ansichten in anderen Stellungen, wobei verschiedentlich (Fig. 47) auch der Querstab 119 der zweiten Parallelkinematik 106, der gemeinsam mit einem Zeigerpaar den Tripelpunkt 120 der zweiten Parallelkinematik 106 ausbildet, gut sichtbar ist.

Wenn man diese Beweglichkeit mit der Beweglichkeit üblicher Parallelkinematiken, wie beispielsweise dem Hexapod oder dem Tricept vergleicht, erkennt man die überraschende Vervielfachung der Reichweite und die mannigfaltigen Orientierungsmöglichkeiten der beweglichen Plattform, die nur durch die erfindungsgemäße Ausbildung des Knickarmes möglich ist.

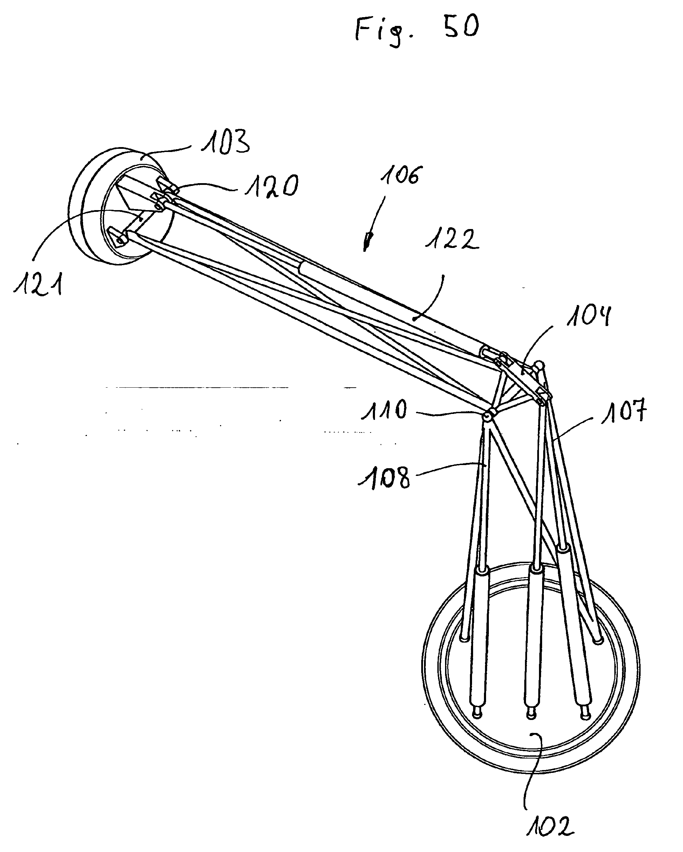

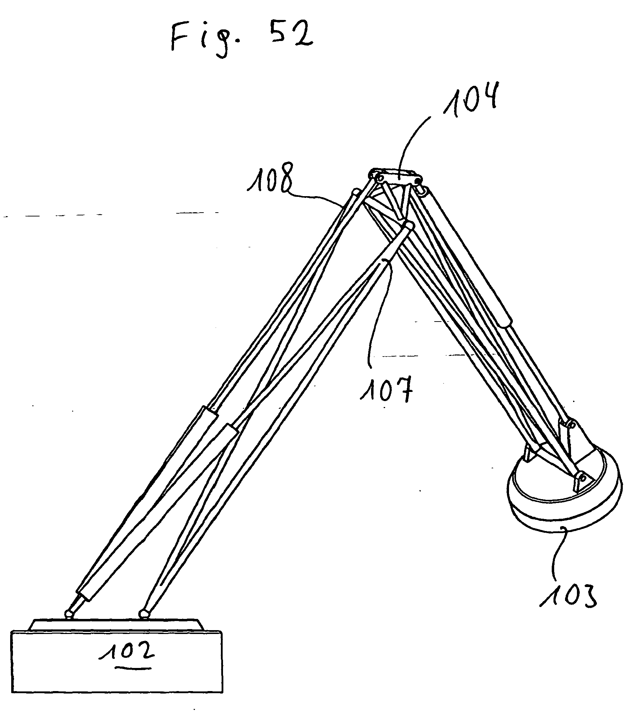

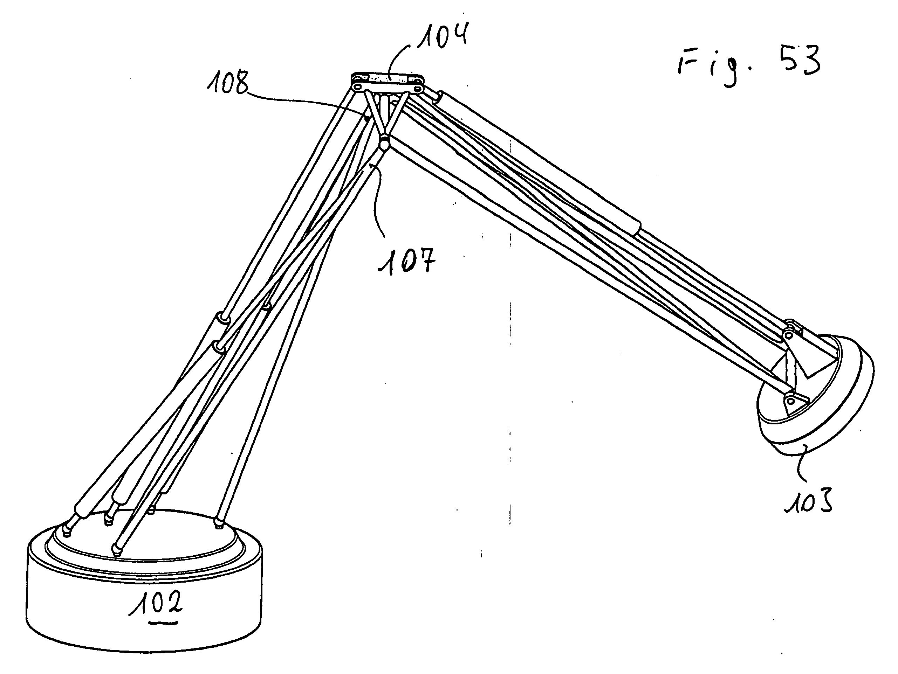

Die Fig. 43 bis 49 zeigen Positionen des Knickarmes, die erreicht werden können, wenn die beiden Zeigerpaare 107, 108 synchronisiert bewegt werden: Bei dieser Art der Bewegung ist es, wie insbesondere aus Fig. 47 hervorgeht, möglich, die bewegliche Plattform 103 normal zum Boden zu orientieren. Die Fig. 50 bis 53 zeigen nun Bewegungen, bei denen die beiden Zeigerpaare 107, 108 nicht synchron sondern voneinander unabhängig betätigt werden und es ist aus dieser Abfolge von Darstellungen ersichtlich, dass dann zwar eine zusätzliche Beweglichkeit der beweglichen Plattform 103 gewonnen wird, dass aber dafür der Preis zu zahlen ist, dass die bewegliche Plattform 103 nicht mehr normal bzw. parallel zum Boden, darunter wird hier die Ebene verstanden, in der die Fußpunkte der Verbindungsglieder (Stäbe, Aktuatoren) der ersten Parallelkinematik 105 angeordnet sind, erreicht wird. In der Folge wird dargelegt, wie erfindungsgemäß auch unter solchen Bedingungen eine solche Orientierung möglich wird.

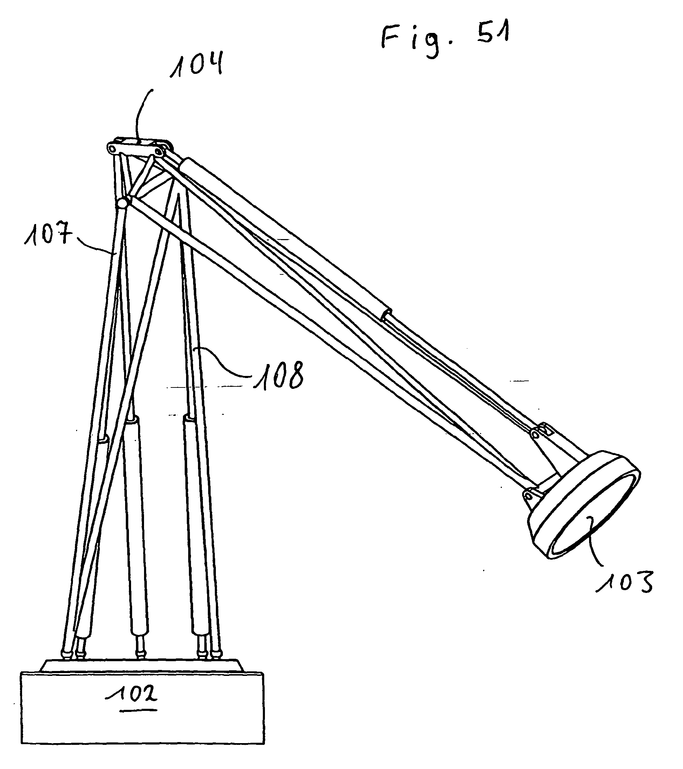

Aus Fig. 50, einer Draufsicht auf einen erfindungsgemäßen Knickarm entsprechend dem der Fig. 43 bis 49 ist ersichtlich, dass das Zeigerpaar 107 und das Zeigerpaar 108 nicht mehr symmetrisch zueinander verlaufen (asynchrone Betätigung der Zeigerpaare), d.h. der Aktuator des Zeigerpaares 107 ist länger als der Aktuator des Zeigerpaares 108, wodurch eine Drehung der Zwischenplattform 104 und damit der gesamten zweiten Kinematik 106 bewirkt wird. Diese in vielen Fällen angestrebte Schräglage und die damit erzielte größere Reichweite bringt es durch Schrägstellung der Zwischenplattform 104 aber mit sich, dass, wie oben kurz angeführt, die bewegliche Plattform 103 nicht mehr in eine Ebene normal bzw. parallel zu der Ebene der festen Plattform 102 gebracht werden kann. Dies ist insbesondere im Zusammenhalt mit den Fig. 51 bis 53 ersichtlich.

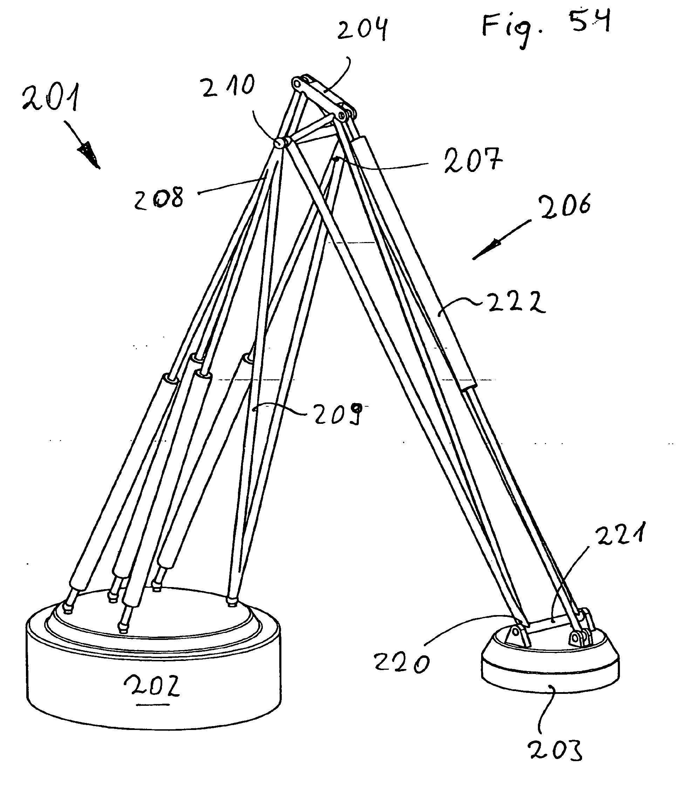

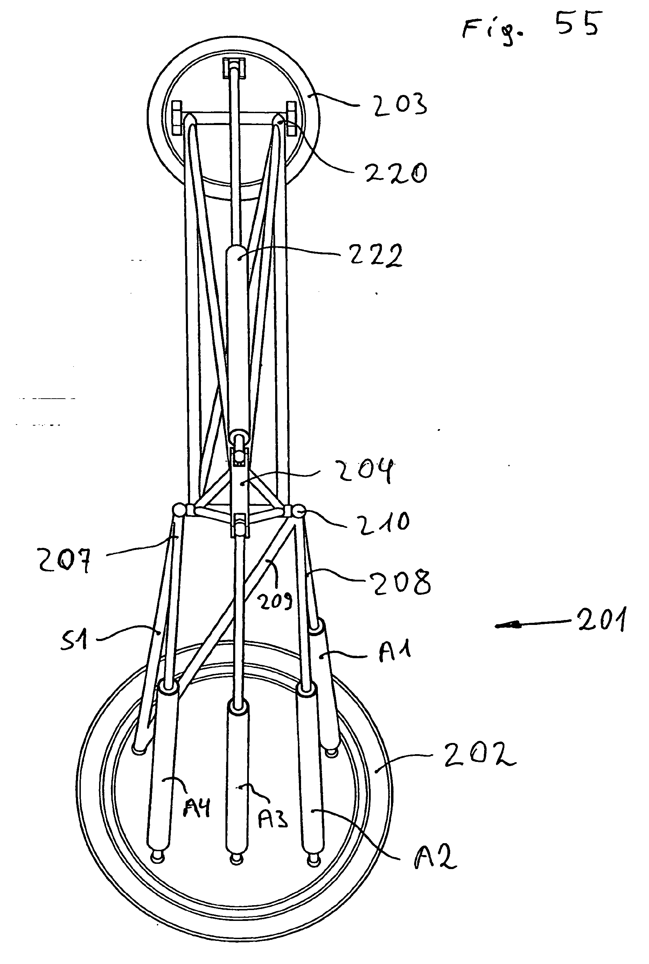

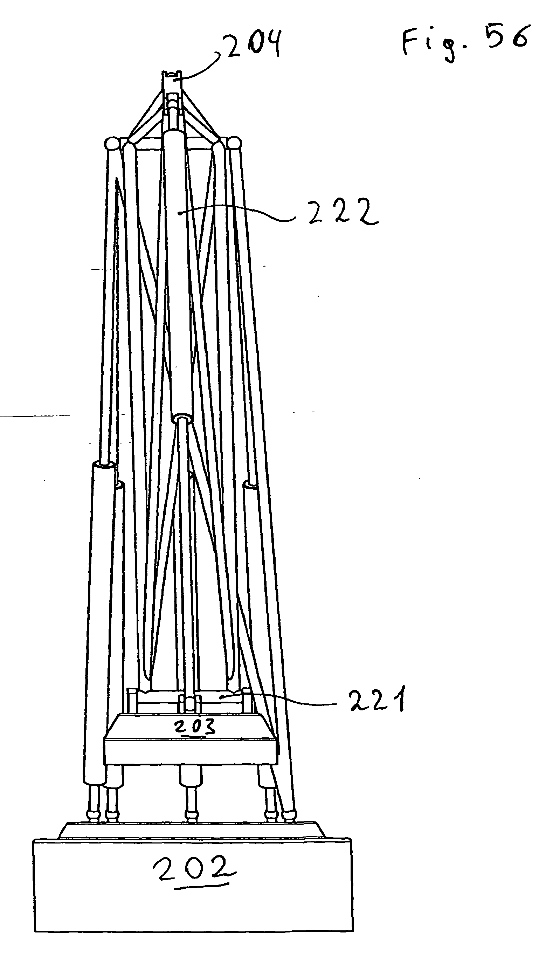

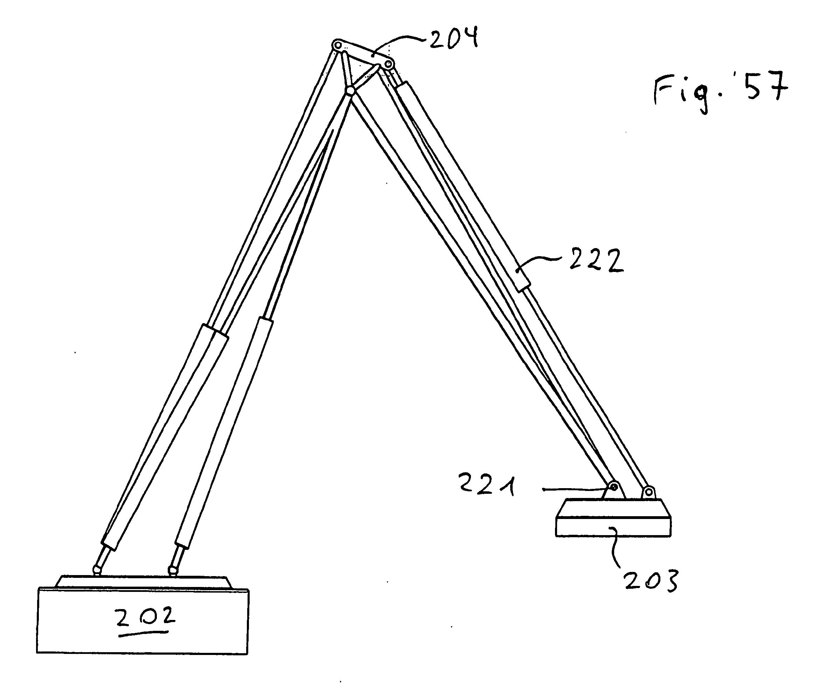

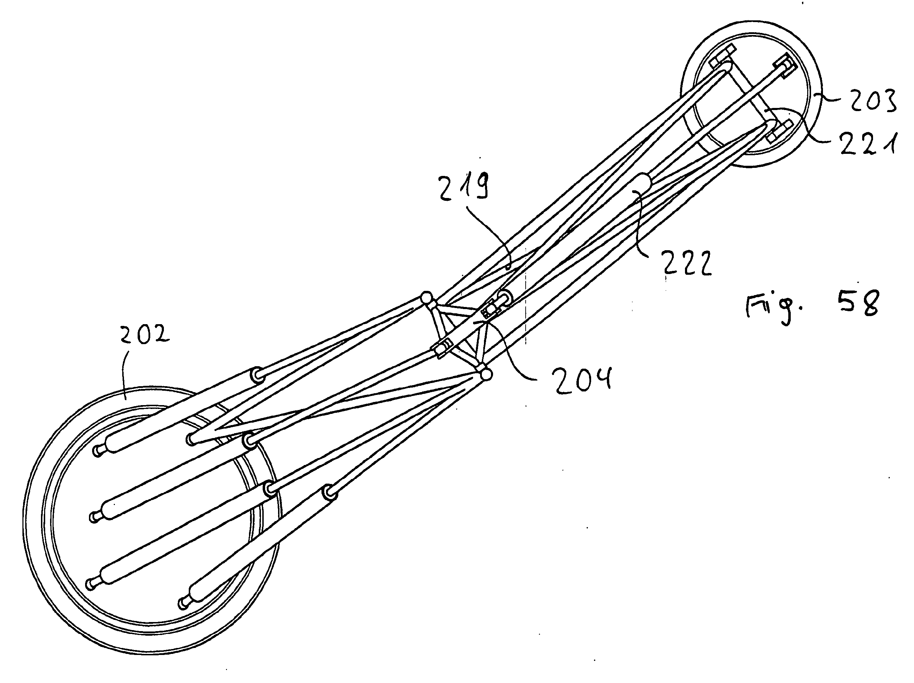

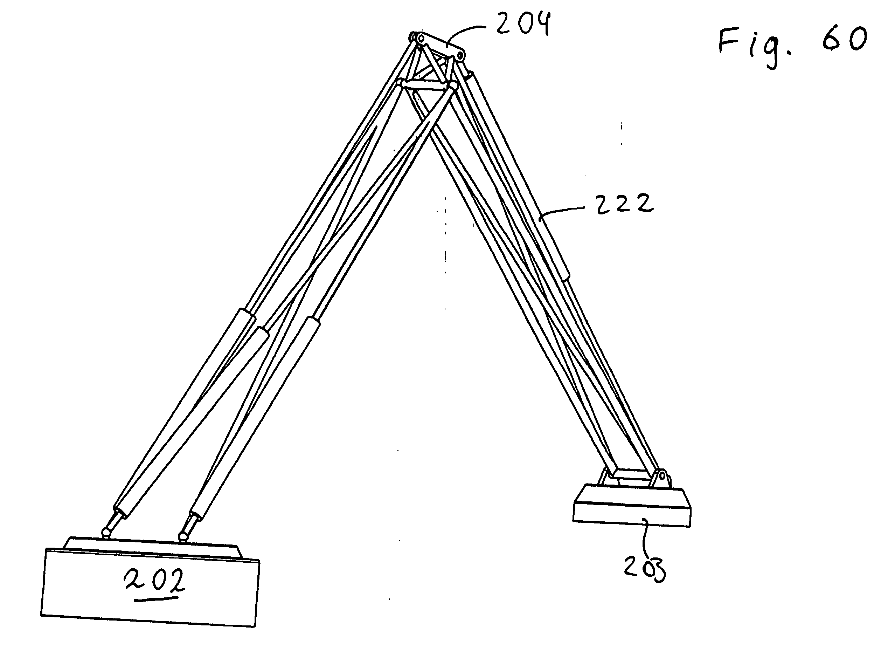

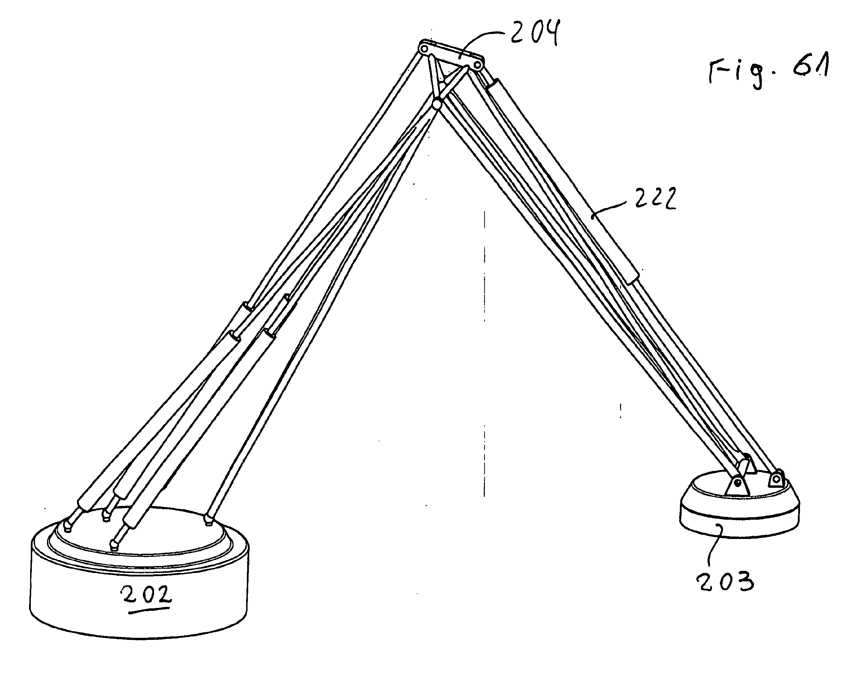

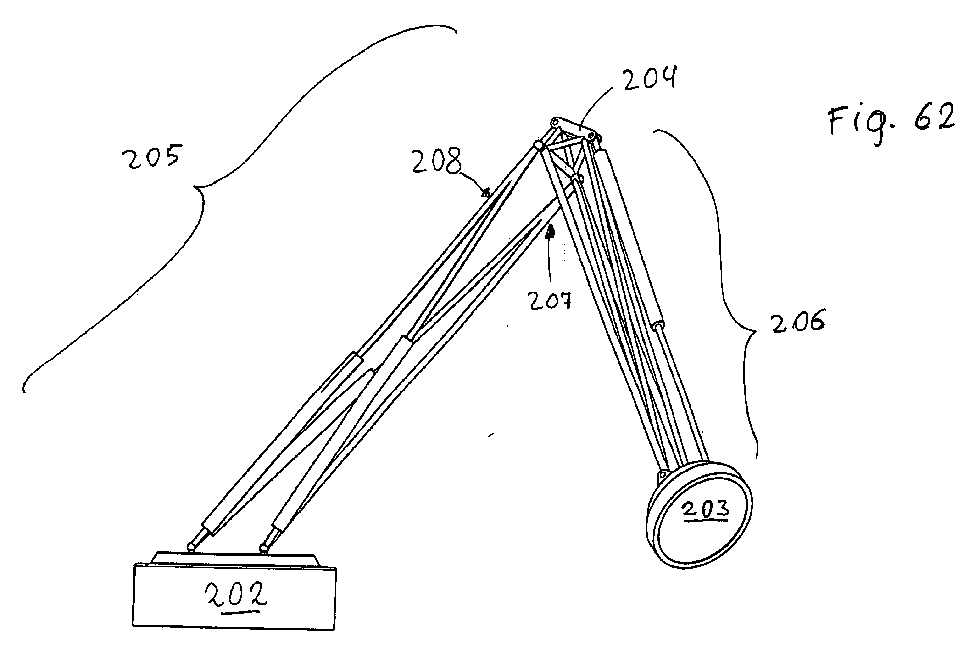

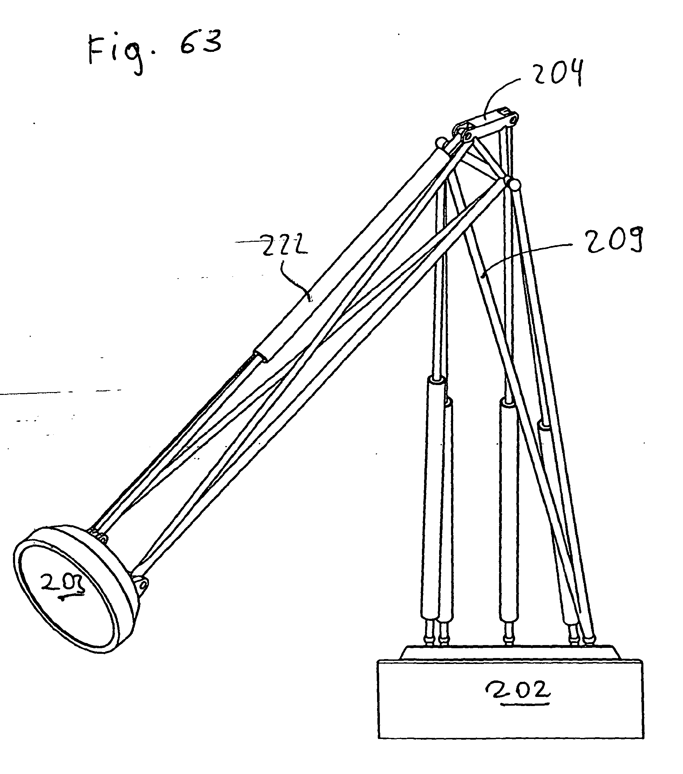

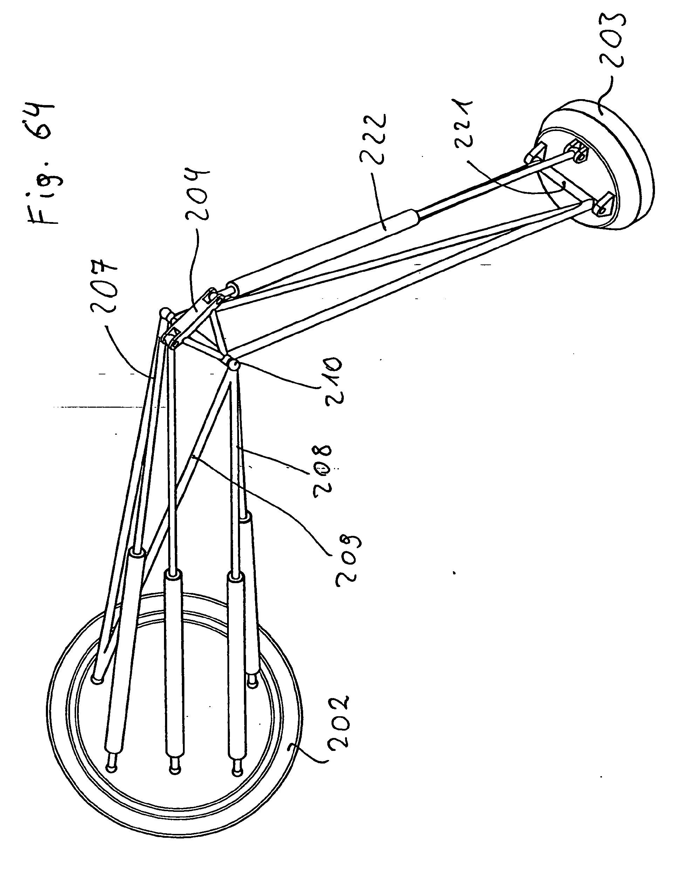

Die Fig. 54 bis 64 zeigen eine zweite Variante 201 eines Knickarmes, die sich von der ersten Variante 101 nur dadurch unterscheidet, dass das Zeigerpaar 208 (von der Anordnung her entsprechend dem Zeigerpaar 108 der ersten Ausführungsform) aus zwei Aktuatoren besteht, während das Zeigerpaar (Krafteck) 108 der ersten Variante 101 aus einem Aktuator und einem passiven Stab bestand. Die Folge dieser einfachen Maßnahme ist nun unmittelbar aus den Figuren zu erkennen, es ist hier auch bei nicht synchronisierter Bewegung der Zeigerpaare (Kraftecke) 207, 208 stets möglich, die bewegliche Plattform 203 normal bzw. parallel zur Ebene zur festen Plattform 202 zu orientieren was aus der in den dargestellten Positionen stets waagrecht verlaufenden Achse 221 erkennbar ist, um die die bewegliche Plattform 203 durch Betätigen des Aktuators 222 verschwenkt wird. Dies ist insbesondere aus der Zusammenschau der Fig. 27 bis 33 gut zu erkennen.

Selbstverständlich sind mit dieser Ausgestaltung des Knickarmes 201 in jeder der gezeigten Positionen auch in weiten Grenzen andere Orientierungen der beweglichen Plattform 203 erreichbar, es sind auch alle Positionen erreichbar, die mit der zuvor erläuterten Variante 101 erreichbar sind, und-selbstverständlich auch schräge Positionen der beweglichen Plattform 203, doch soll mit den Darstellungen in der Zeichnung die Möglichkeit des Einnehmens ganz bestimmter Lagen und Positionen dargestellt werden, die ebenfalls erreichbaren windschiefen relativen Positionen der festen Plattform 202 und der beweglichen Plattform 203 bedürfen als Zwischenlagen nach diesseitiger Ansicht keiner näheren Erläuterung.

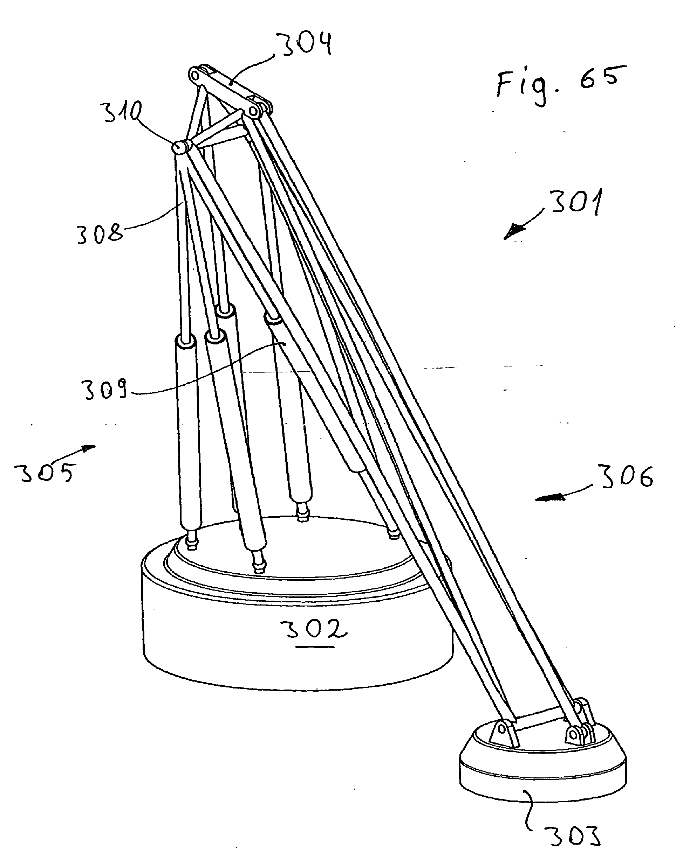

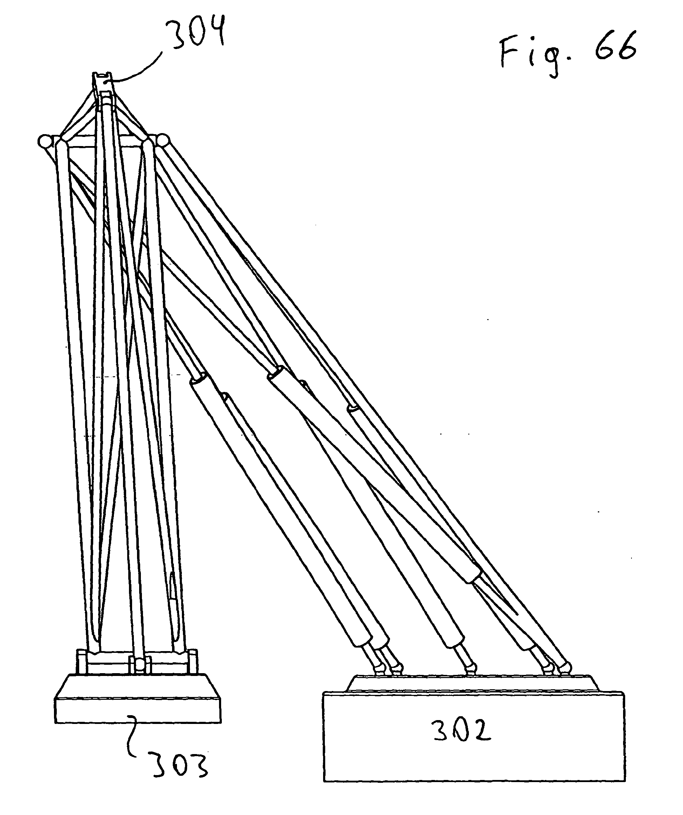

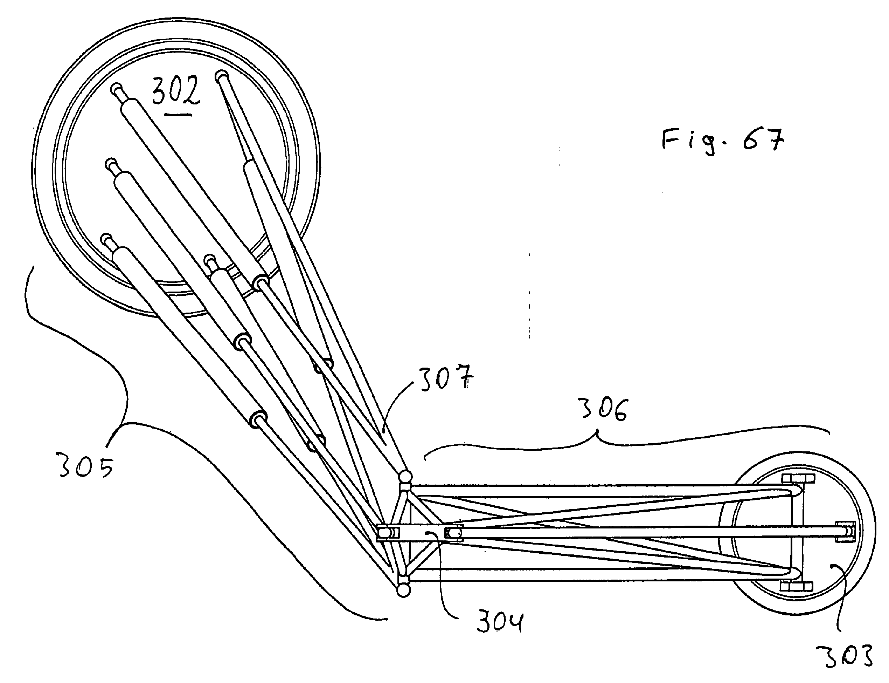

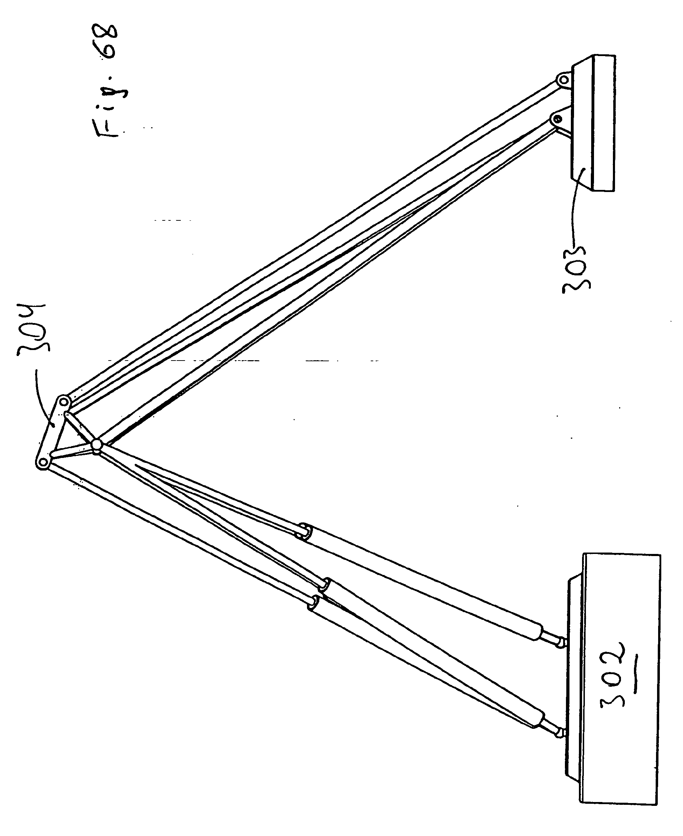

Eine Art Sonderform eines erfindungsgemäßen Knickarmes ist in den Fig. 65 bis 68 dargestellt. Die Fig. 65 zeigt in perspektivischer Ansicht einen Knickarm 301, der im Prinzip ähnlich aufgebaut ist wie die Knickarme 101 und 201. Als Besonderheit sind alle drei Stäbe, die zum Tripelpunkt 310 führen, als Aktuatoren ausgebildet, vom Zeigerpaar 307 (Fig. 67) ist ein Stab ein Aktuator, der andere ein passiver Stab. Wie schon beim Knickarm 201 ist auch der Querstab 309 ein Aktuator und greift am Tripelpunkt 310 an.

Durch diese Ausgestaltung ist es nun ein Leichtes, die zweite Parallelkinematik ausschließlich aus passiven Stäben so aufzubauen, dass durch entsprechende Platzierung der Zwischenplattform 304 die Ebene der beweglichen Plattform 303, definiert durch die daran angreifenden Anlenkpunkte der Stäbe der zweiten Parallelkinematik 306, stets parallel zur Ebene der festen Plattform 302, definiert durch die Angriffspunkte der daran angreifenden Verbindungselemente der ersten Parallelkinernatik 305, verläuft. Eine derartige Anordnung ist bei Schneid- oder Heftmaschinen, bei Prüfvorrichtungen für ebene Oberflächen, bei Kränen, Hubmagneten, etc. wegen des geringen toten Gewichtes vorteilhaft und für die vorgesehenen Tätigkeiten völlig ausreichend. Es sei hier noch auf den großen Arbeitsradius dieser Vorrichtung hingewiesen, insbesondere, wenn die feste Plattform 302 um ihre Hochachse drehbar und/oder entlang einer geraden oder kreisförmigen Bahn verfahrbar ausgebildet ist.

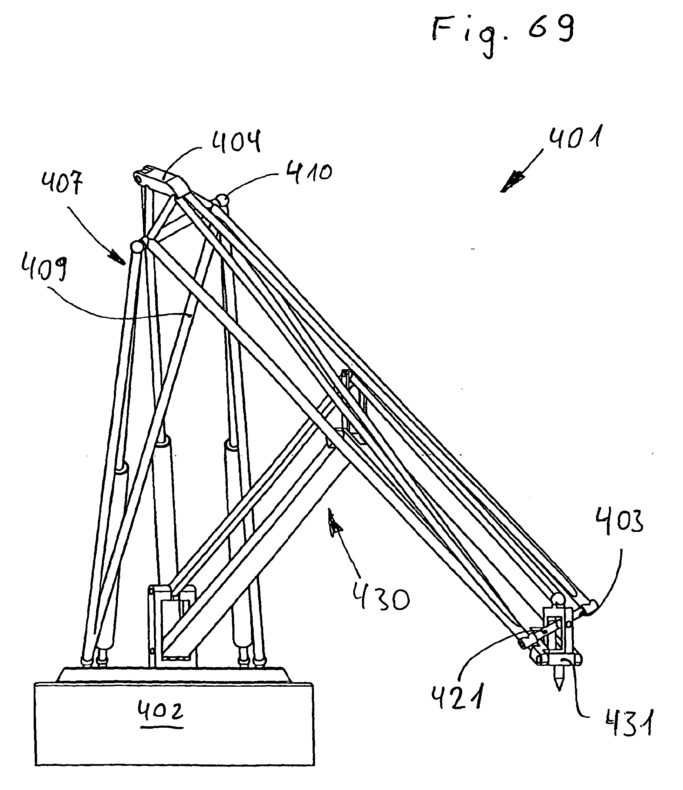

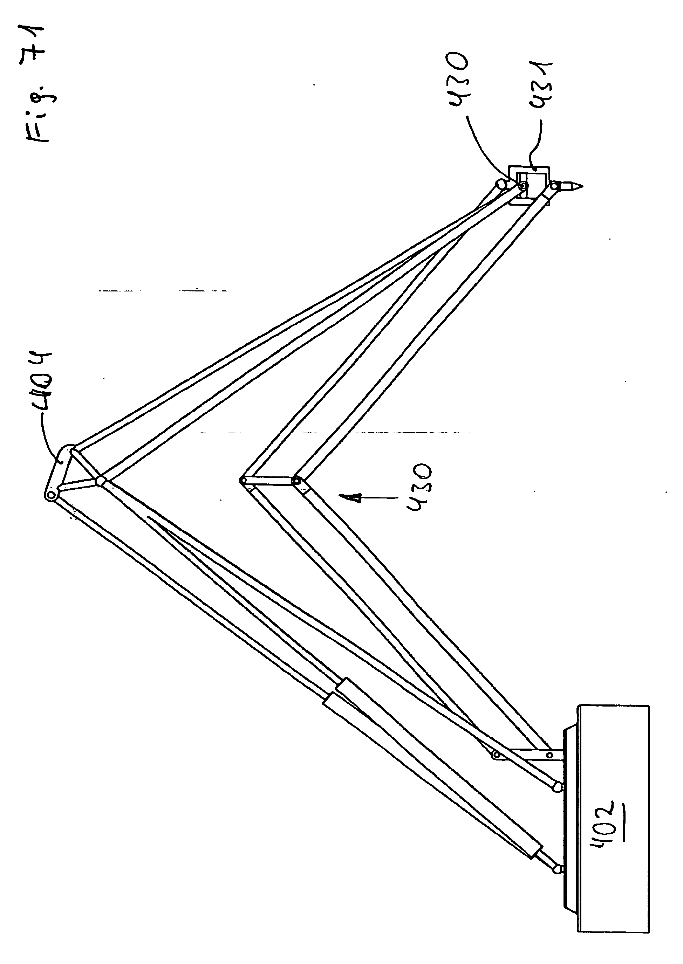

Die Fig. 69 bis 71 zeigen eine besondere Ausgestaltung eines erfindungsgemäßen Knickarmes, die besonders bei Anwendungen vorteilhaft ist, bei denen eine rasche und genaue Positionierung eines Werkzeuges gewünscht ist. Dies kann beispielsweise ein Laser schneidgerät, eine Wasserstrahlschneidgerät, eine Überwachungskamera oder etwas ähnliches sein.

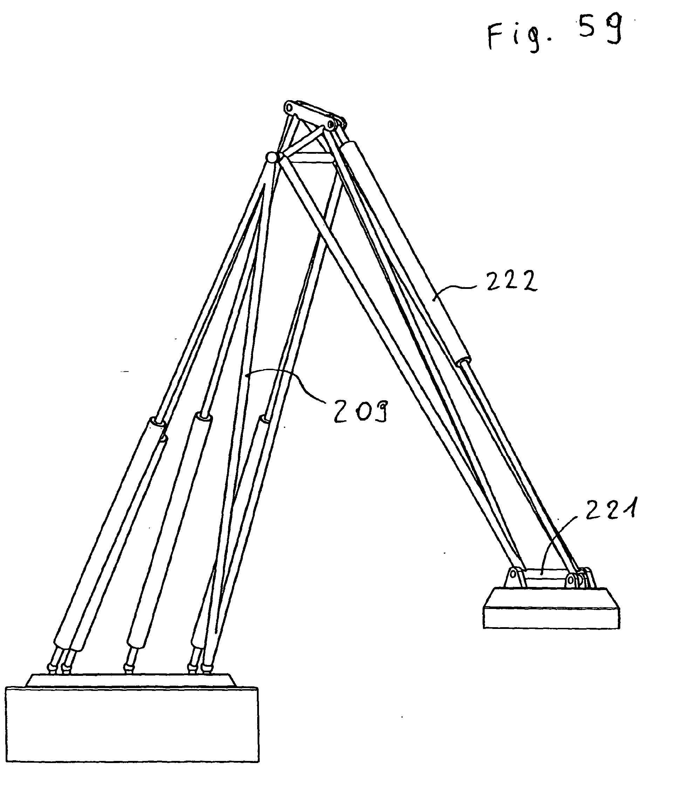

Die Vorrichtung 0besteht aus einer ersten Kinematik 405, die so aufgebaut ist wie die anhand des ersten Beispiels erläuterte erste Kinematik 105. An der Zwischenplattform 404 ist eine zweite Kinematik befestigt, die ähnlich ausgebildet ist wie die zweiten Kinemati ken 206 bzw. 306, nur fehlt der Aktuator 222 bzw. der dessen Stelle einnehmende passive Stab (ohne Bezugszeichen). Die bewegliche Plattform 403 degeneriert damit zu einer Achse oder Welle 421 analog zur Achse 221 (Fig. 59) und auf dieser Achse sitzt, kardanisch gelagert, eine Arbeitsplattform 431. Diese Arbeitsplattform 431 ist im dargestellten Ausführungsbeispiel mit einem symbolischen Werkzeug versehen. An der kardanischen Aufhängung greift eine Parallelogrammführung an, die für die stets vertikale Ausrichtung (bezogen auf die Ebene der festen Plattform 402) des Werkzeuges sorgt.

Die Parallelogrammführung 430 ist an der festen Plattform 402 um eine vertikale Achse drehbar gelagert und besteht aus zwei aneinander gereihten, eine gemeinsame Seite aufweisenden Parallelogrammen, sodass die Halterung an der kardanischen Aufhängung stets parallel zur Aufhängung an der festen Plattform 402 verläuft. Durch die Drehmöglichkeit um die vertikale Achse an der festen Plattform 402 wird die Parallelogrammführung 430 stets den Bewegungen der zur Welle 421 degenerierten beweglichen Plattform 403 nachgeführt.

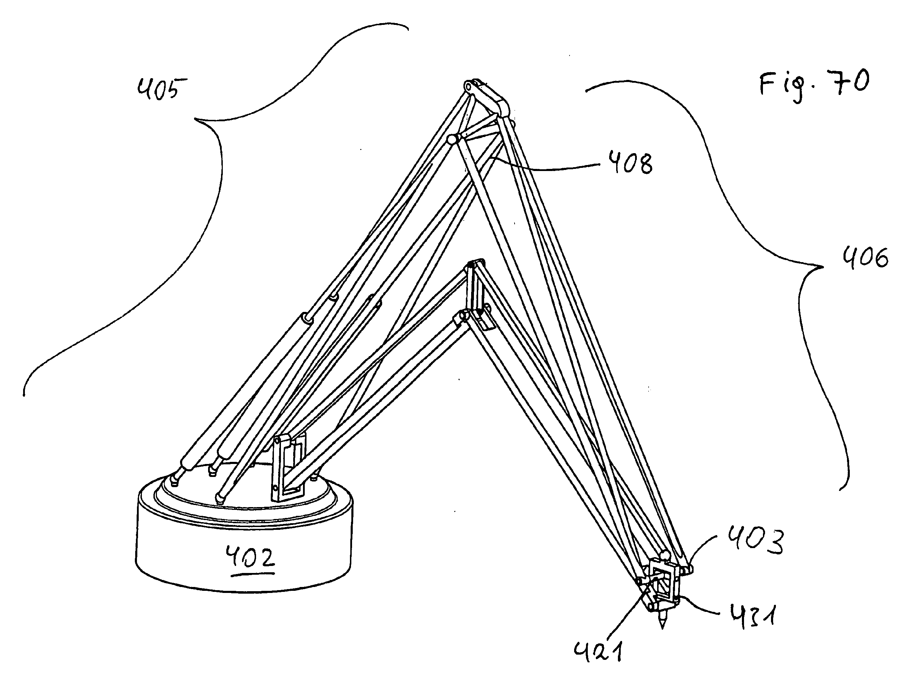

Aus einer Zusammenschau der Fig. 69 und 70 ist gut zu erkennen, wie durch die kardanische Aufhängung auch bei schräg gestellter beweglicher Plattform 403, entsprechend der Welle 421, die Werkzeugplattform 431 vertikal positioniert ist. Es ist noch darauf hinzuweisen, dass bei entsprechender Schrägstellung der beiden Parallelkinematiken 405, 406 die Parallelogrammführung 430 in Draufsicht das durch die beiden Kinematiken aufgespannte Dreieck schließt, sodass sich eine räumlich sehr ungewöhnliche Position ergibt.

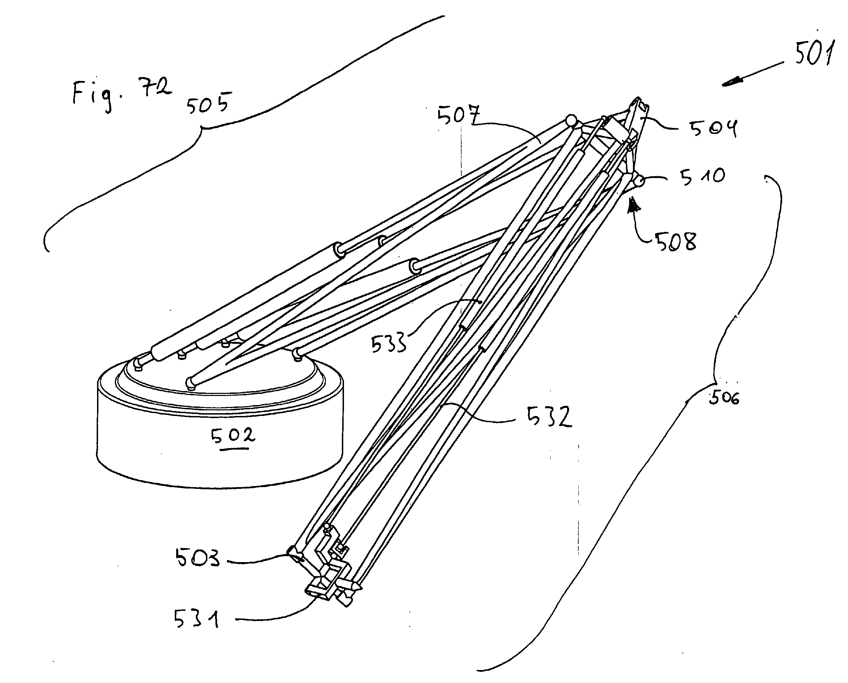

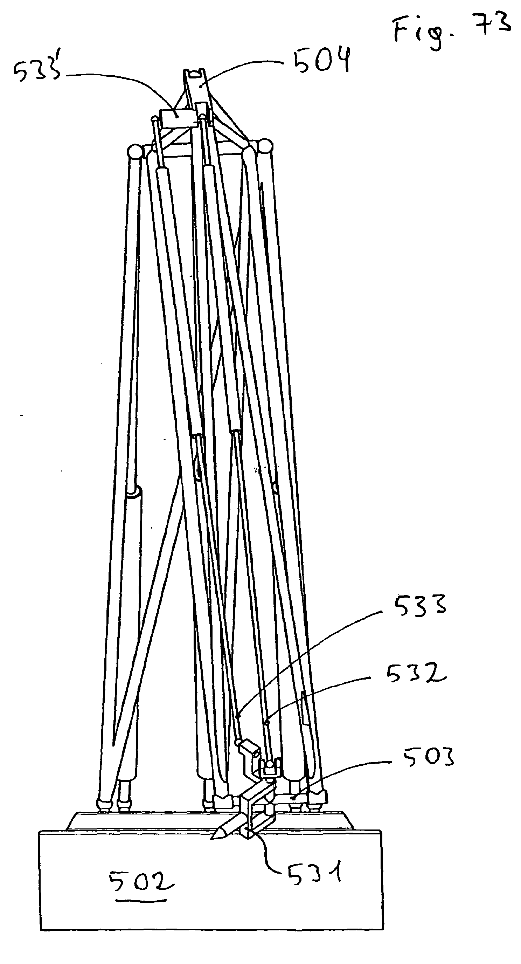

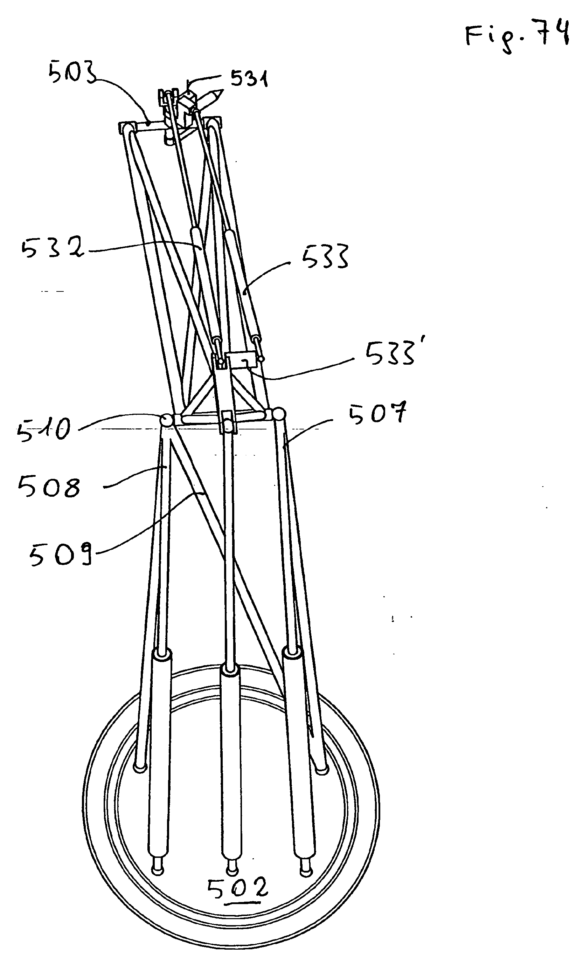

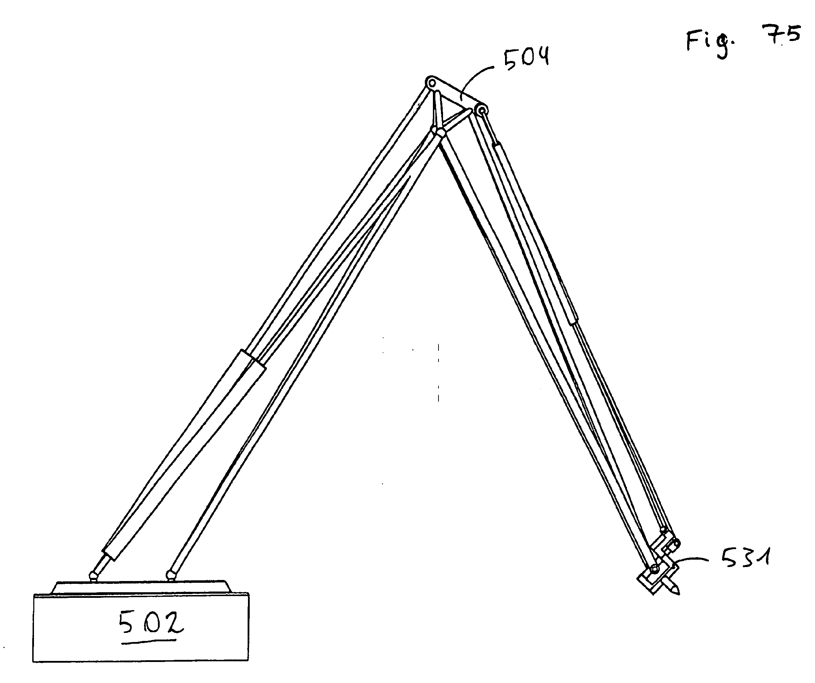

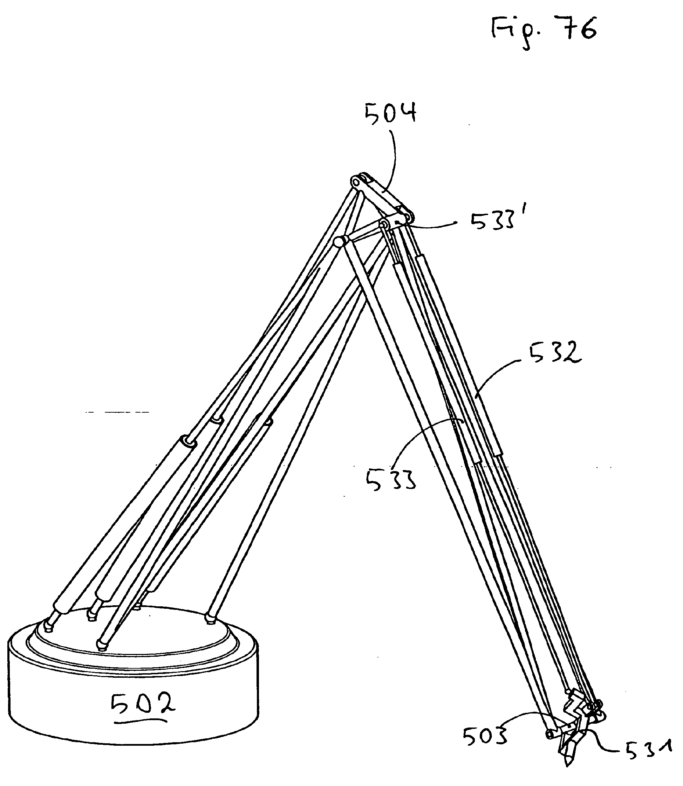

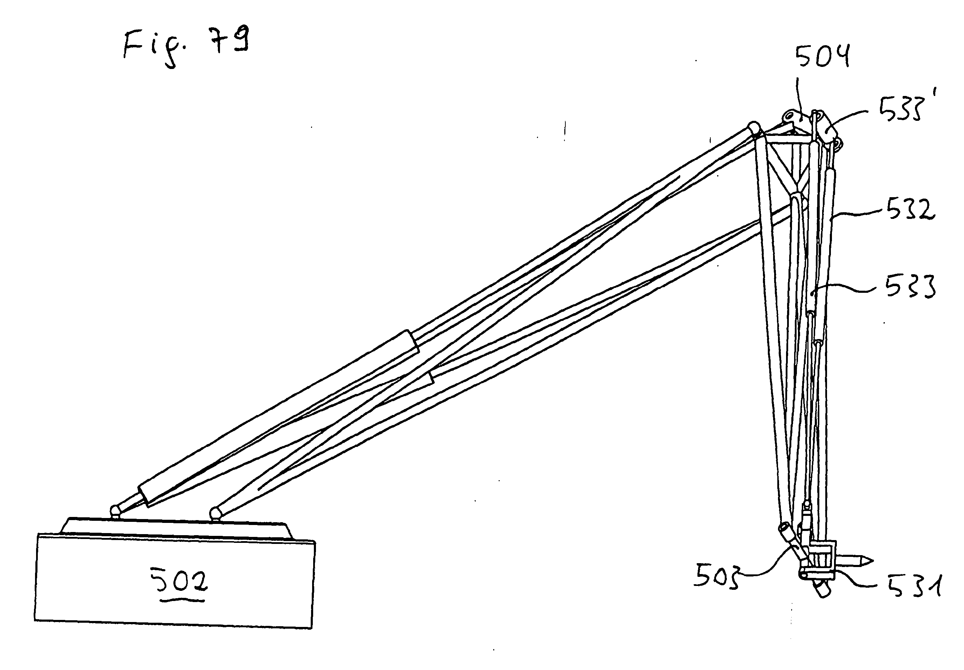

Eine weiter flexible Ausgestaltung der Grundidee der Erfindung ist den Fig. 72 bis 79 zu entnehmen. Dabei ist bei einem Knickarm 501 eine erste Parallelkinematik 505 vorgesehen, die so aufgebaut ist wie die erste Parallelkinematik 105 im ersten Ausführungsbeispiel und daher hier nicht nochmals erklärt wird, die zweite Parallelkinematik 506 ist allerdings komplex aufgebaut und wird im Folgenden näher erläutert.

Die zweite Parallelkinematik 506, die sich von der Zwischenplattform 504 zur beweglichen Plattform 503 erstreckt ist, so wie im zuvor erläuterten Ausfürungsbeispiel dahin gehend reduziert bzw denaturiert, dass die bewegliche Plattform 503 zu einer Welle geschrumpft ist, auf der kardanisch gelagert ein Werkzeugträger 531 sitzt. Die Positionierung dieses Werkzeugträgers an der und um die Welle 503 erfolgt mittels zweier Aktuatoren 532 und 533. Beim dargestellten Ausführungsbeispiel greift der Aktuator 532 an der Verlängerung einer der kardanischen Achsen an, der Aktuator 533 an einem aus der kardanischen Aufhängung ragenden Hebel. Dieser Aktuator 533 ist auch an einem fest mit der Zwischenplattform 504 verbundenen Hebel 533' angelenkt.

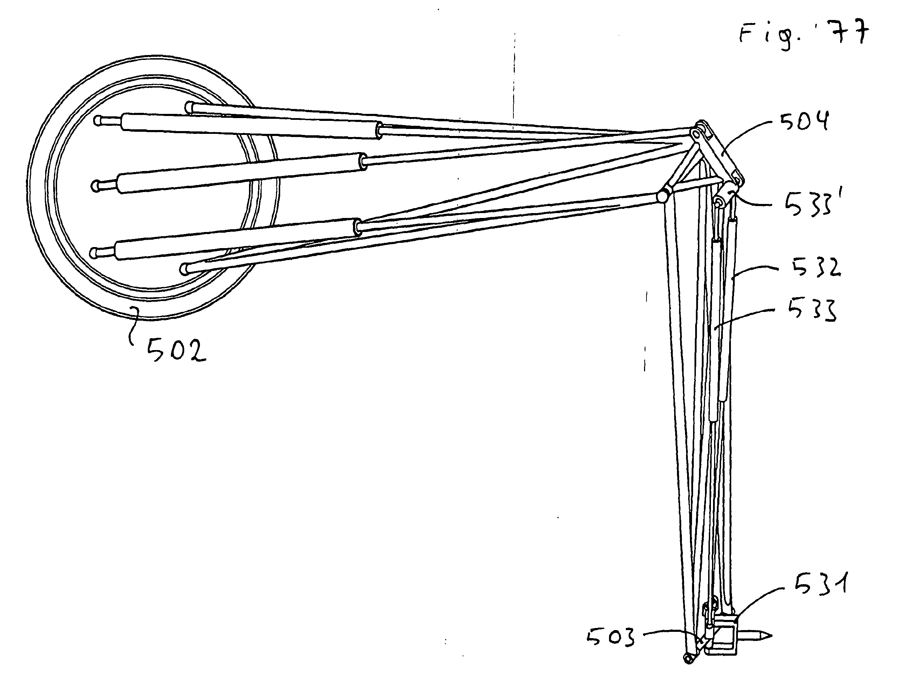

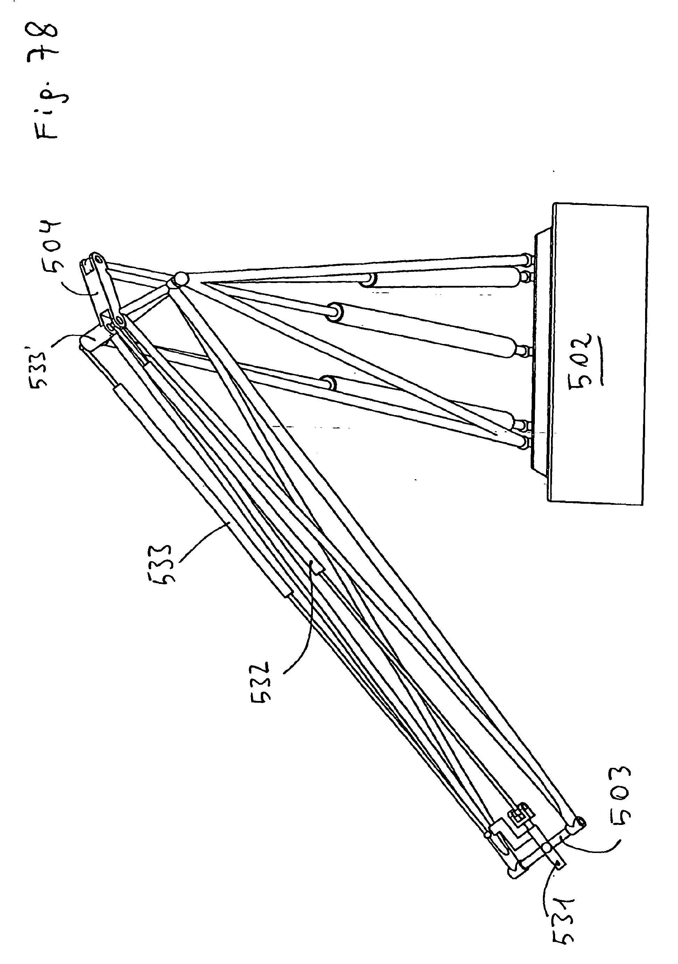

Die überaus große Beweglichkeit und die Reichweite dieser Vorrichtung gehen aus den einzelnen Figuren deutlich hervor, besonders hinzuweisen ist dabei auf Fig. 77, die in Draufsicht zeigt, wie auch bei stark abgesetzter und entfernter Positionierung der beweglichen Plattform 503 die Werkzeugaufhängung 531 so geführt werden kann, dass das -Werkzeugs praktisch im rechten Winkel von der beweglichen Plattform 503 absteht. Diese hervorragende Flexibilität ist auch aus Fig. 78 ersichtlich, die eine Seitenansicht zeigt.

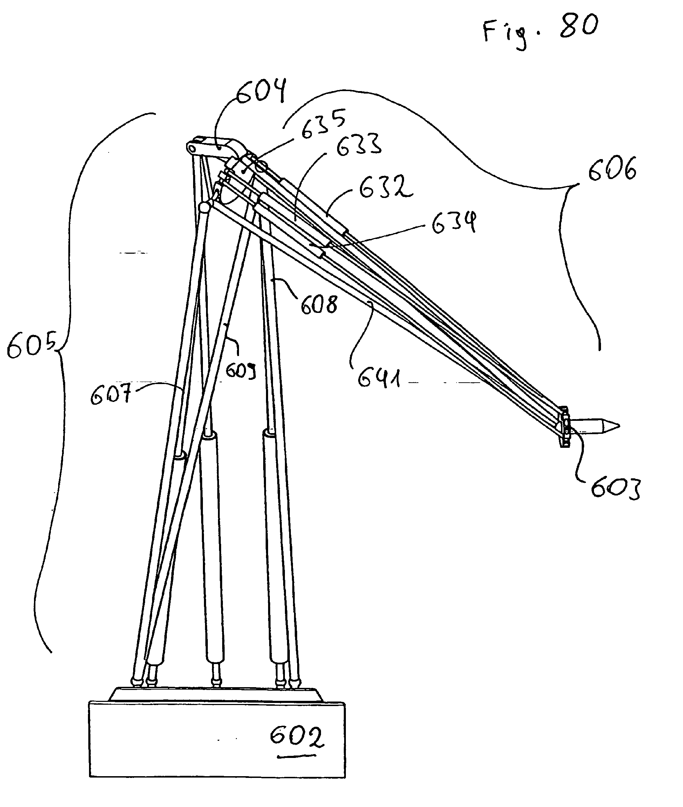

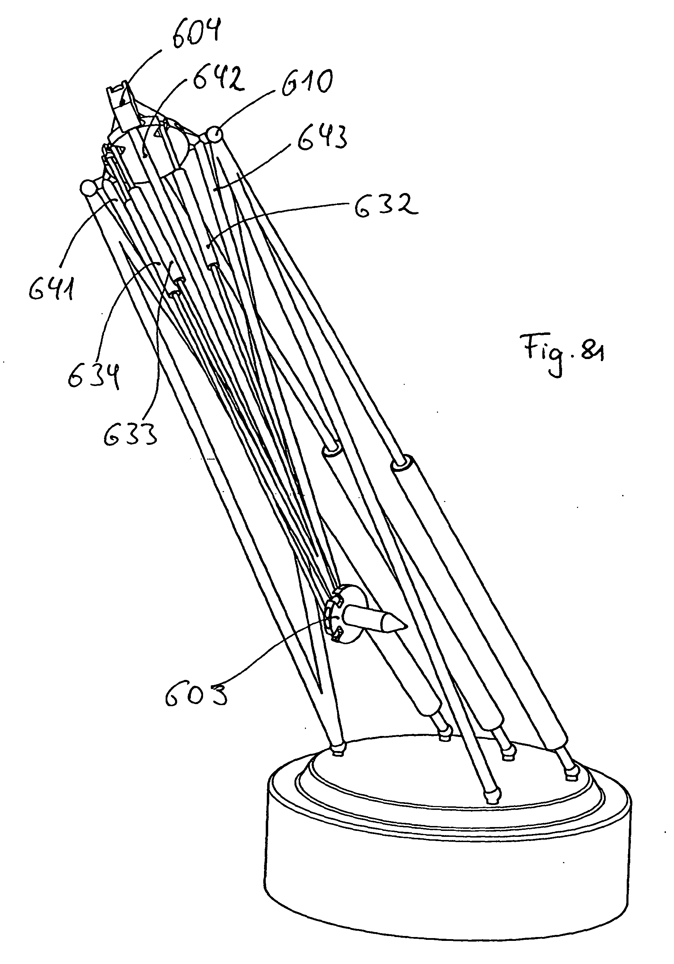

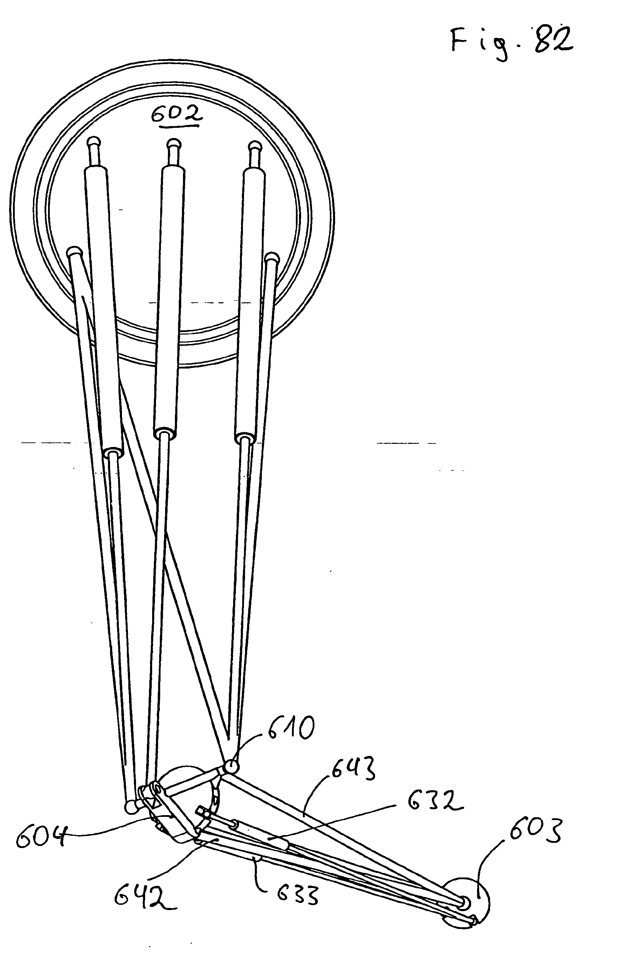

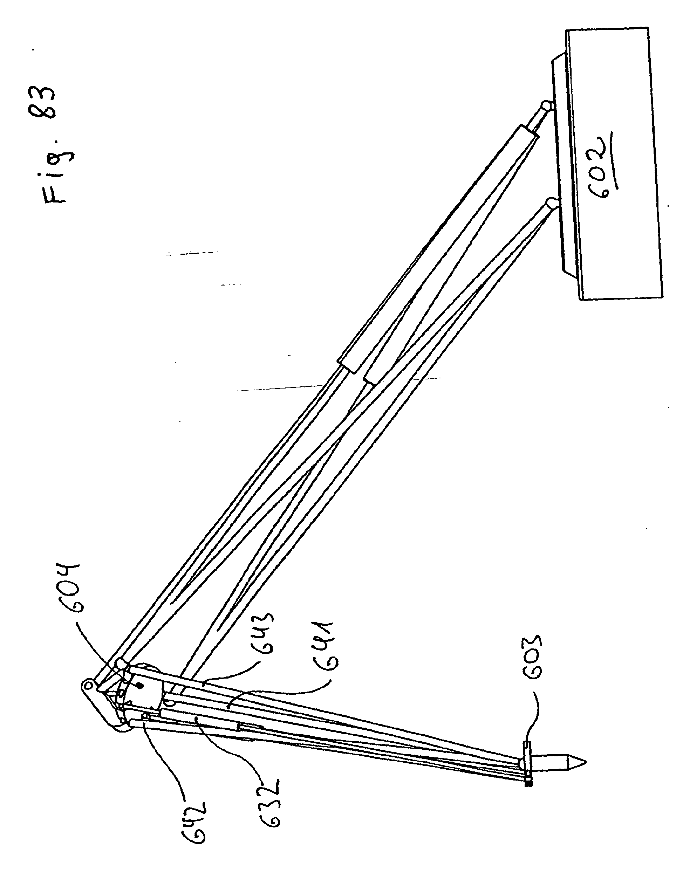

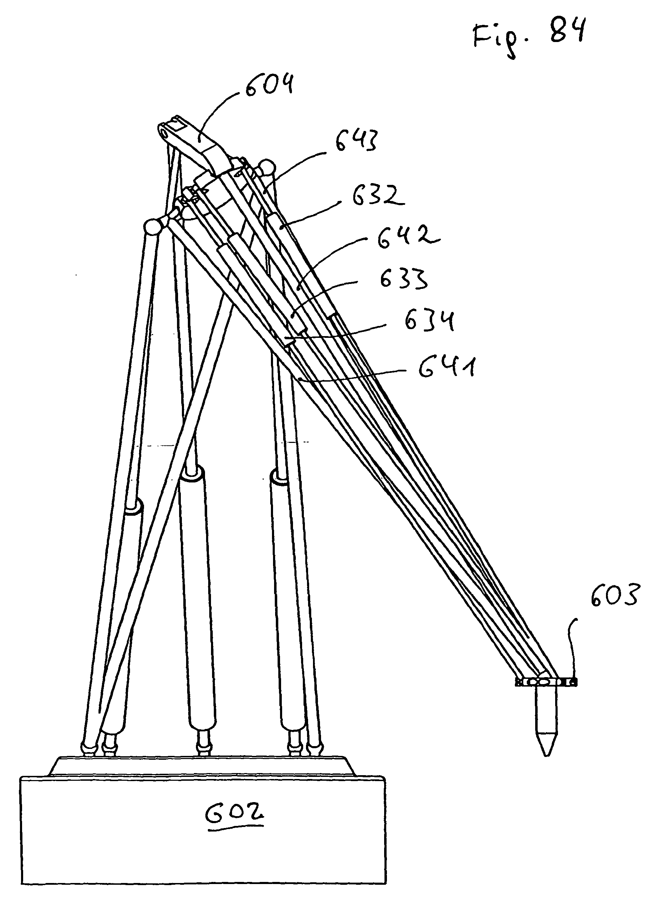

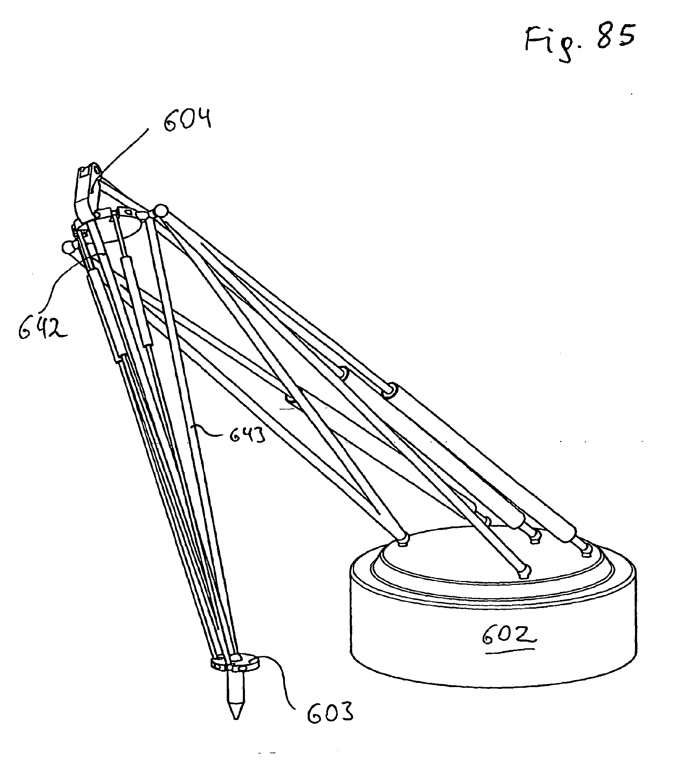

Die Fig. 80 bis 90 zeigen eine sechste Variante eines Knickarmes mit besonders flexiblem zweitem Kinematikteil 606. Der grundsätzliche Aufbau ist folgender: Die erste Parallelkinematik 605 ist so aufgebaut wie beim vorherigen Beispiel und bedarf daher keiner weiteren Erwähnung. Die Zwischenplattform 604 ist bei der in diesen Figuren gezeigten Variante gegenüber den bisher dargestellten Ausführungsformen verändert, sie weist eine Trägerplatte 635 auf, deren Aufgabe und Wirkung weiter unten erläutert wird. Die bewegliche Plattform 603 weist in diesem Ausführungsbeispiel ohne Beschränkung der Allgemeinheit ebenfalls Plattenform auf und dient als Werkzeugträger.

Die zweite Parallelkinematik 606 besteht bei diesem Ausführungsbeispiel aus drei passiven Stäben 641, 642 und 643 und drei Aktuatoren 632, 633 und 635. Die Bezugszeichen für diese sechs Verbindungselemente der Parallelkinematik 606 sind in den einzelnen Figuren nur nach Maßgabe ihrer Sichtbarkeit eingetragen, auf die rein schematische Art der Darstellung der Stäbe im Bereich der Doppelpunkte, Tripelpunkte und Pseudo-Tripelpunkte wird nochmals verwiesen.

Die drei passiven Stäbe 641, 642 und 643 bilden auf der beweglichen Plattform 603, bei der dargestellten Ausführungsform im Mittelpunkt der im wesentlichen kreisförmigen Werkzeugträgerscheibe, einen Tripelpunkt; die Aktuatoren 632 und 633 ein Zeigerpaar mit einem Doppelpunkt an der Peripherie der beweglichen Plattform 603. Der Aktuator 634 schließlich definiert mit seinem Angriffspunkt an der beweglichen Plattform 603 den letzten verbleibenden Freiheitsgrad und damit die Lage der beweglichen Plattform 603 im Raum bezüglich der Zwischenplattform 604.

Mit der Ausgestaltung der ersten Parallelkinematik 605 mit zwei Zeigerpaaren und einem Tripelpunkt liefert diese zweistufige Kombination zweier Parallelkinematiken ein äußerst mächtiges System zur Beherrschung der Lage und der Bewegung eines Werkzeugträgers, Greifarms etc. im Raum. Die Figuren zeigen deutlich, dass nicht nur die Reichweite des Knickarms hervorragend ist, sondern dass er auch in der Lage ist, unmittelbar im Bereich der festen Plattform 602, somit nahe seiner Basis, positioniert zu werden und dabei in allen diesen Bereichen auch die unterschiedlichsten Orientierungen der beweglichen Plattform 603 bewerkstelligen kann.

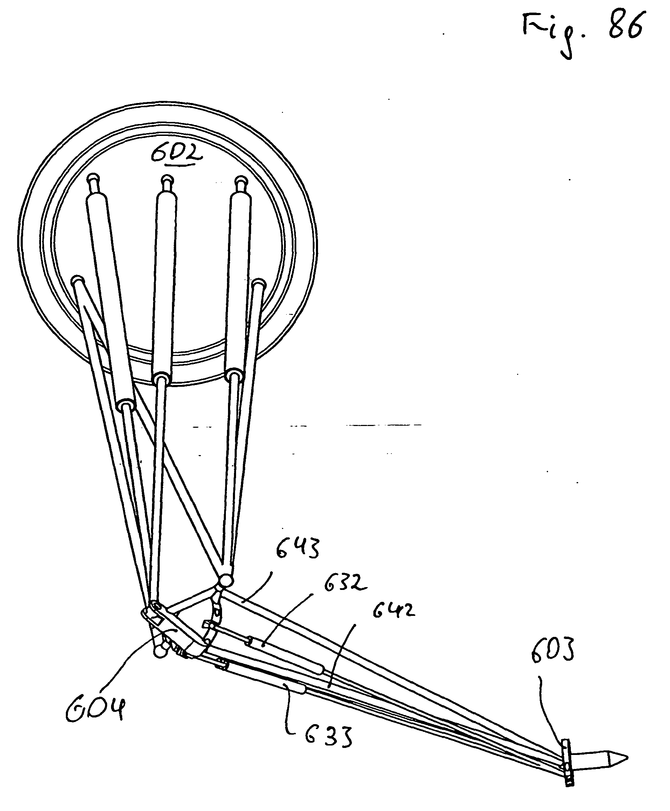

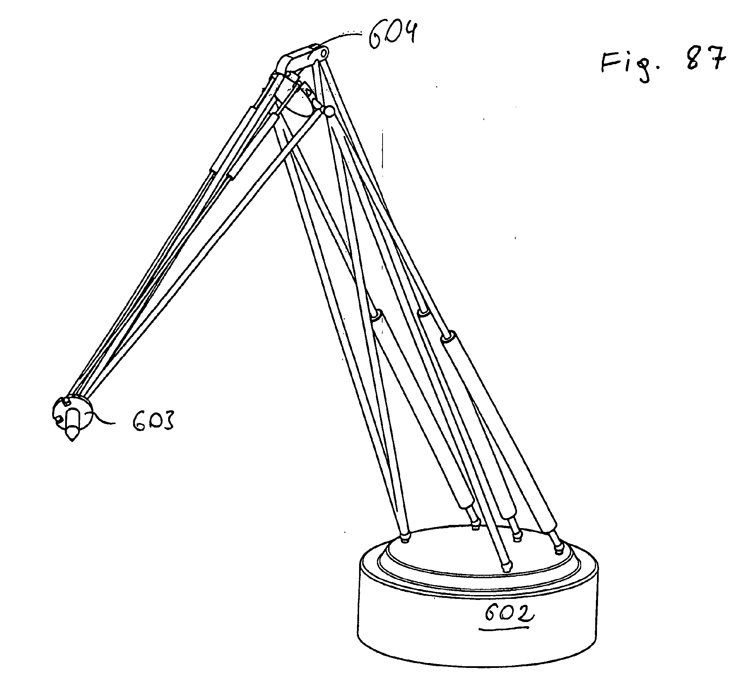

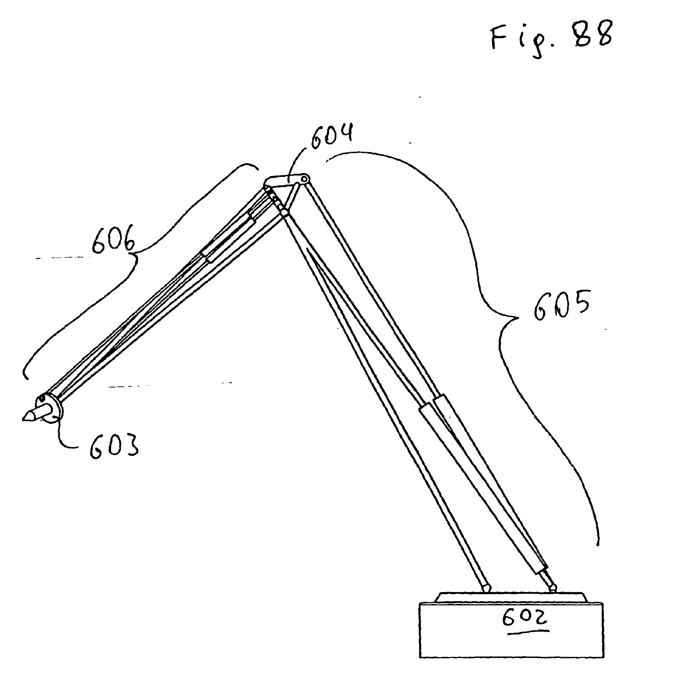

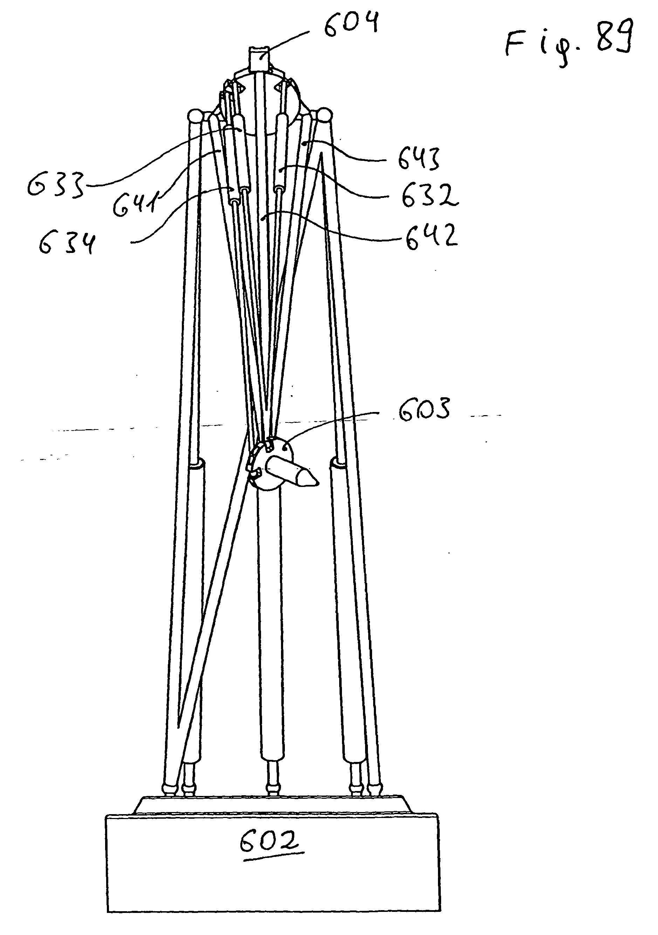

Die vielfältigen Möglichkeiten sind insbesondere aus Fig. 88 und 89 zu erkennen, wo man ersieht, dass selbst bei völlig symmetrischer Betätigung der ersten Parallelkinematik 605 ein deutliches Verschwenken der beweglichen Plattform 603 nur durch die zweite Parallelkinematik 606 möglich ist, und auch aus den Fig. 86 und 87, die in Draufsicht und perspektivischer Ansicht deutlich zeigen, dass auch bei stark ausgefahrenem und geknicktem Zustand die bewegliche Plattform 603 in eine Ebene normal zur Ebene der festen Plattform 602 gebracht werden kann.

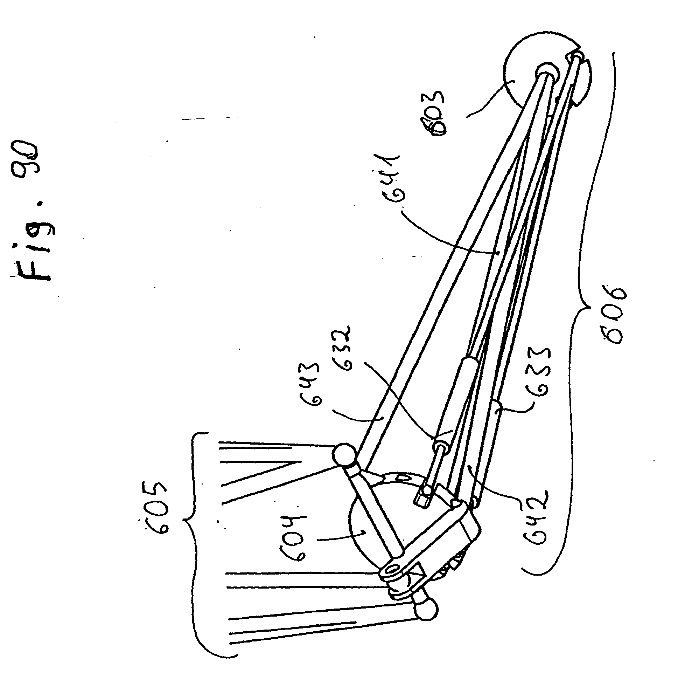

Die Fig. 90 zeigt den Abschnitt 606 der Parallelkinematik im vergrößerten Maßstab. Hier erkennt man deutlich das Zusammenlaufen der drei passiven Stäbe 641, 642 und 643 zu einem Tripelpunkt im Zentrum der scheibenförmigen, beweglichen Plattform 603 und das Zusammenlaufen der Aktuatoren 632, 633 zu einem Doppelpunkt an der Peripherie an der beweglichen Plattform 603. Der Aktuator 634 und sein Angriffspunkt sind bei dieser Ansicht verdeckt und befinden sich im wesentlichen hinter dem Aktuator 633.

Die Erfindung ist nicht auf die dargestellten Ausführungsbeispiele beschränkt, sondern kann verschiedentlich abgewandelt werden. So ist es möglich, nur einen der beiden Abschnitt es Knickarmes mit einer erfindungsgemäßen Kinematik zu versehen, es können auch bei zwei derartigen Kinematiken-andere Längenverhältnisse der beiden Parallelkinematiken zueinander gewählt werden, dies hängt selbstverständlich vom jeweiligen Anwendungsgebiet ab. Es ist selbstverständlich, möglich die gezeigten Ausführungsbeispiel für die unterschiedlichen ersten und zweiten Parallelkinematiken anders als dargestellt miteinander zu kombinieren, in Kenntnis der Erfindung ist es für den Fachmann ein Leichtes, hier günstige Kombinationen zu finden.

Selbstverständlich kann die bewegliche Plattform 603 die für den jeweiligen Verwendungszweck angemessene Form aufweisen, das gleiche gilt Für die feste Plattform 602, die nicht wirklich raumfest sein muss, sondern, es sei nochmals erwähnt, auch verfahrbar oder drehbar oder schwenkbar ausgebildet sein kann.

Es müssen auch nicht alle Verbindungsglieder der Parallelkinematiken Stäbe bzw. Aktuatoren sein, es ist durchaus möglich, dass einzelne diese Elemente durch Seile, Kette, Drähte etc. ersetzt werden, insbesondere wenn es sich um eine hängende Anordnung der Vorrichtung (Laufkatze, Hängebahn, etc.) handelt.

Die Mittelplattform ist in den dargestellten Ausführungsbeispielen mit Ausnahme des Letzten ein im wesentlichen tetraedisches Stabwerk, dies ist natürlich nicht notwendigerweise so, sondern nur wegen der leichteren kinematischen und dynamischen Beherrschbarkeit einer derartigen Konstruktion so dargestellt und gewählt worden.

### Anwendung der Erfindung auf das Verhältnis Parallelkinematik - Ausbildung der beweglichen Plattform:

Dieser Aspekt der Erfindung, durch den die Reichweite und der Umfang der Orientierung eines auf der beweglichen Plattform montierten Werkzeuges deutlich vergrößert wird, wird im folgenden anhand einiger Beispiele, teilweise unter Rückgriff auf bereits besprochene Figuren, näher erläutert. Da hier ein eigener Aspekt der Erfindung besprochen wird, kann es dazu kommen, dass abgebildete Teile unterschiedlich zu ihrer ersten Erläuterung benannt werden.

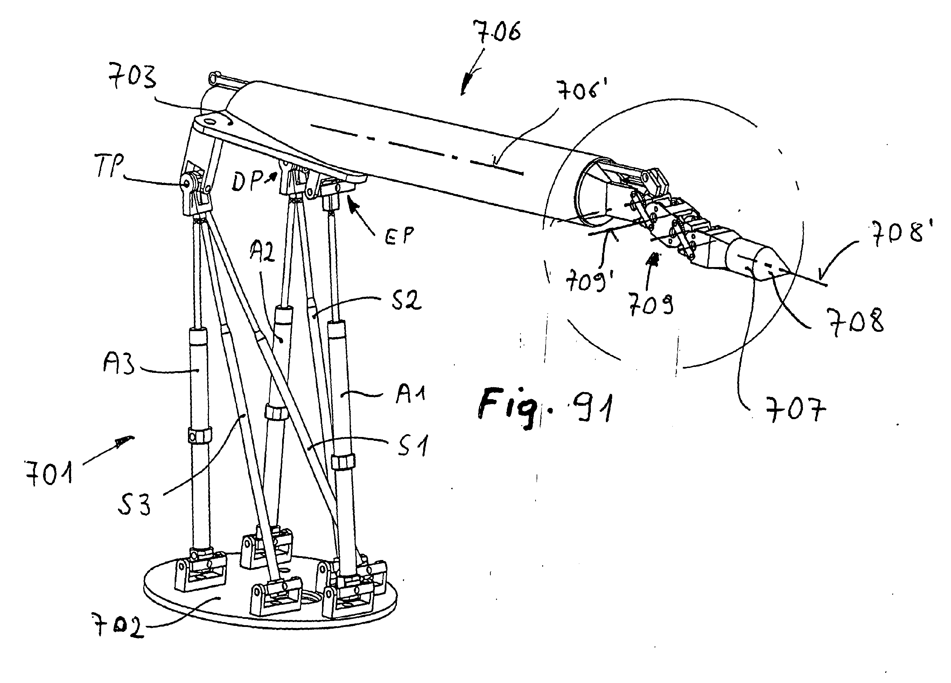

Die Fig 91 zeigt rein schematisch eine erste Ausführungsform eines erfindungsgemäßen Roboters 701. Der Roboter 701 besteht im wesentlichen aus einer festen Plattform 702, einer darauf aufbauenden parallelkinematischen Vorrichtung 705, einer von ihr bewegten beweglichen Plattform 703 samt fest mit ihr verbundenem Arm 706 -und einer einen Werkzeugträger 707 aufweisenden Spitze.

Die Parallelkinematik 705 ist im dargestellten Ausführungsbeispiel eine sogenannte 3-2-1 Kinematik mit drei Aktuatoren und drei Stäben fester Länge. Auf der festen Plattform 702 sind die drei Aktuatoren A1, A2 und A3 und die drei Stäbe fester Länge S1, S2 und S3 in Einzelgelenken (Fußpunkte) gelagert. Ihre Angriffspunkte (Kopfpunkte) auf der beweglichen Plattform 703bestehen aus einem Tripelpunkt TP, einem Doppelpunkt DP und einem Einzelpunkt EP.

Fest mit der beweglichen Plattform 703 verbunden und damit Teil von ihr ist der Arm 706, der an seinem vorderen Ende eine bewegliche Spitze mit einem Werkzeugträger 707 und dem angedeuteten Werkzeug 708 trägt. Zwischen dem Werkzeugträger 707 und dem Arm 706 ist eine Gliederkette 709 mit mehreren zueinander parallelen Achsen 709' angeordnet. Um diese Achsen können die Glieder der Gliederkette 709 und damit der Werkzeugträger 707 nach Art menschlicher Finger gekrümmt werden.

Darüber hinaus ist im dargestellten Ausführungsbeispiel die Spitze 705, somit im wesentlichen die Gliederkette 709 samt Werkzeugträger 707 und dem Werkzeug, um die Armachse 706' rotierbar, sodass, bei Verdrehung um diese Achse 706' um etwa 90° das Werkzeug je nach Drehrichtung im wesentlichen normal zur Zeichenebene zum Betrachter hin oder vom Betrachter weg orientiert wäre.

Die Besonderheit der dargestellten Vorrichtung ist nun, dass selbst durch relativ geringe. Längenänderungen der Aktuatoren A1, A2, A3 durch die große Länge des Armes 3 ein großer Arbeitsbereich für den Werzeugträger 707 erreicht wird. Nutzbar wird dieser Arbeitsbereich aber nur dadurch, dass sich die Orientierung des Werkzeugträgers 707 bezüglich des Armes 706, beziehungsweise bezüglich dessen vorderer Endfläche, durch die Gliederkette 709 und, was bevorzugt wird, die Drehmöglichkeit bezüglich der Armachse 706' in Weiten Grenzen verändern lässt, so dass zu jedem Arbeitspunkt, den die Spitze des Werkzeuges 708 anfahren kann, auch ein großer Bereich an zugänglichen Richtungen für die Werkzeugächse 708' erreichbar ist, was für die praktische Benutzung unbedingt erforderlich ist.

Es sei dazu nur darauf verwiesen, dass beim Schweißen, beim Lackieren, beim Ergreifen oder Absetzen von Gegenständen, etc. die Orientierung des jeweiligen Werkzeugs am Arbeitspunkt genauso wichtig ist wie die Erreichbarkeit des Arbeitspunktes.

Die erfindungsgemäße Kombination macht sich die hohe Genauigkeit der Bewegungen parallelkinematischer Vorrichtungen und die genaue Wiederholbarkeit dieser Bewegungen zu nutze, da mit herkömmlicher serieller Kinematik die angestrebten Ziele nicht erreichbar wären. Nur diese hohe Genauigkeit, verbunden mit dem hervorragenden Verhältnis von Nutzlast zu toter Last und die Anordnung der Armachsen bzw. Fingerachsen 706' und 709' nahe des Werkzeuges 708, wodurch nur geringe Massenträgheitsmomente überwunden werden müssen und ein eventueller Positionierungsfehler sich nicht mehr fortpflanzt, ermöglicht es, diese Ziele zu erreichen.

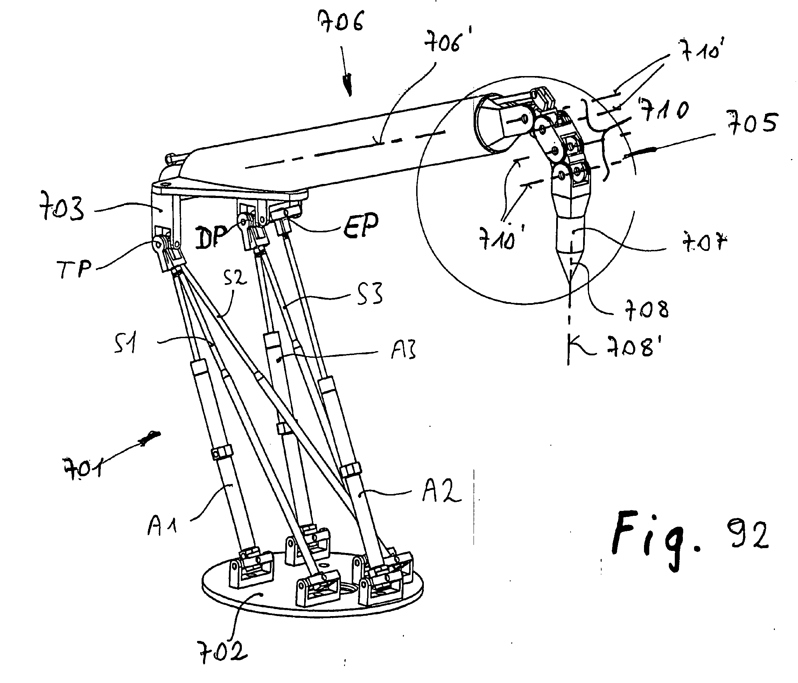

Die Fig. 92 zeigt eine mit der Fig. 91 ähnliche Vorrichtung, bei der nur der Aufbau der Gliederkette 710 etwas anders ist, weiters ist im Vergleich zur Fig. 91 gezeigt, wie schon durch eine geringe Längenänderung der Aktuatoren A1, A2, A3 eine deutliche Änderung der Position des vorderen Endes des Armes 706 erreicht wird, und wie die Orientierung der Werkzeugachse 708' leicht und im großen Ausmaß geändert werden kann.

In Anbetracht der Übereinstimmung der parallelkinematischen Vorrichtung wurde auf eine Eintragung der Bezugszeichen großteils verzichtet, auch von der Spitze 705 wurden nur die wesentlichen Elemente mit Bezugszeichen versehen.

Es soll noch kurz erläutert werden, dass die Gliederkette 710 in Fig. 92 durch Segmente von Zahnrädern kinematisch miteinander gekoppelt ist, während diese Kopplung bei der Gliederkette 709 durch Synchronisierstangen, die in Fig. 91 gut sichtbar sind, erfolgt. Es ist schließlich der Aufbau der Spitze 705 nicht auf die dargestellten Ausführungsformen beschränkt, sondern kann durch jede Art von Gelenk, beispielsweise durch das aus der US 2005/0040664 A bekannte, ersetzt werden.

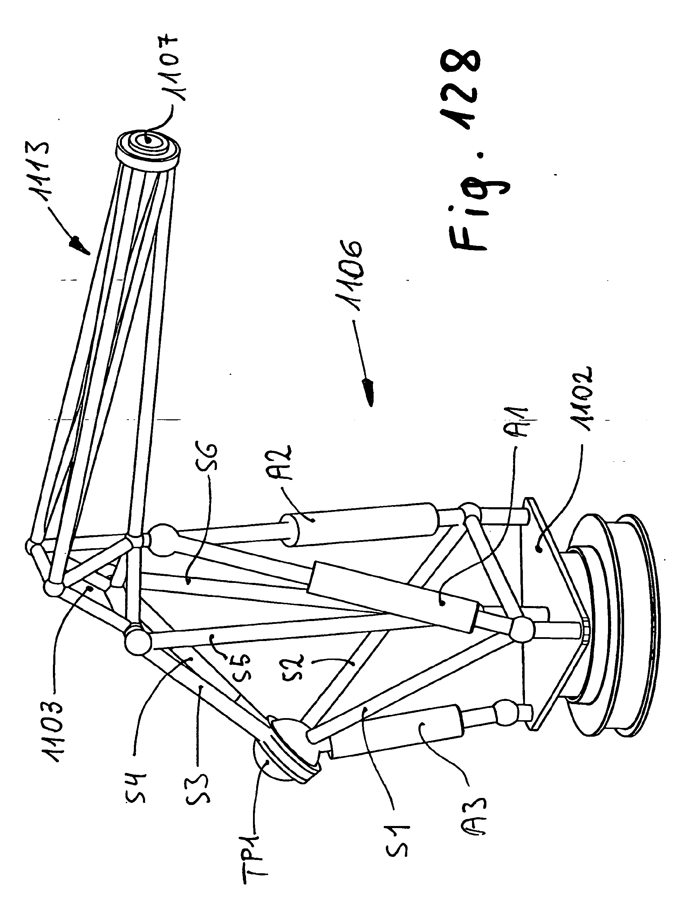

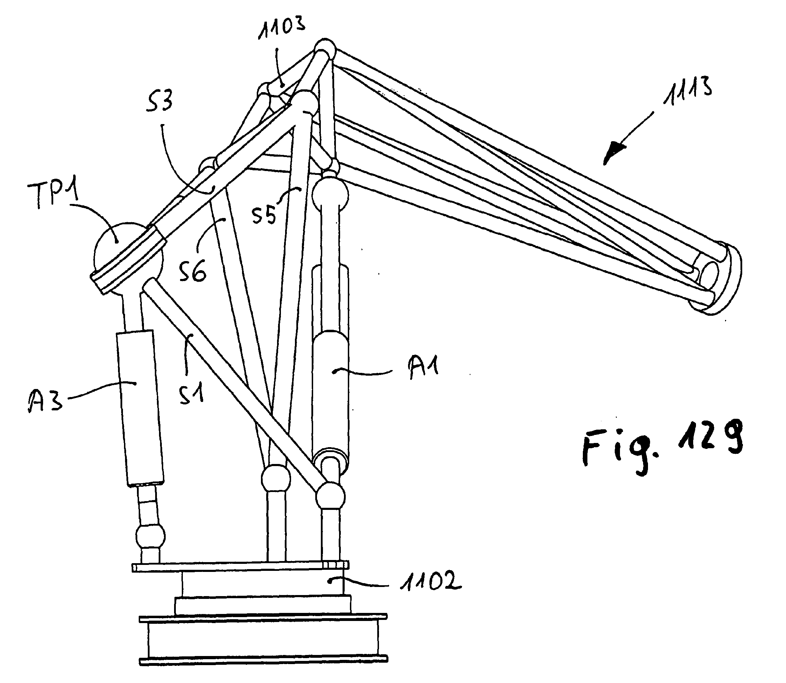

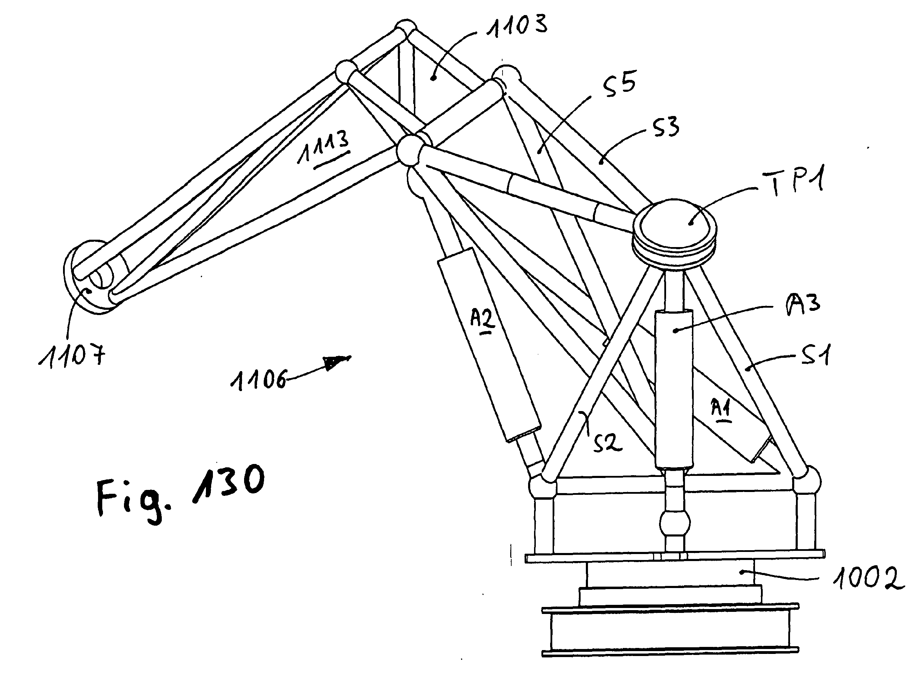

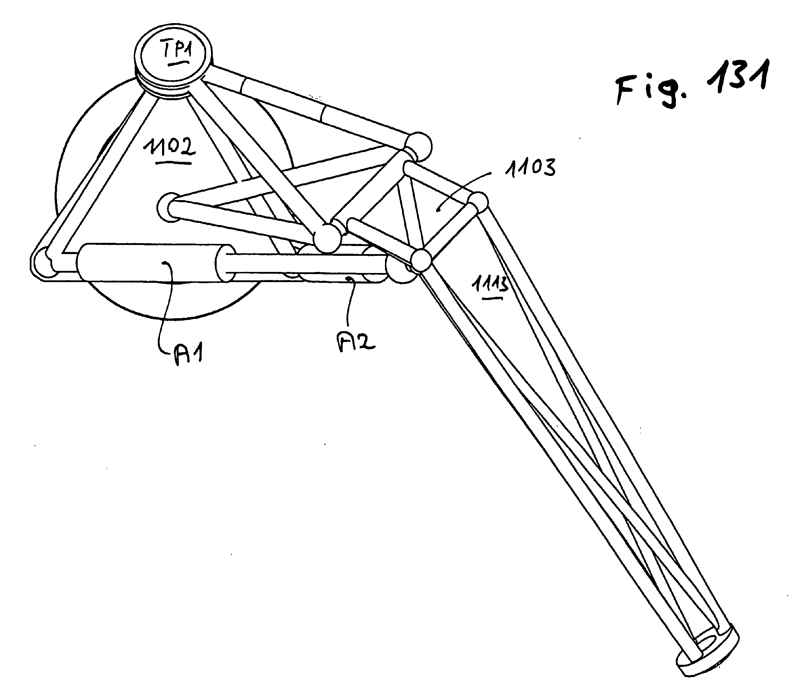

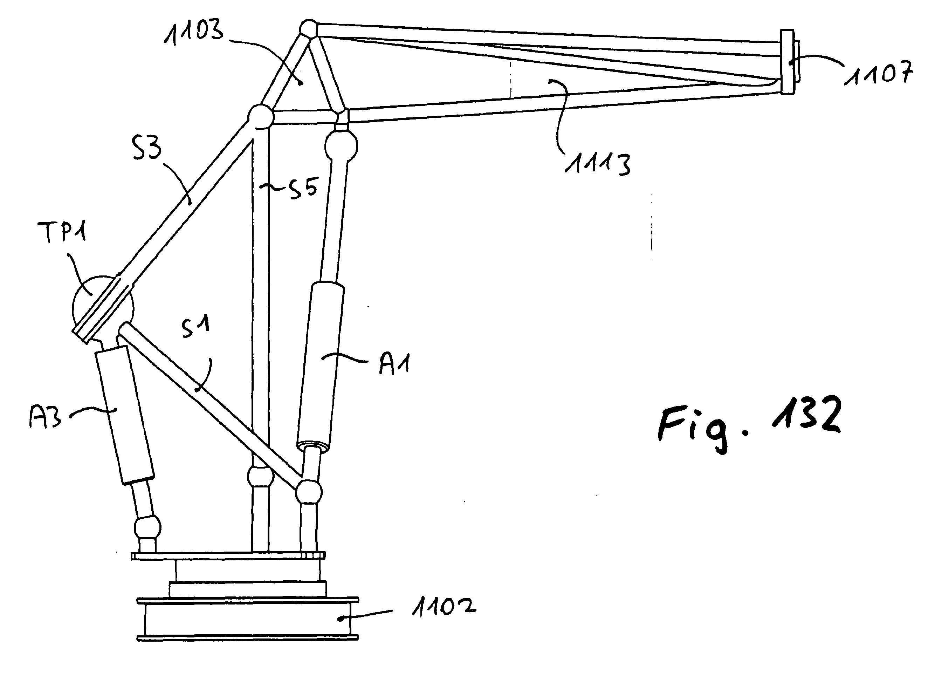

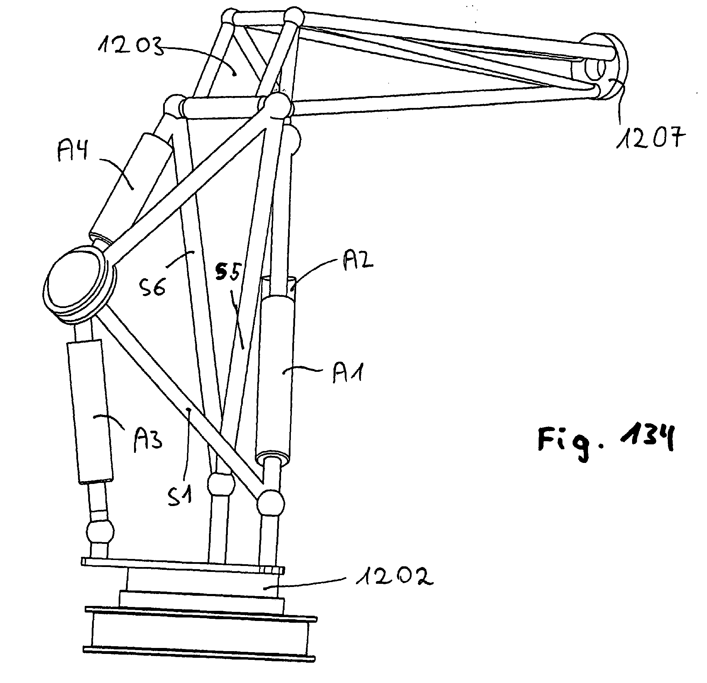

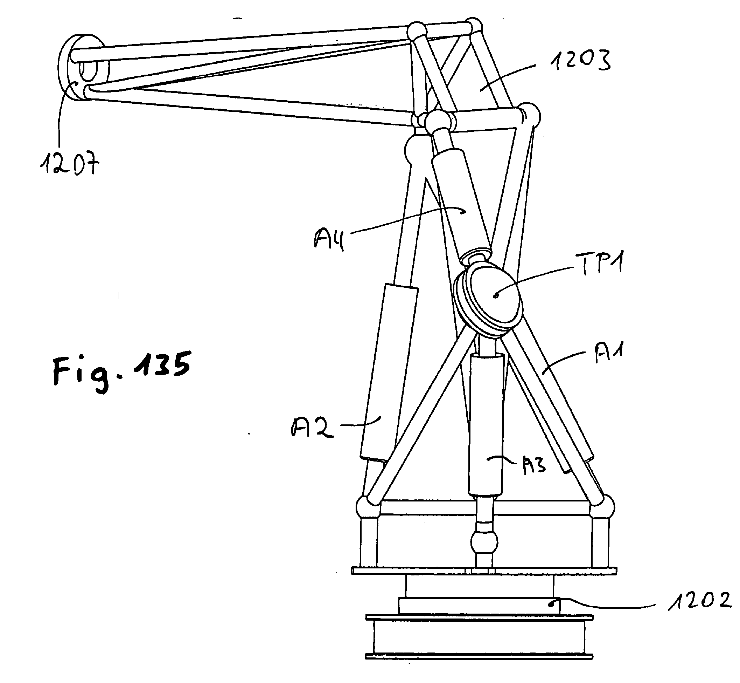

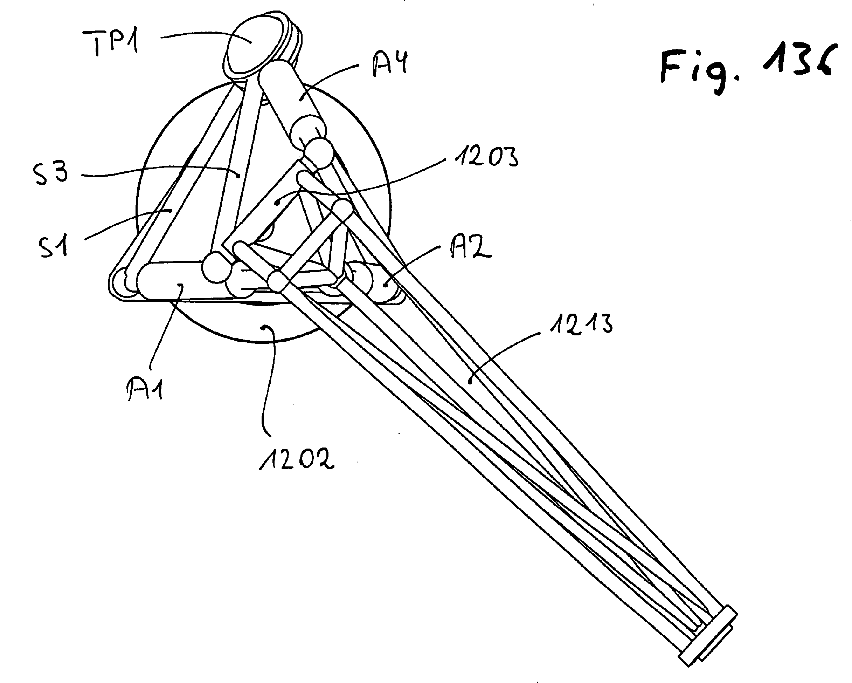

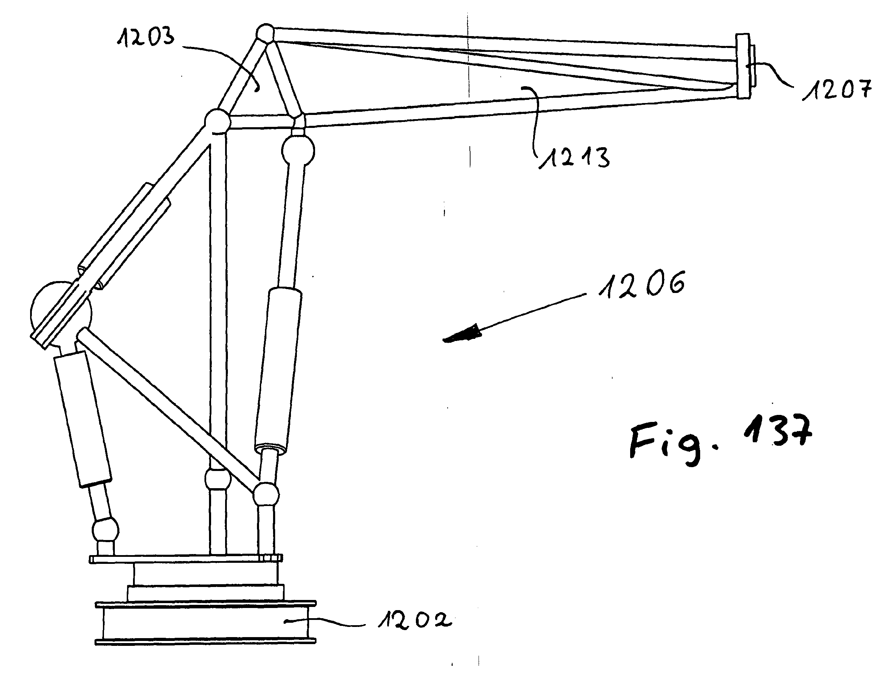

Es ist auch nicht zwingend notwendig, dass die parallelkinematische Vorrichtung 701 eine 3-2-1 Kinematik ist, hier kann jede parallelkinematische Vorrichtung verwendet werden, wie anhand der Fig. 128-137, die zwei Vorrichtungen mit diesem Aspekt der Erfindung zeigen, erläutert werden soll:

Die Fig. 128-132 stellen eine erste Variante einer besonders belastbaren und auch torsionssteifen, dreiachsigen Parallelkinematik 1106 mit Symmetrieebene und mittels eines Armes 1113 lang ausgebildeter beweglicher Plattform 1103 dar. Dabei sind auf einer beweglichen Plattform 1102, die gegebenenfalls gegenüber einem Inertialsystem verfahrbar oder um eine Hochachse drehbar ausgebildet sein kann, zwei Aktuatoren A1, A2 beweglich gelagert, deren Kopfpunkte einen Doppelpunkt in der Symmetrieebene an der beweglichen Plattform bilden. Ohne Beschränkung der Allgemeinheit sind zwei Stäbe S1, S2 könstanter Länge in den gleichen Fußpunkten wie die Aktuatoren A1, A2 angelenkt. Sie enden in einem Tripelpunkt TP1, in dem auch ein in der Symmetrieebene liegender Aktuator A3 seinen Kopfpunkt hat. Vom Tripelpunkt TP1 führen zwei Stäbe S3, S4 zu Doppelpunkten an der beweglichen Plattform 1103. Von diesen Doppelpunkten führt jeweils einweitere Stab S5, S6 konstanter Länge zu einem gemeinsamen Doppelpunkt an der festen Plattform 1102.

Die bewegliche Plattform 1103, als Stabwerk ausgebildet, ist mit einem ebenfalls als Stabwerk ausgebildeten Arm 1113, der an seinem freien Ende einen Werkzeugträger 1107 aufweist, fest verbunden. Dieser Arm ist mit großer Länge ausgeführt, typischerweise entspricht diese Länge zumindest der Länge der parallelkinematischen Vorrichtung zwischen den Fuß- und Kopfpunkten, als unterste Schranke kann man 50 % dieser Länge veranschlagen, die Obergrenze wird durch das Gewicht und die Steifigkeit des Armes 1113 bestimmt. Das bedeutet, dass bei Verwendung eines leichten Werkzeuges (das können Sonden, Messgeräte, Spraypistolen, Lichtquellen, etc. sein) sehr lang ausgebildet sein kann.

Diese Vorrichtung weist, wie ersichtlich, an der beweglichen Plattform 1103 drei Doppelpunkte auf, zu einem führen die zwei Aktuatoren A1, A2, zu den beiden anderen die Stäbe- S3, S5 bzw. S4, S6. Dabei werden die Stäbe S3, S4 durch Verfahren des Tripelpunktes TP1 fußpunkterregt, der Aktuator A3 bewirkt mit den beiden Stäben S1, S2 diese Fußpunktverschiebung.

Durch die geometrische Ausgestaltung der parallelkinematischen Vorrichtung 1106 ist diese trotz der nur dreiachsigen Beweglichkeit sowohl im Besitz eines großen Aktionsradius, wie aus den Figuren direkt hervorgeht, als auch mit hoher Steifigkeit, insbesondere Torsionssteifigkeit, versehen. Die Vorrichtung bleibt in ihrer symmetrischen Konfiguration, solange die beiden Aktuatoren A1 und A2 gleiche Länge aufweisen.

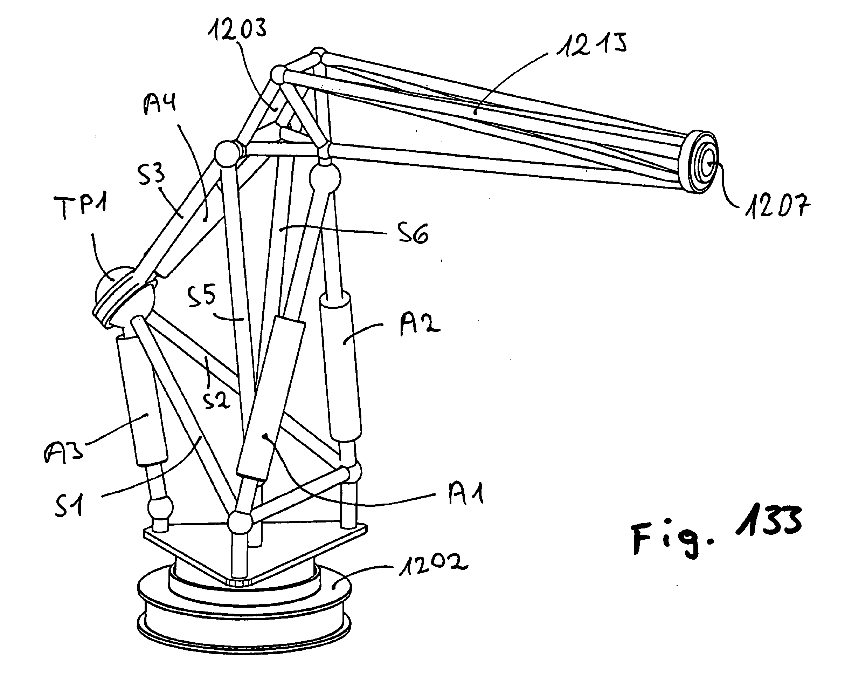

Eine Weiterbildung dieser Vorrichtung ist aus den Fig. 133-137 ersichtlich. Dabei wurde nur der Stab S4 der Vorrichtung gemäß den Fig. 128-132 durch einen Aktuator A4 ersetzt, die Vorrichtung 1206 ist somit vierachsig beweglich. Zufolge des oben geschilderten und aus den Zeichnungen ersichtlichen Ausbaues bedeutet dies, dass die bewegliche Plattform 1203 auch dann aus der symmetrischen Lage heraus beweglich ist wenn die Aktuatoren A1 und A2 gleiche Länge aufweisen und diese nur einnimmt, wenn darüberhinaus der Aktuator A4 die gleiche Länge aufweist wie der Stab S3. Durch Änderung der Länge des Aktuators A4 wird bei der gegebenen Geometrie eine Verdrehung im wesentlichen um die Längsachse des Armes 1213 erreicht und so eine Positionierung und Orientierung des Werkzeugträgers 1207 in weitem Umfang ermöglicht. Das Ausmaß der gewonnenen Beweglichkeit zeigen die Figuren.

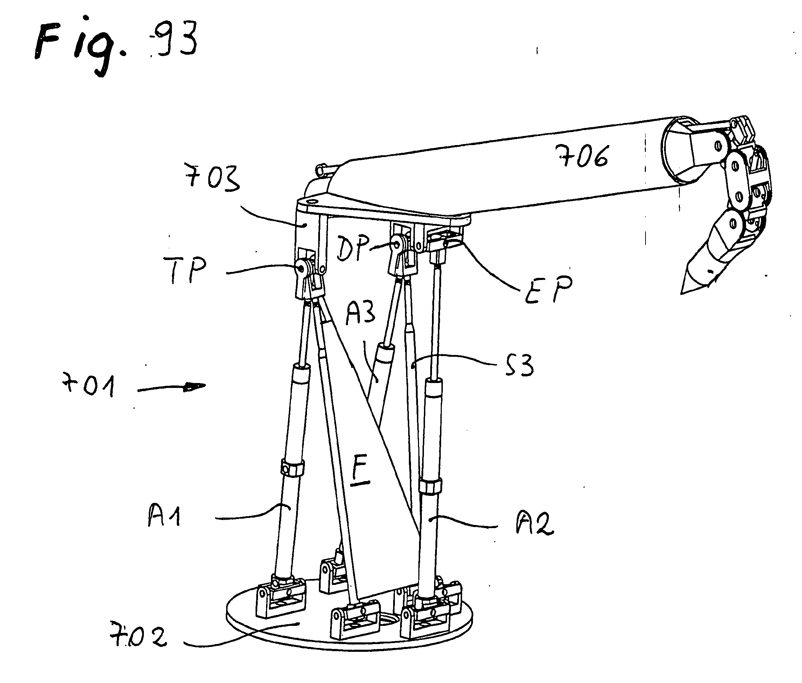

Zu beachten ist, dass die beiden Vorrichtungen sich nur durch den Ersatz des Stabes durch den Aktuator unterscheiden, dass daher derartige Vorrichtungen einfach und kostengünstig herzustellen sind, wenn einmal die Größe und Belastung festgelegt sind. Auch ein nachträgliches Aufrüsten ist, bei Kinematiken gemäß dem Stand der Technik (siehe Fig. 93 und 94) völlig unmöglich, bei erfindungsgemäßen Vorrichtungen ein Leichtes. Es ist auch direkt ersichtlich, dass die konstruktive Ausbildung der Doppelpunkte einheitlich erfolgen kann, was die Losgrößen vervielfacht und damit die Herstellungskosten extrem reduziert und die Lagerhaltung vesentlich vereinfacht.

Auf den Werkzeugträger 1107 bzw. 1207 kann selbstverständlich ein beweglicher Werkzeughalter, etwa der gemäß den Fig. 91-93 montiert werden, um die Möglichkeiten der Orientierung-des Werkzeuges weiter zu erhöhen; der Arm 1113 bzw. 1213 muss nicht als Stabwerk ausgebildet sein, sondern kann analog zu den Armen der Fig. 91-93 oder auch gänzlich anders aufgebaut sein, wesentlich ist für diesen Aspekt der Erfindung, dass das Längenverhältnis Parallelkinematik/Arm von zumindest 0,5, bevorzugt von zumindest 1 erreicht wird.

Auch die Fig. 43 bis 53 zeigen eine Variante des erfindungsgemäßen Prinzips, einen langen Arm mit der beweglichen Plattform einer Parallelkinematik zu verbinden, um große Reichweite mit mannigfaltigen Bewegungsmöglichkeiten eines Roboters od.dergl. zu verbinden. Die Kinematik insgesamt besteht wiederum aus einem auf einer festen Plattform 102 aufgebauten parallelkinematischen Bereich 101 und der beweglichen Plattform 104, auf der ein aus einem Stabwerk bestehender Arm 106 fest angeordnet ist bzw. einen Teil dieser beweglichen Plattform 104 bildet. Um eine Armachse 121 am freien Ende des Armes 106 ist ein Werkzeugträger 103 verschwenkbar befestigt, die Verschwenkung um diese Achse 121 erfolgt im dargestellten Ausführungsbeispiel durch eine hydraulische Zylinder-Kolben-Einheit 122.

Die Parallelkinematik 101 besteht aus drei Aktuatoren und aus drei Stäben fester Länge und ist, so wie bei den Beispielen gemäß den Fig. 91 und 92, als 3-2-1 Kinematik ausgebildet. Aus Gründen der Übersichtlichkeit wurde auf die Einzeichnung der Tripelund Doppelpunkte verzichtet, dies ist im Hinblick auf den ähnlichen Aufbau zu den anderen Vorrichtung dieser Beschreibung für den Fachmann ohne Verlust an Information möglich.

Aus der Zusammenschau der Fig. 43 bis 53 ist ersichtlich, in welch weitem Bereich der Werkzeugträger 103 bezüglich der festen Plattform 102 sowohl verfahren als auch orientiert werden kann, und dies trotz nur relativ geringer Längenänderungen der Aktuatoren und des Stellantriebes 122 für die Verschwenkung um die Handachse 121.

Die Fig. 54 bis 64 zeigen eine Variante, bei der die parallelkinematische Vorrichtung 201 aus vier Aktuatoren A1 bis A4 und zwei Stäben gleicher Länge S1, 209 besteht. Der Arm 206 ist so, wie beim vorigen Beispiel aufgebaut, doch ist es, wie die Figuren zeigen, möglich, durch den zusätzlichen Freiheitsgrad der parallelkinematischen Vorrichtung 201 die Orientierung und-die Reichweite des Werkzeugträgers 203, weiter zu erhöhen. Insbesondere geht aus der Zusammenschau der Figuren Klar hervor, dass schon bei geringer Verstellung der Aktuatoren auch eine Bewegung quer zur bevorzugten Bewegungsrichtung möglich ist, und dass es dabei ebenso möglich ist, die Orientierung des Werkzeugträgers 203 auf gewünschte Weise entweder zu erhalten oder zu verändern. Die Figuren zeigen auch die hohe Beweglichkeit der beweglichen Plattform 204, die ja wesentlich für die Orientierung des Werkzeugträgers 7 mitverantwortlich ist.

Als Aktuatoren können pneumatische oder hydraulische Zylinder-Kolben-Einheiten bzw. elektrische Linearantriebe, Spindeltriebe oder andere Linearantriebe verwendet werden.

Die Fig. 80 bis 90 zeigen eine erfindungsgemäße Variante, die deshalb bedeutsam ist, weil der Arm 606 die Form einer parallelkinematischen Vorrichtung aufweist, bei der die Lage eines Punktes des Werkzeugträgers 603 bezüglich der beweglichen Plattform 604 durch drei Stäbe konstanter Länge, die am Werkzeugträger einen Tripelpunkt ausbilden, fixiert wird. Die Position bezüglich der verbleibenden Freiheitsgrade, im gezeigten Ausführungsbeispiel das Verschwenken um drei zueinander normal verlaufende, durch den Tripelpunkt gehende Achsen, ist durch drei Aktuatoren 632, 633 und 634 variabel einstellbar.

Wenn beispielsweise durch entsprechende Ausbildung des Lagers des Tripelpunktes ein Verdrehen des Werkzeugträgers 603 um die Achse des Armes 606 verhindert wird, oder ein anderer Freiheitsgrad fixiert wird, so kann auf einen der drei Aktuatoren verzichtet werden. Durch die in beiden Fällen hohe Beweglichkeit des Werkzeugträgers 603 kommt die eigentliche Parallelkinematik 605 auch für einen weiten Arbeitsbereich mit drei Aktuatoren und drei Stäben konstanter Länge aus, ist daher einfach und kostengünstig herzustellen.

Aus einem Vergleich der Figuren untereinander geht die hohe Beweglichkeit der Orientierung des Werkzeugträgers 603 auch bei praktisch unverändertem Arbeitspunkt hervor.

Auch die Fig. 72 bis 79 zeigen eine Variante dieses Aspektes der Erfindung. Der Werkzeugträger 531 ist um zwei Achsen gelenkig am Arm 506 angeordnet, der parallelkinematische Abschnitt 505 besteht, wie im letztgenannten Beispiel, aus drei Stäben konstanter Länge und drei Aktuatoren, der Arm 506 bestehf aus fünf Stäben konstanter Länge, die die Lage einer Handachse 503 bezüglich der beweglichen Plattform 504 definieren. Um diese Handachse 503 schwenkbar ist eine weitere Handachse verdrehbar gelagert. Die Lage des Werkzeugträgers 7 bezüglich dieser beiden einander unter einem rechten Winkel schneidenden Achsen wird durch zwei Antriebe 532, 533 bestimmt. Diese Antriebe greifen einerseits passend an der beweglichen Plattform 504 an und mit ihrem anderen Ende am Werkzeugträger 503.

Es ist aus den Darstellungen der erläuterten Ausführungsbeispiele ersichtlich, dass die Parallelkinematiken in ihren verschiedenen Ausführungsformen an die jeweiligen Arbeitsgebiete angepasst sind, und dass die für-Parallelkinematiken nicht übliche Verwendung von Stäben konstanter Länge in Verbindung mit Aktuatoren bei geeigneter Wahl der Anordnung dieser Elemente eine ausreichend hohe Beweglichkeit zur Verfügung stellt. Insbesondere in Verbindung mit der 3-2-1 Kinematik und der Verwendung von Pseudo-tripelpunkten und Pseudodoppelpunkten erzielt man auf unerwartet einfache und damit kostengünstige Weise kinematische Vorrichtungen, die von ihrer Genauigkeit und Tragfähigkeit den parallelkinematischen Vorrichtungen des Standes der Technik entsprechen, dabei aber erlauben, ihre Bewegungen in Form geschlossener mathematischer Lösungen anzugeben, sodass die Verfahrbarkeit wesentlich rascher und genauer möglich ist als im Stand der Technik.

Dazu kommt, dass durch die spezielle Ausgestaltung der beweglichen Plattform, denn der Arm ist gemäß dieses Aspektes der Erfindung ein fester Bestandteil dieser Plattform, und durch das Vorsehen zumindest einer Schwenkachse für den Werkzeugträger im Bereich des Überganges vom Arm zum Werkzeugträger, ein Ausmaß des Arbeitsbereiches und -eine Flexibilität der Orientierung des Werkzeugträgers und damit des Werkzeugs erzielt wird, die im Stand der Technik bei bisher keiner Vorrichtung erreichbar war.

Die Fig. 93 zeigt eine Variante eines Roboters, der ähnlich dem der Fig. 92 aufgebaut ist. Dabei sind aus mechanischen Gründen die beiden Stäbe fester Länge S1 und S2, die beide am Tripelpunkt TP ihren Kopfpunkt haben, und daher nur um die Verbindungsgerade ihrer Fußpunkte drehen können, zu einer Fläche F vereint. Dadurch erreicht man eine wesentliche Erhöhung der-mechanischen Steifigkeit und somit eine weitere Gewichtsersparnis samt einer Vereinfachung des merchanichen Aufbaues des Tripelpunktes TP. Selbstverständlich können bei allen gezeigten Ausführungsformen dieser Beschreibung die Zeigerpaare (Kraftecke) von Stäben fester Länge zu solchen Flächen umgebildet werden.

-Selbstverständlich ist-die Erfindung nicht auf die dargestellten Ausführungsbeispiele beschränkt und kann verschiedentlich abgewandelt werden. So kann beispielsweise auch bei den Ausführungsformen gemäß den Fig. 91 bis 93 der Arm 706, statt aus einem geschlossenen, rohrartigen Gebilde zu bestehen, aus einzelnen Stäben, somit einem Stabwerk, aufgebaut sein. Die Betätigungsorgane und Antriebe für die Verschwenkung des Werkzeugträgers um die verschiedenen ihm zur Verfügung gestellten Schwenkachsen können anders ausgebildet sein als in den dargestellten Beispielen und es können selbstverständlich auch parallelkinematische Vorrichtungen verwendet werden, die statt mit Aktuatoren veränderlicher Länge mit lageveränderlichen Fußpunkten bewegt werden. Diese Arten von parallelkinematischen Vorrichtungen sind aus dem Stand der Technik bekannt, ebenso wie die Anwendungsgebiete bzw. die kinematischen Grundlagen, die es für den Fachmann auf dem Gebiet der Kinematik möglich machen, die für das jeweilige Anwendungsgebiet günstigste Form an kinematischer Vorrichtung zu bilden.

In den Darstellungen wurden, wie bereits mehrfach dargelegt, die Tripelpunkte bzw. die Pseudotripelpunkte und die Doppelpunkte bzw. die Pseudodoppelpunkte im allgemeinen nicht in ihrem konstruktiven Aufbau dargestellt, meist wurde zur Vermeidung einer Überfrachtung der Zeichnung ein Zusammenfließen der Stabumrisse als Darstellung gewählt. Selbstverständlich bedeutet dies aber nicht, dass die so quasi als Einheit dargestellten Stäbe zueinander unbeweglich wären, es wird damit nur ihr Angreifen an einen gemeinsamen Punkt bzw. einen Pseudo-gemeinsamen Punkt angezeigt.

Die bewegliche Plattform kann, wie aus den Zeichnungen deutlich ersichtlich ist, die unterschiedlichsten Formen aufweisen und, wie in den Fig. 91 bis 93, tatsächlich einer Plattform ähneln, sie kann aber auch, wie bei den Vorrichtungen entsprechend den Fig. 72 etc. in ein starres Stabwerk aufgelöst sein, an dessen Knoten die Stäbe der Parallelkinematik angreifen. Schließlich ist es auch möglich, dass die bewegliche Plattform 6 eine Art Platte oder dergleichen trägt, wie im Beispiel gemäß der Fig. 86, um eine ausreichend stabile und doch leichte Befestigungs und Angriffsmöglichkeit für die Stäbe, die den Arm bilden, und die Betätigungseinrichtungen die den Werkzeughträger verschwenken, zu

Die feste Plattform schließlich ist nicht zwingend wirklich raumfest oder fest bezüglich eines Inertialsystems zu denken, sondern kann ihrerseits auf Rollen, Rädern od.dergl. beweglich sein, inbesondere wenn der Roboter 1 große Ausmaße aufweist und beispielsweise in der Fertigung von LKWs, als Kran, im Schiffsbau od.dergl. eingesetzt wird.

Wesentlich für diesen Aspekt der Erfindung ist die Kombination einer Parallelkinematik mit einem länglichen Arm, der auf der beweglichen Plattform montiert ist und zumindest einer Drehachse im Bereich des Überganges vom Arm zum Werkzeugträger. Schon das Vorsehen weiterer Drehachsen oder eine Vervielfachung der Achsen stellt Ausgestaltungen dar, eine eventuelle Beweglichkeit des Armes bezüglich der beweglichen Plattform ebenso. Die Länge des Armes, die notwendig ist, um die von der Erfindung angestrebten Ziele zu erreichen, kann vom Fachmann der Kinematik in Kenntnis der Erfindung und des Anwendungsgebietes leicht bestimmt werden, die Definition der Punkte, zwischen denen die Länge gemessen wird, kann wegen der zahllosen Ausgestaltungen und Varianten schwanken. De facto fast immer einsetzbar sind der geometrische Schwerpunkt der Fuß- bzw. Kopfpunkte der Parallelkinematik und die Lage der Drehachse, die der Drehachse des Werkzeugträgers in den Beispielen entspricht. Diese muss natürlich nicht die Armachse (sofeme es eine solche überhaupt gibt) schneiden, doch lässt sich ein Bezugspunkt (Tripelpunkt am Werkzeugträger, Zentrum des Kardangelenkes), der die Beweglichkeit des Werkzeughalters bezüglich des Armes verkörpert, stets finden.

Als erfindungsgemäß brauchbaren, unteren Wert der so definierten Armlänge kann man 50 % -der mittleren Länge der Aktuatoren und Stäbe in der kürzesten Konfiguration der Parallelkinematik ansehen, bevorzugt zumindest 100 % dieser Länge. Wie aus den Figuren ersichtlich ist, sind in der Praxis auch deutlich höhere Werte nützlich einsetzbar.

### Anwendung der Erfindung im Hinblick auf die Ausgestaltung der Kraftecke:

Der in der Folge besprochene Aspekt der Erfindung bezieht sich auf parallelkinematische Vorrichtungen, bei denen die bewegliche Plattform über Stäbe mit der festen Plattform verbunden ist, wobei die Fuß und Kopfpunkte der Stäbe an der jeweiligen Plattform ortsfest vorgesehen sind und zumindest zwei Stäbe auf einer der Plattformen, bevorzugt der beweglichen Plattform, einen gemeinsamen Angriffspunkt, somit einen Doppelpunkt oder Pseudodoppelpunkt, aufweisen, ein sogenanntes Krafteck.

Eine Form eines derartigen kinematischen Grundgebildes besteht nun erfindungsgemäß aus einem Stab fester Länge, im folgenden kurz Stab genannt, und einem Stab veränderlicher Länge, somit einem Aktuator, und wird im folgenden Krafteck genannt. Einer der Hauptvorteile eines solchen Gebildes ist die Möglichkeit, die Bewegung des gemeinsamen Kopfpunktes bezüglich der festen Plattform in geschlossener Form berechnen zu können, ein anderer, ebenfalls sehr wesentlicher Punkt ist, dass derartige Gebilde in verschiedenen Kombinationen die Schaffung individuell an die Gegebenheiten und Notwendigkeiten angepasster Parallelkinematiken erlauben, sodass nach einer Art Baukastenprinzip die Kosten für Entwicklung, Zertifizierung, Lagerhaltung, etc. extrem reduziert werden können.

Es soll an dieser Stelle speziell darauf hingewiesen werden, dass parallelkinematische Vorrichtungen nicht zwangsweise nur aus Stäben bestehen, die ausschließlich auf Zug oder Druck beansprucht sind, sondern dass es auch parallelkinematische Vorrichtungen gibt, bei denen auf einen oder mehrere der an sich notwendigen sechs Stäbe verzichtet wird und bei denen durch entsprechende Einschränkung der Beweglichkeit anderer Stäbe die Festlegung der Freiheitsgrade erfolgt, wobei aber durch die Einschränkung der Gelenkigkeit an den Angriffspunkten die entsprechenden Stäbe auch Biegebeanspruchungen und/oder Torsionsbeanspruchungen ausgesetzt sind.

Die eingangs erwähnter aus der Praxis bekannte rotatorische parallelkinematische Vorrichtung (KUKA, ABB) ist in diesem Kontext nicht als Stabkinematik anzusprechen und gehört daher in diesem Zusammenhang nicht zu den relevanten Vorrichtungen, soll aber wegen dieser Unterschiede anhand_der Fig. 94 und 95 besprochen werden:

Die Fig. 94 zeigt einen Roboter gemäß dem Stand der Technik. Dieser Roboter verfügt über eine feste Plattform 802 die gegebenenfalls um eine vertikale Achse 814 gegenüber einer mit dem Fundament verbundenen oder verfahrbaren Baugruppe 801 drehbar montiert oder verbunden sein kann. Um eine horizontale Achse 815 drehbar ist ein Hebel 811 montiert, an dessen anderem Ende, um eine Achse 812 verschwenkbar, ein Arm 3 befestigt ist. An seiner Spitze trägt der Arm einen Werkzeugträger 803, auf dem ein Werkzeug montiert werden kann. Die beiden Achsen 815, 812 verlaufen parallel zueinander. Es ist dies eine klassische serielle Kinematik.

Dieser vorbekannte Roboter weist den Antrieb für die Verschwenkung des Armes 813 um die Achse 812 am Hebel 811 auf, dieser Antrieb muss daher stets mit dem Hebel 811 mitbewegt werden was die Totlast erhöht und die notwendige Antriebskraft für die Verschwenkung des Hebels 811 um die Achse 815 und die Verschwenkung des gesamten Roboters um die Achse 814 drastisch erhöht. Dass darüber hinaus auch alle Bauteile entsprechend verstärkt ausgebildet sein müssen, ist ein weiterer unangenehmer Nebeneffekt, der nicht nur die Beanspruchung aller Lager erhöht sondern auch die notwendigen Antriebsleistungen weiter in die Höhe treibt.

Eine gewisse Abhilfe dieses Problems schafft der in Fig. 95 schematisch dargestellte, ähnlich ausgebildete Roboter, der ebenfalls aus dem Stand der Technik bekannt ist. Vergleichbare Bauteile wurden daher mit gleichen Bezugszeichen versehen. Auch dieser Roboter weist einen Fundamentteil 801 auf, auf dem, um eine vertikale Achse 814 verdrehbar die "feste Plattform" 802 ruht. Um eine horizontale Achse 815 dieser festen Plattform 802 verschwenkbar ist ein Hebel 811 angeordnet, der an seinem freien Ende, um eine Achse 812, die zur Achse 815 parallel verläuft, einen Arm 813 schwenkbar trägt. Anders als bei dem Roboter gemäß Fig. 94 ist nun an der festen Plattform 802 ein Antrieb 816 vorgesehen, der in Übereinstimmung mit der Verdrehung des Hebels 811 und in Relation zu dieser Verdrehung einen Antriebshebel 817 bezüglich des Hebels 811 verdreht. Dieser Antriebshebel ist mit einem Stellorgan 818 gelenkig verbunden, dessen anderes Ende am Arm 813 gelenkig angreift und ihn so in die gewünschte Winkelposition bezüglich des Hebels 811 bringt. Die Drehpunkte des Hebels 811, des Antriebshebels 817, des Stellorgans 818 und des Armes 813 bilden dabei ein Gelenkviereck in Form eines Parallelogramms, wobei von der festen Plattform 802 aus gegenüber einem frei wählbaren Koordinatensystem die Winkellage des Armes 811 und die Winkellage des Antriebshebels 817 verstellt werden können.

Dadurch ist es nicht mehr notwendig, den Antrieb für die Verschwcnkung des Armes bezüglich des Hebels mit letzterem zu transportieren, das genannte Gelenkviereck könnte als sehr spezielle parallelkinematische Vorrichtung angesehen werden: Teils rotatorisch: Antriebshebel 817 und Arm 813, teils als Fußpunktverschiebung eines passiven Stabes: Stellorgan 818.

Im Vergleich zu diesen massiven und komplexen Konstruktionen gemäß dem Stand der Technik werden im folgenden erfindungsgemäße Roboter mit zumindest vergleichbaren kinematischen Freiheiten und Möglichkeiten erläutert:

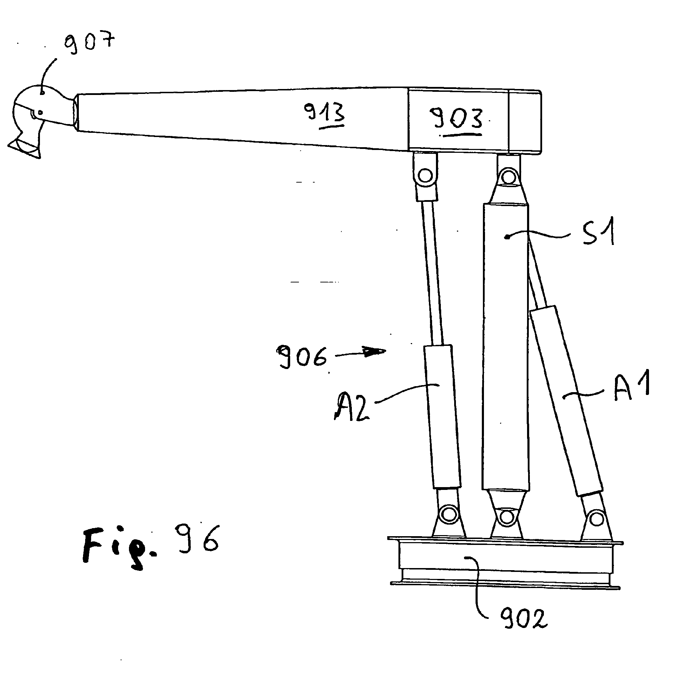

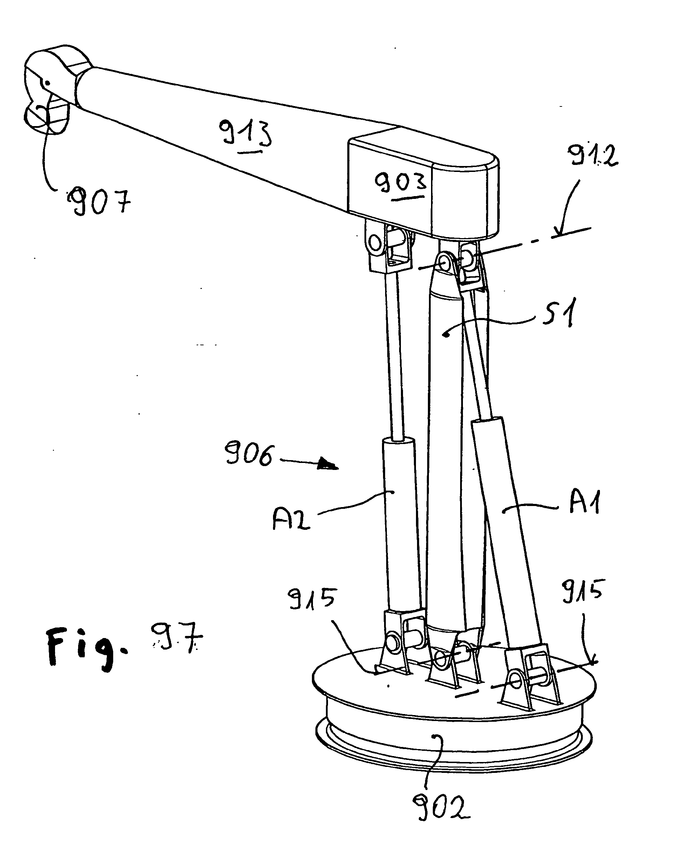

Einen erfindungsgemäßen Roboter, im wesentlichen entsprechend diesen beiden Industrierobotern, zeigen die Fig. 96 und 97 in schematischer Ansicht. Dieser Roboter weist eine erfindungsgemäß ausgebildete parallelkinematische Vorrichtung 906 auf, die auf einer festen Plattform 902 befestigt ist. Die feste Plattform 902 kann in Analogie zur festen Plattform 802 der Industrieroboter gemäß Fig. 94 bzw. 95 gegebenenfalls um eine Hochachse schwenkbar angeordnet sein, doch ist aus Gründen der Übersichtlichkeit diese Möglichkeit in den Figuren nicht dargestellt.

Die parallelkinematische Vorrichtung 906 weist ein Krafteck auf, bestehend aus dem Stab S1 und dem Aktuator A1. Die Lagerung der Fußpunkte dieser beiden Elemente erlaubt nur ein Verschwenken um bezüglich der festen Plattform 902 ortsfeste und zueinander parallel verlaufende Achsen 915, der Kopfpunkt der beiden Elemente ist als Doppelpunkt ausgebildet und ermöglicht ein Verschwenken um eine Achse 912, die zu den Achsen 915 parallel verläuft. Die Lage der Achse 912 und damit auch der auf ihr gelagerten mechanischen Verkörperung der beweglichen Plattform 903 ist durch die momentane Länge des Aktuators A1 bezüglich-der-festen Plattform 902 eindeutig festgelegt. Das bedeutet, dass die bewegliche Plattform 903 nur mehr um diese Achse 912 verschwenkbar ist, die jeweilige Winkelstellung um diese Achse wird durch die Länge des Aktuators A2 eindeutig festgelegt und damit auch die Orientierung des mit der beweglichen Plattform 903 fest verbundenen Armes 913. Der Werkzeughalter 907, starr oder beweglich am freien Ende des Armes 913 angeordnet, kann ähnlich den Werkzeughaltern der Industrieroboter ausgebildet sein.

Ein Vergleich der drei Konstruktionen verdeutlicht den leichten und eleganten Aufbau der -erfindungsgemäßen Vorrichtung, die ausschließlich günstig im Handel erhältliche Standardelemente verwendet, die mit hoher Genauigkeit bei geringen Kosten besorgt bzw. hergestellt werden können. Es sind sämtliche Elemente gut zugänglich und einfach zu warten, die zu bewegenden toten Massen sind extrem reduziert.

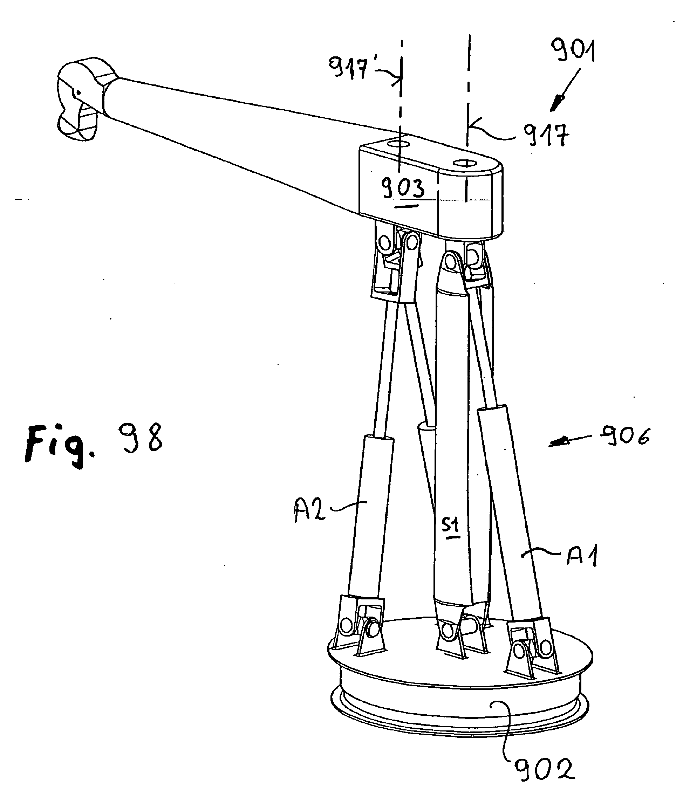

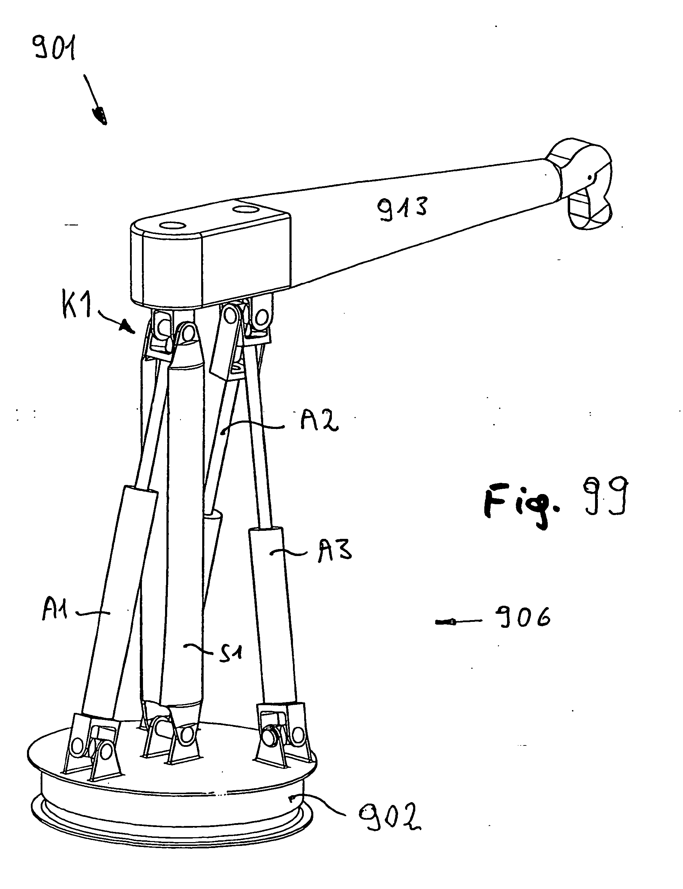

Eine Variante der Erfindung, bei der die Beweglichkeit der beweglichen Plattform 903 und damit des Werkzeughalters 907 gegenüber den Industrierobotern noch weiter erhöht ist, geht aus den Figuren 98 und 99 hervor. Diese beiden Figuren zeigen einen Roboter 901 ähnlich dem der Fig. 96, 97, mit einer parallelkinematischen Vorrichtung 906 zwischen der festen Plattform 902 und der beweglichen Plattform 903, bei der im Vergleich zum Roboter gemäß den Fig. 96, 97 der Aktuator A2 durch zwei Aktuatoren A2, A3 ersetzt ist.

Am Krafteck, das aus dem Stab S1 und dem Aktuator A1 gebildet wird, hat sich nur die Konstruktion des Kopfpunktes K1 geändert, das Kardangelenk ist um eine Hochachse 917 drehbar mit der beweglichen Plattform 903 verbunden, ebenso das Kardangelenk, an dem die beiden Aktuatoren A2, A3 angreifen, um eine dazu parallele Achse 917'. Dies ermöglicht eine Bewegung der beweglichen Plattform 903 nicht nur um die Achse 912 (Fig. 97), sondern auch um eine normal dazu verlaufende Achse. Um Verspannungen zu vermeiden, wurde der Fußpunkt des Aktuators A1 mit einer kardanischen Aufhängung ausgebildet, dies ist rein von der Konstruktion her aber nicht notwendig.

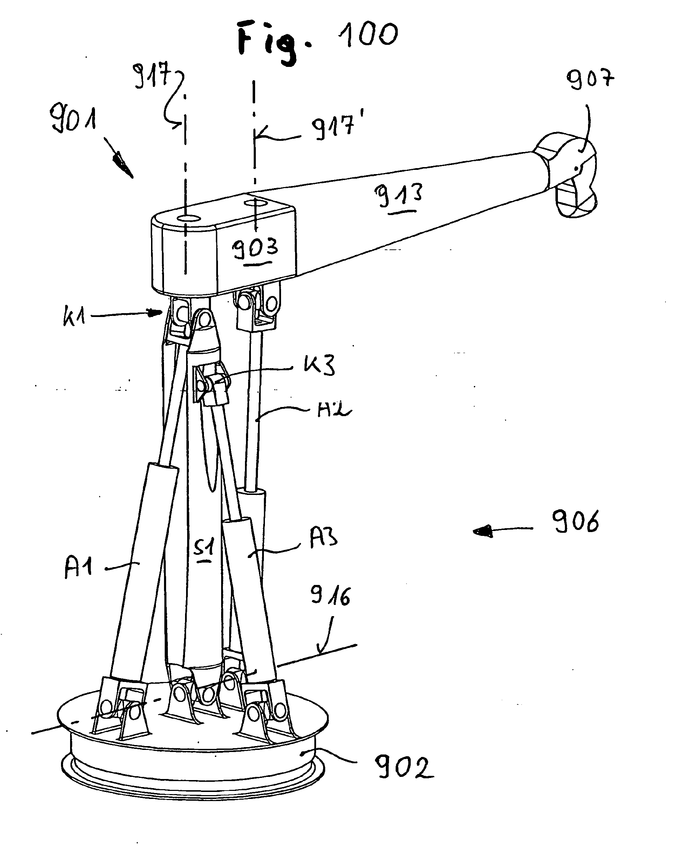

Eine Variante mit weiter erhöhter Beweglichkeit zeigt die Fig. 100: Ausgehend von einem Roboter 901 entsprechend den Fig. 98, 99 sind hier die Fußpunkte nicht als axiale Gelenke mit zueinander parallelen Schwenkachsen ausgebildet, sondern weisen die Form von Kardangelenken auf, wobei selbstverständlich alle kinematisch damit gleichwertigen Gelenke verwendet werden können. Das Verkippen der parallelkinematischen Vorrichtung 906 und damit der beweglichen Plattform 903 um die aus den drei fluchtend angeordneten Fußpunkten gebildete Kippachsachse 916 wird durch einen Aktuator A3 bewerkstelligt.

Der Kopfpunkt K3 des Aktuators A3 ist dabei passenderweise am Stab S1 vorgesehen, bildet somit einen Pseudotripelpunkt, sodass der Stab S1 je nach Betrachtungsweise als Teil des Kraftecks, gebildet aus dem Stab S1 und dem Aktuator A1, oder als Teil des Kraftecks, gebildet aus dem Stab S1 und dem Aktuator A3, angesehen werden kann. Selbstverständlich ist es möglich, den Kopfpunkt K3 gemeinsam mit dem Kopfpunkt K1 als echten Tripelpunkt auszubilden. Die Kopfpunkte sind wiederum drehbar um Achsen 917, bzw. 917' in der beweglichen Plattform 903 gelagert.

Weder von der Berechnung und Steuerung der Bewegung her, noch von der dynamischen oder statischen Belastung her bringt diese kombinierte Konstruktion Schwierigkeiten, die Einleitung von Biegekräften in den Stab S1 ist mechanisch leicht beherrschbar. Auch wird die Zugänglichkeit und Überprüfbarkeit der Vorrichtung durch diese vielfachen Bewegungsfreiheiten nicht eingeschränkt, speziell zu erwähnen ist, dass durch diese Weiterbildung die Masse der beweglichen Plattform 903 samt Arm 913 und Werkzeugträger 907 keine Änderung erfahrt, was bei seriellen Robotern undenkbar ist.

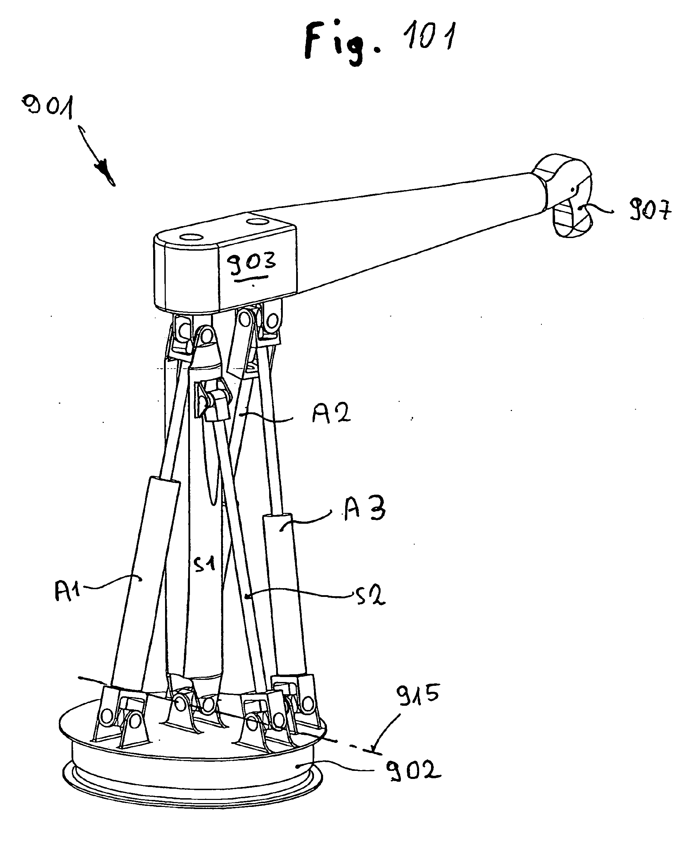

Die Fig. 101 zeigt einen noch ausgeprägter beweglichen Roboter 1, der aus einer Kombination des Roboters gemäß den Figuren 98, 99 mit einem Roboter gemäß der Fig. 100 besteht, wobei jedoch dessen Aktuator A3 durch einen Stab S2 mit fester Länge ersetzt ist, sodass dieser Roboter nur über das aus dem Stab S1 und dem Aktuator A1 gebildete Krafteck verfügt. Zufolge der konstanten Längen der Stäbe S1, S2 ist es durchaus möglich, diese beiden Stäbe samt ihren Fußpunkten, ähnlich wie dies in Fig. 93 dargestellt ist, durch ein flächiges Gebilde zu ersetzen, das um eine Achse 915 der festen Plattform 5 schwenkbar ausgebildet ist.

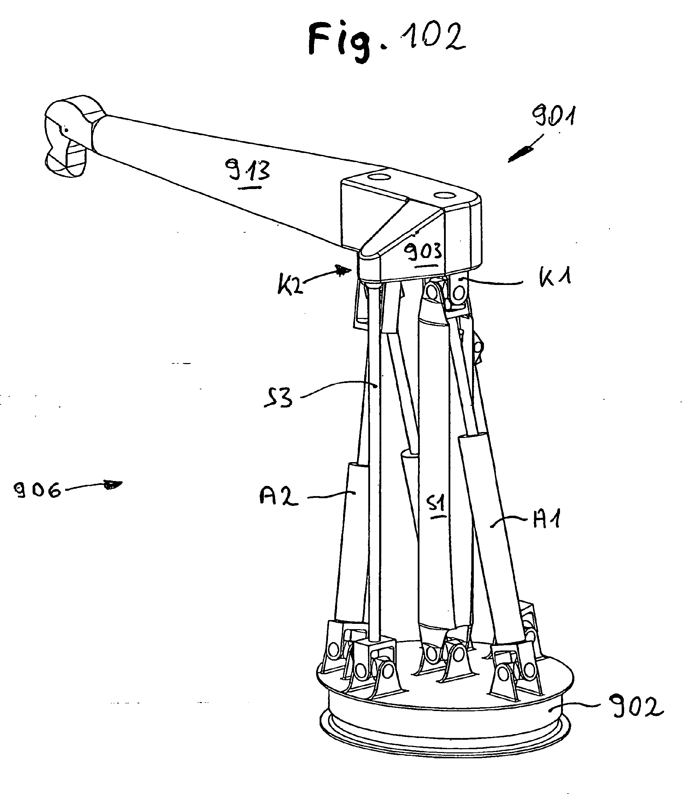

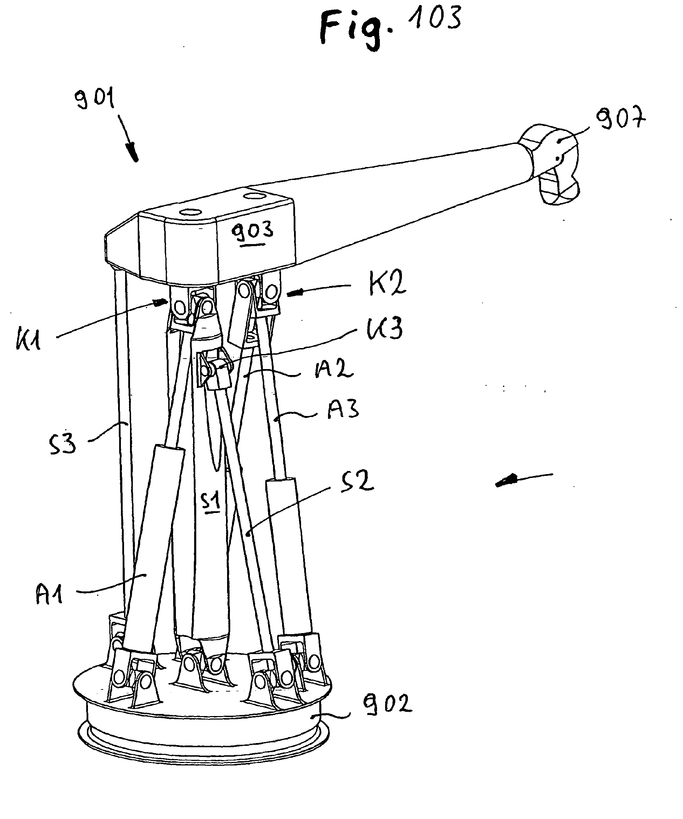

Die Fig. 102 und 103 zeigen eine weitere Ausgestaltung des Roboters 901 der Fig. 101, wobei die parallelkinematische Vorrichtung 906 dahingehend verändert wurde, dass die bewegliche Plattform 903 um die Verbindungsachse der beiden Kopfpunkte K1, K2 (Fig. 103) schwenkbar angeordnet ist und ihre Lage bezüglich dieser Schwenkachse durch einen Stab S3 konstanter Länge festgelegt wird.

Es wird somit bei dieser parallelkinematischen Vorrichtung 906 die Lage des Kopfpunkts K1 der beweglichen Plattform 903 bezüglich der festen Plattform 902 durch das Krafteck, gebildet aus dem Stab S1 und dem Aktuator A1, in Verbindung mit dem Stab S2 festgelegt. Die Lage des Kopfpunktes K2 hängt von der jeweiligen Länge der Aktuatoren A2, A3 ab, wobei deren bezüglich der festen plattform 902 feste Fußpunkte und der an der beweglichen Plattform 903 konstante Abstand zwischen den Kopfpunkten K1 und K2 die Lage des Kopfpunktes K2 bezüglich der festen Plattform 5 eindeutig festlegen. Der einzig noch verbleibende Freiheitsgrad der beweglichen Plattform 6, die Winkellage bezüglich der durch die beiden Kopfpunke K1, K2 gehenden Achse, wird durch den Stab S3 festgelegt.

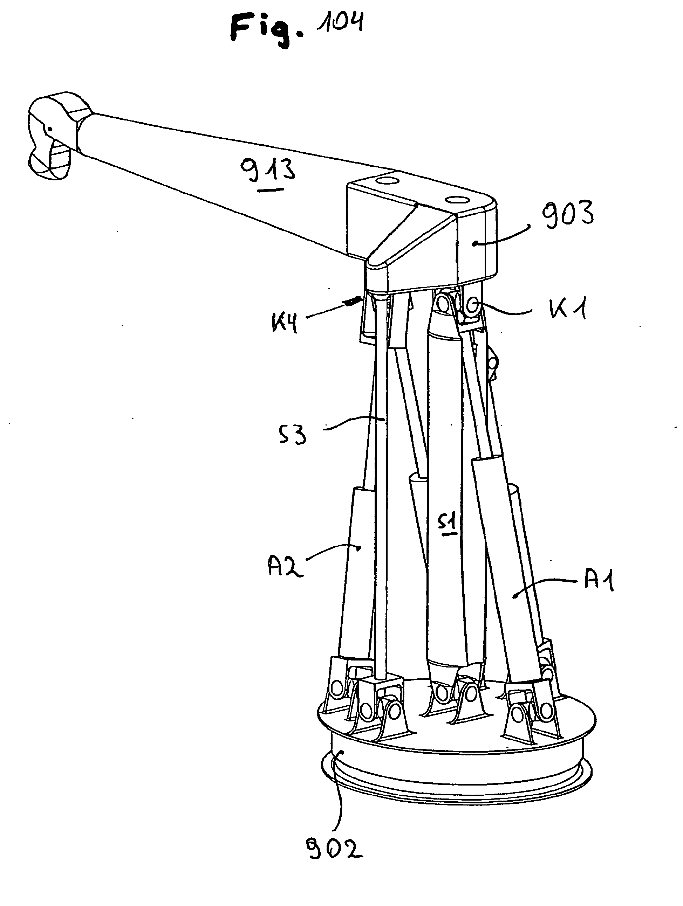

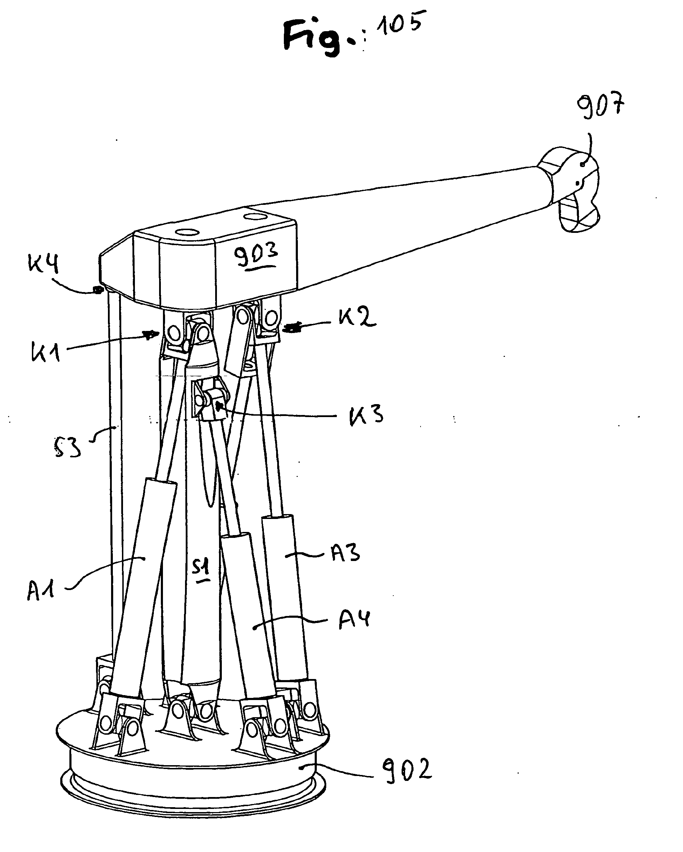

Der in den Fig. 104 und 105 dargestellte Roboter 906 ist die logische Weiterentwicklung des Roboters der Fig. 102, 103: Bei diesem Roboter wurde in der parallelkinematischen Vorrichtung 906 der Stab S2 durch einen Aktuator A4 ersetzt, wodurch die Beweglichkeit des Kopfpunktes K1 bezüglich der festen Plattform 902, wie sie der Roboter gem. Fig. 100 bereits aufgewiesen hat, wieder erreicht ist. Es soll nochmals darauf hingewiesen werden, dass das nicht vollständige Zusammenfallen der Kopfpunkte K1 und K3 für die Beweglichkeit, den einfachen Aufbau und die einfache Erstellung der Bewegungsgleichungen des Roboters 1 nicht nachteilig ist, auch die Einbringung eines Biegemomentes in den Stab S1 stellt in der Praxis keinen merklichen Nachteil dar, da die Größenordnungen dieser Biegekräfte, wie aus den Fig. 96 bis 104 für den Fachmann auf dem Gebiet der Festigkeitslehre unmittelbar ersichtlich ist, wesentlich kleiner sind als alle anderen auf den Stab S1 wirkenden Kräfte. Es soll auch nochmals darauf hingewiesen werden, dass die bewegliche Plattform trotz all dieser Ausgestaltungen eine praktisch unveränderte Masse aufweist.

In den Fig. 104 und 105 ist auch der Kopfpunkt K4 des Stabes S3 bezeichnet, dieser kann beispielsweise aus einem sphärischen Lager bestehen, das sich durch besonders kompakten Aufbau auszeichnet.

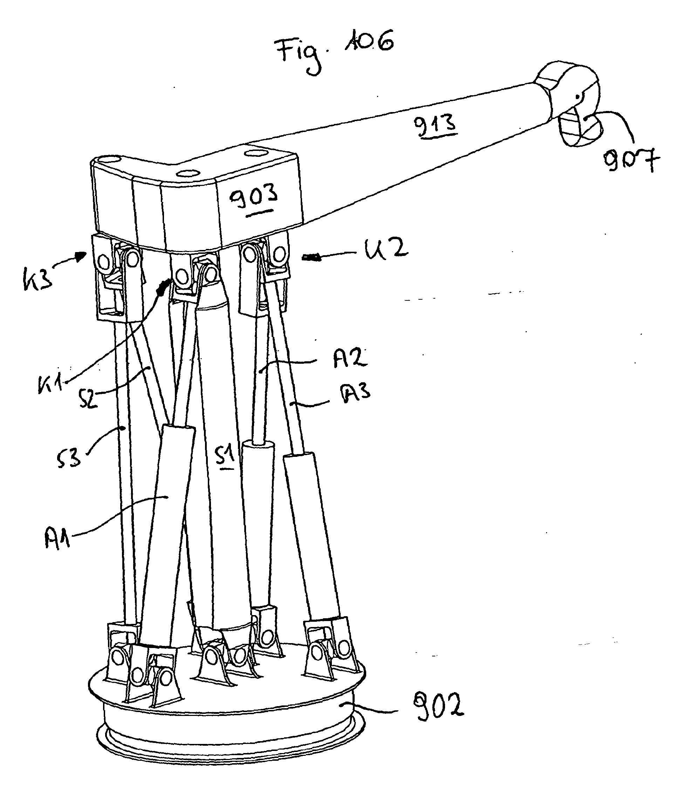

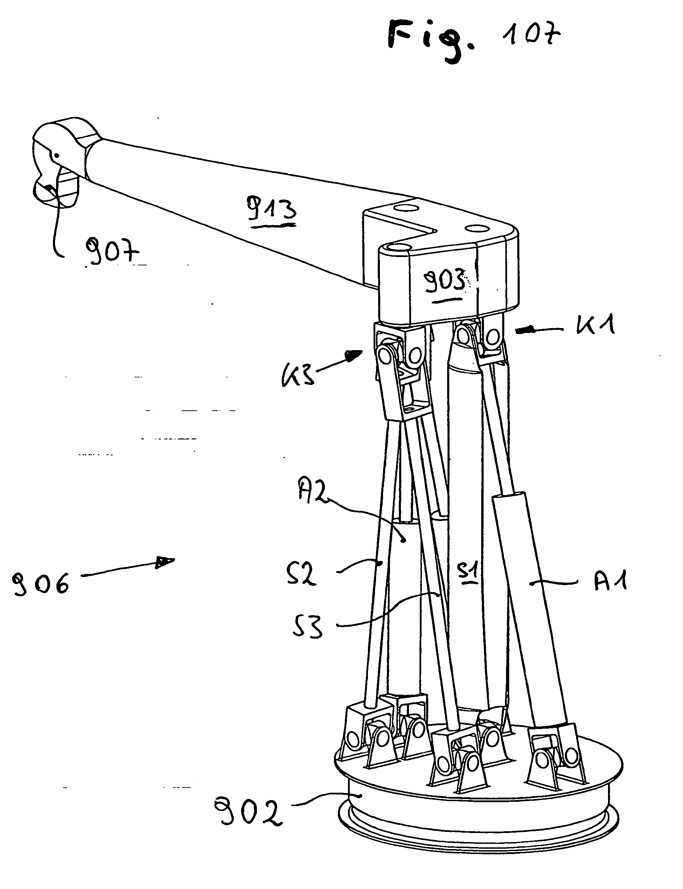

Eine weitere Ausgestaltung der Erfindung ist in Fig. 106 bis 108 dargestellt, hier wird durch das Vorsehen dreier praktisch gleichberechtigter Kopfpunkte K1, K2, K3 die Parallelkinematik 906 zu einer Art Gough-Plattform, wobei aber bei der klassischen Gough-Plattform alle Stäbe als Aktuatoren ausgebildet sind, während im dargestellten Ausführungsbeispiel ein Krafteck, gebildet aus dem Stab S1 und dem Aktuator A1, eine sogenannte Schere, gebildet aus den beiden Aktuatoren A2, A3 und eine weitere Schere, gebildet aus den zwei Stäben S2, S3, vorgesehen sind.

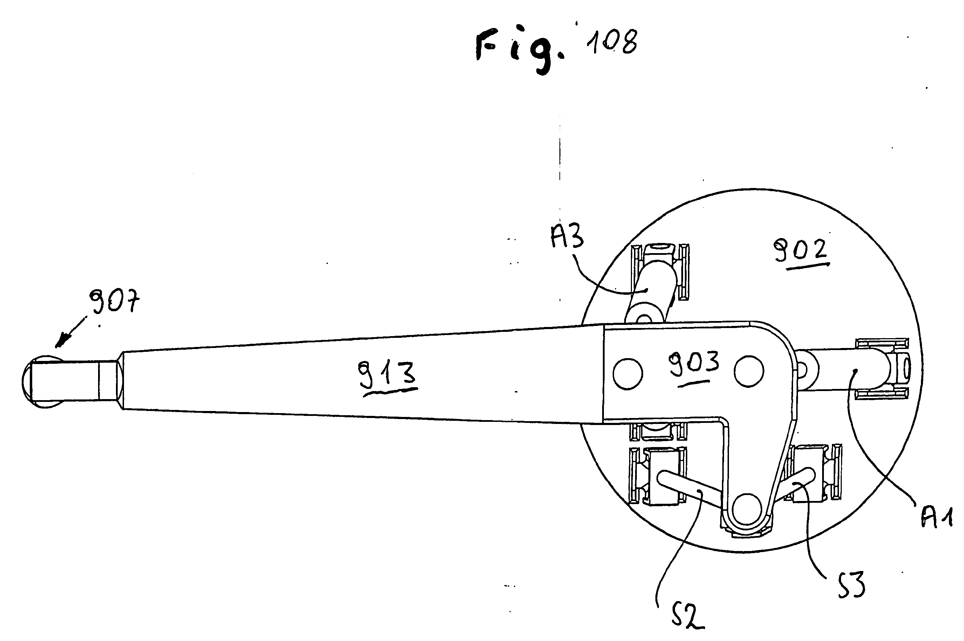

Wie aus der Zeichnung deutlich ersichtlich ist, können die Fuß- und Kopfpunkte untereinander-identisch-ausgebildet sein, sodass ein erfindungsgemäßer Roboter nach Art eines Baukastensystems hergestellt werden kann, wodurch die Lagerhaltung und die Kosten pro Stück durch die größeren Losgrößen günstig gehalten sein können. Insbesondere aus Fig. 108, die eine Draufsicht auf den erfindungsgemäßen Roboter zeigt, ist ersichtlich, dass die Zugänglichkeit zu den einzelnen Bauelementen in hohem Ausmaß gegeben ist, was die erfindungsgemäßen Roboter grundlegend und auf sehr vorteilhafte Weise von den seriellen Robotern gemäß dem Stand der Technik unterscheidet.

Die Erfindung ist nicht auf das dargestellte Ausführungsbeispiel beschränkt sondern kann selbstverständlich verschiedentlich abgewandelt werden. So können andere Kombinationen von Stäben mit Aktuatoren zu einem Krafteck im Sinne der Erfindung zusammengefasst werden, es können die Fußpunkte anders als dargestellt auf der festen Plattform 902 angeordnet werden, wenn auch die dargestellte möglichst orthogonalisierte und in Unterkombinationen der Fußpunkte fluchtende Anordnung vorteilhaft ist.

Dies auch dort, wo sie nicht kinematisch notwendig ist, beispielsweise weil die Einschränkung von Freiheitsgraden durch die Ausgestaltung der Lager erfolgt (Achsen 915 in Fig. 97), weil dies Vorteile bei der Berechnung und der Überschaubarkeit der parallelkinematischen Vorrichtung mit sich bringt und zumeist auch in der Fertigung günstiger ist, da beim Herstellungsprozess ein Umspannen der festen Plattform oder die Verwendung komplexer Teilungsvorrichtung vermieden wird.

Selbstverständlich ist es auch möglich, die dargestellten parallelkinematischen Vorrichtungen durch eine Kombination von Stäben mit Aktuatoren, die als Seile ausgebildet sind oder nur durch Seile zu erreichen, wenn die Belastung derartig ist, dass in den als Seilen ausgebildeten Elementen keine Druckbelastungen auftreten können.

Als Aktuatoren können pneumatische oder hydraulische Zylinder-Kolben-Einheiten verwendet werden oder es können elektrisch oder pneumatisch betriebene Spindelantriebe verwendet werden, auch Kugelumlaufspindeln und elektrische Linearantriebe sind je nach Anwendungsgebiet einsetzbar.

Bei der Auswahl der Antriebe spielt natürlich die Länge des Arbeitsbereiches des Aktuators, seine Belastung und sein Umfeld eine Rolle, für den Fachmann auf dem Gebiet der Herstellung von Handhabungsautomaten bzw. Kränen bzw. parallelkinematischen Vorrichtung allgemein können die passenden Antriebe in Kenntnis der Erfindung je nach dem Anwendungsgebiet leicht bestimmt werden.

### Anwendung der Erfindung auf besonders torsionsstabile Varianten mit geringen und über dem Bewegungsweg weitgehend linearen Antriebskräften:

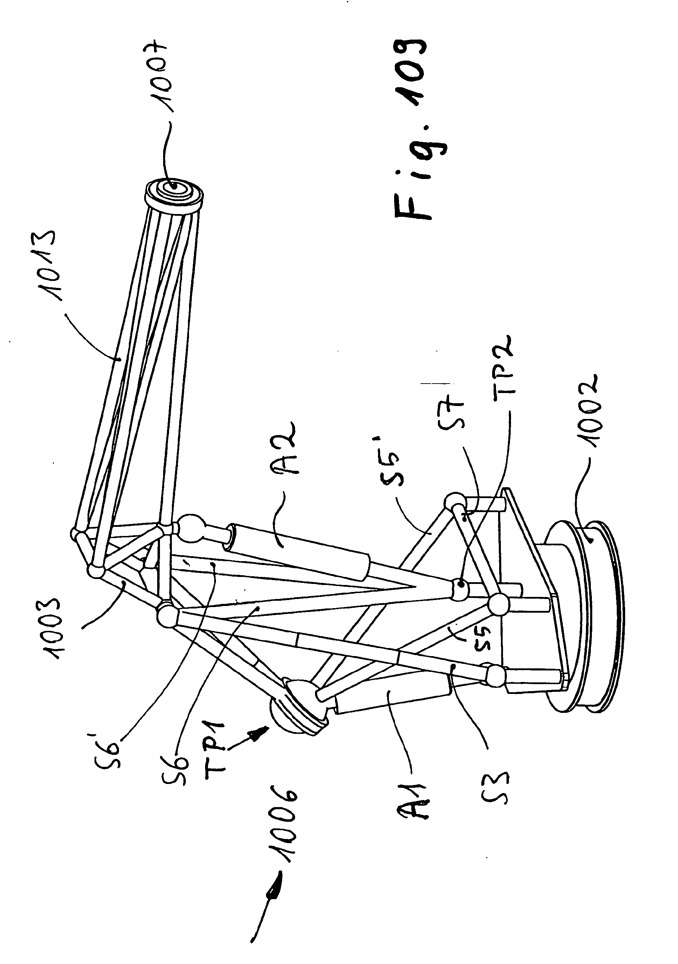

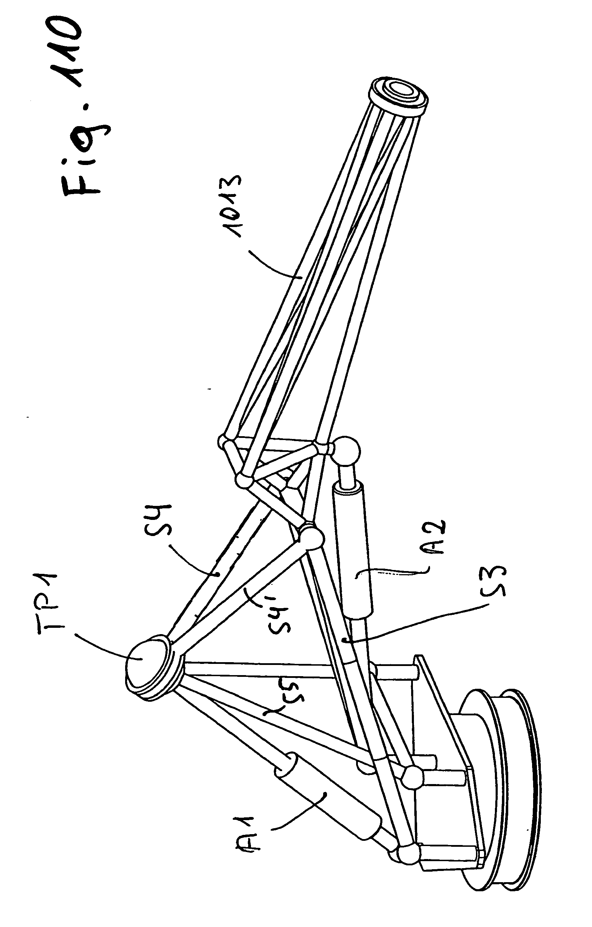

Die Fig. 109-112 zeigen eine erste Variante einer besonders torsionssteifen und dabei leichten Roboter- oder Krankonstruktion die folgenden Aufbau aufweist:

Auf einer, gegebenenfalls um eine Hochachse drehbaren oder entlang einer (nicht dargestellten) Fahrbahn verfahrbaren festen Plattform 1002 sind, symmetrisch zu einer Mittelebene der Vorrichtung 1006 zwei Stäbe S5, S5' gelenkig angelenkt und bilden mit ihren Kopfpunkten gemeinsam mit dem Kopfpunkt eines in der Symmetrieebene liegenden, in dieser aber um seinen Fußpunkt verschwenkbaren Aktuator A1 einen Tripelpunkt TP1 aus. Von einem an der festen Plattform in der Symmetrieebene liegenden, als Tripelpunkt ausgebildeten Fußpunkt TP2 führen zwei Stäbe fester Länge, S6 und symmetrisch dazu S6', zu zwei Anlenkpunkten der beweglichen Plattform 1003. Ein in der Symmetrieebene der Vorrichtung liegender Aktuator A2 führt vom Tripelpunkt TP2 ebenfalls zu einem Angriffpunkt auf der beweglichen Plattform 1003. Die bewegliche Plattform 1003 ist im dargestellten Ausführungsbeispiel als räumliches Stabwerk aufgebaut, wodurch die Montage von Werkzeugen, Messsonden, Greifern, Seilzeugen etc. erleichtert und das Gewicht gering gehalten wird. Mit zur beweglichen Plattform 1003 gehört ein ebenfalls als . Stabwerk ausgebildeter Arm 1013 mit einem schematisch an seinem freien Ende angedeuteten Werkzeugträger 1007.

Die beiden Kopfpunkte der Stäbe S6 und S6' an der beweglichen Plattform 1003 sind als Doppelpunkte ausgebildet und mittels Stäben S4, S4' mit dem Tripelpunkt TP1 verbunden. Dieser erscheint in der Zeichnung auf den ersten Blick als Mündungspunkt von fünf Stäben, doch muss bedacht werden, dass die Stäbe S5, S5' einerseits und die Stäbe S4, S4' andererseits sich jeweils wie ein starrer Körper bewegen und daher nicht doppelt gerechnet werden dürfen.

Weiters weist die Vorrichtung nach den Fig. 109-112 einen asymmetrisch verlaufenden Stab S3 auf, der im dargestellten Ausführungsbeispiel von einem der Anlenkpunkte an der beweglichen Plattform 1003 zu einem eigenen Fußpunkt außerhalb der Symmetrieebene an der festen Plattform 1002 führt und der die Lage der geschilderten Konstruktion symmetrisch zur Symmetrieebene sichert.

Weiters ist im dargestellten Ausführungsbeispiel ersichtlich, dass die Fußpunkte der Stäbe S5 und S5' mittels eines Stabes S7 miteinander verbunden sind, dieser dient nur der Übernahme von Querkräften, die durch die dreieckige Ausbildung der Stäbe S5, S5' auftreten.

Die Darstellung der Fuß- und Kopfpunkte erfolgt, wie bei allen die Kinematiken in ihrer Gesamtheit zeigenden Darstellungen dieser Beschreibung, rein schematisch, die reale Ausbildung dieser Punkte kann den verschiedenen Ausführungsformen, wie sie eingangs der Beschreibung erläutert worden sind, oder auch den Beispielen, die in den Fig. 91-108 angegeben sind, entnommen werden.

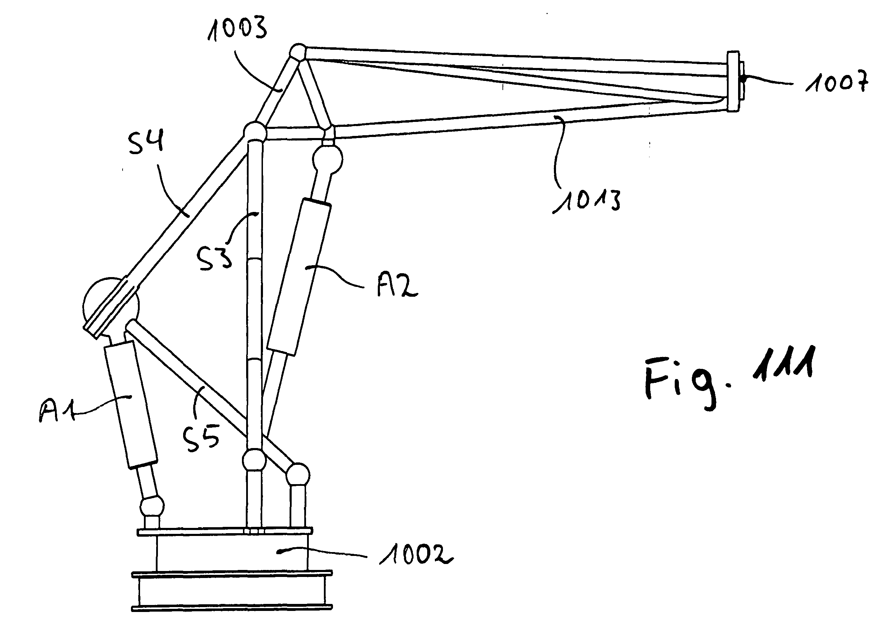

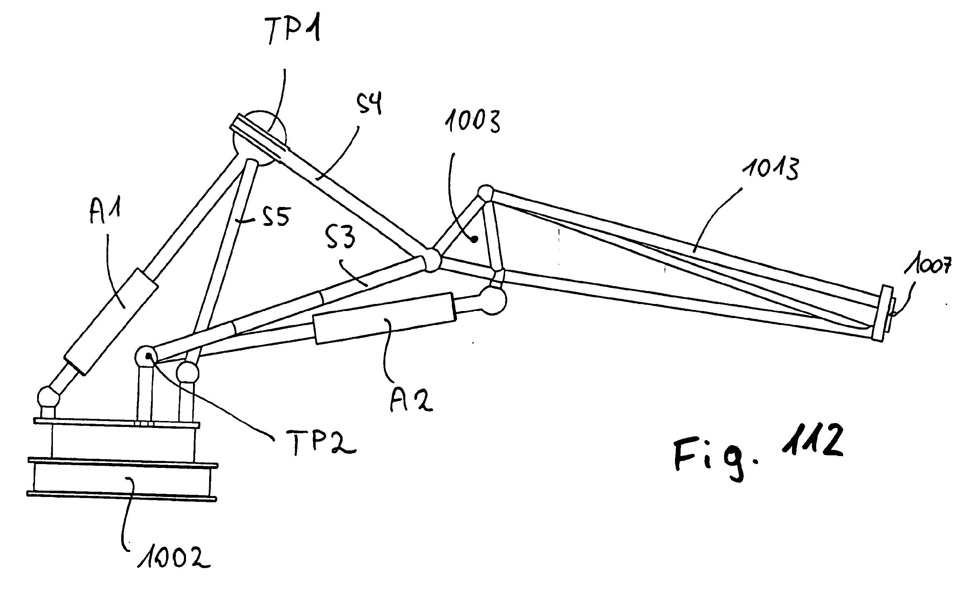

Einem Vergleich der Fig. 111 und 112 ist der große Aktionsradius bei diesem einfachen Aufbau zu entnehmen, bei dieser rein seitlichen Darstellung ist zu beachten, dass der Stab S3 die Stäbe S6, S6' verdeckt. Es ist daher die Einzeichnung des Bezugszeichens TP2 in Fig. 112 so zu verstehen, dass die Bezugslinie zum verdeckten Fußpunkt führt.

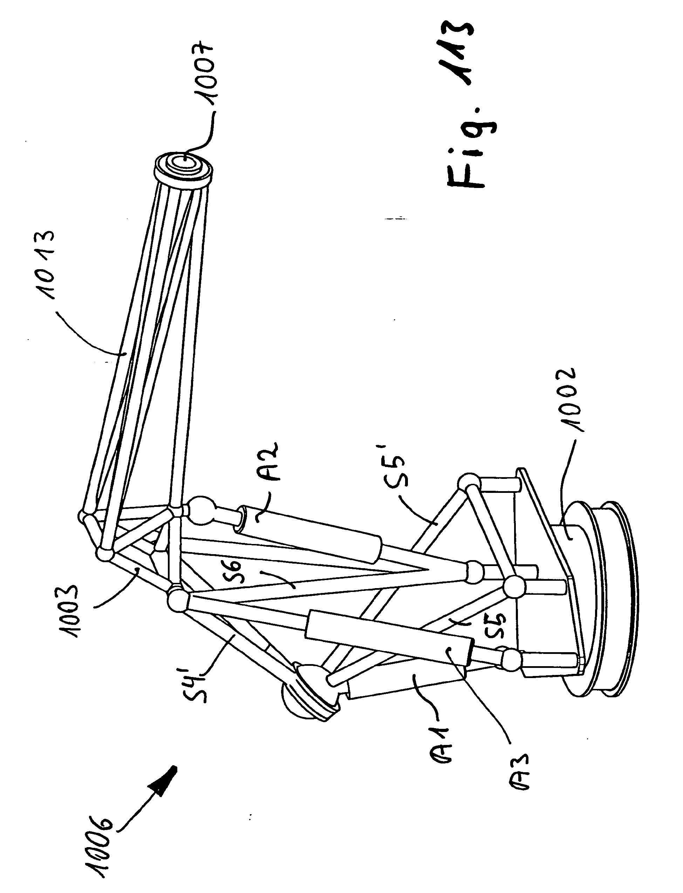

Die Fig. 113-117 zeigen eine Variante ähnlich der vorstehend beschriebenen, wobei nur der Stab fester Länge S3 durch einen Aktuator A3 ersetzt worden ist, wodurch es möglich wird, die bewegliche Plattform 1003 aus der Symmetrieebene zu bewegen. Die Hinweise auf die Symmetrie sind somit, wie bei einigen der obenstehenden Beispielen ausgeführt, auf die entsprechende Positionierung der beweglichen Plattform zu beziehen. Aus diesem Grunde werden auch die gleichen Bezugszeichen verwendet, die Folgen dieses Austausches sind die folgenden:

Die parallelkinematische Vorrichtung 1006 kann durch die Kombination des Tripelpunkte TP2 mit dem Aktuator A3 und die Schwenkfähigkeit um den Tripelpunkt TP1 aus der Symmetrieebene herausgeschwenkt werden, wodurch ihre Reichweite und auch, insbesondere wenn sie um eine (nicht dargestellte) Hochachse verdrehbar ist, der Bereich der-Orientierung -des Werkzeugträgers 1007 deutlich ansteigt. Wie ein Vergleich der Fig. 109-112 einerseits mit den Fig. 113-117 andererseits unmittelbar zeigt, ändert sich an der Konstruktion der beweglichen Plattform 1003 samt dem Arm 113 und Werkzeugträger 1007 nichts, insbesondere deren Masse bleibt unverändert, sodass es möglich ist, derartige parallelkinematische Vorrichtungen nach einer Art Baukastenprinzip aufzubauen, sobald die Größe und die aufzunehmende Belastung festgelegt worden ist.

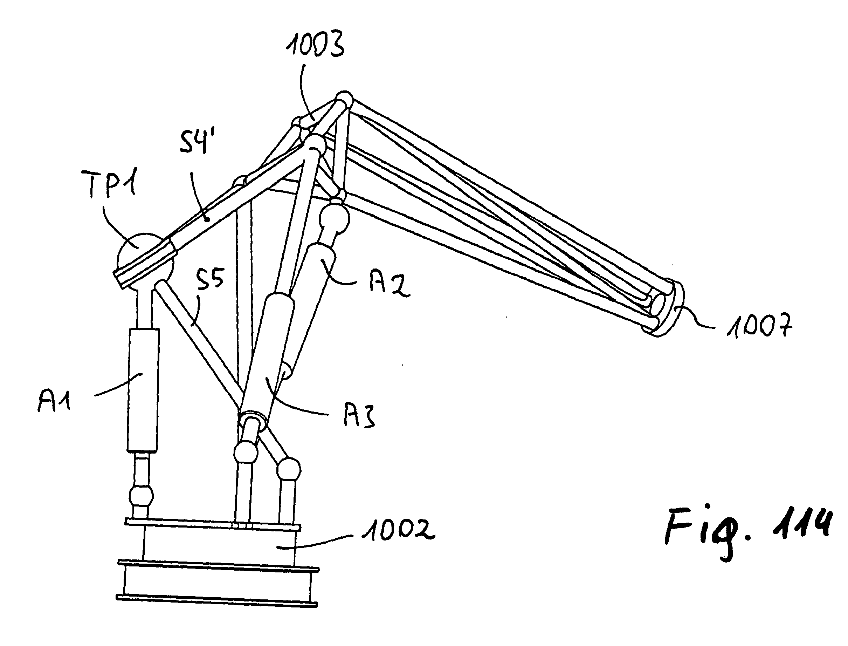

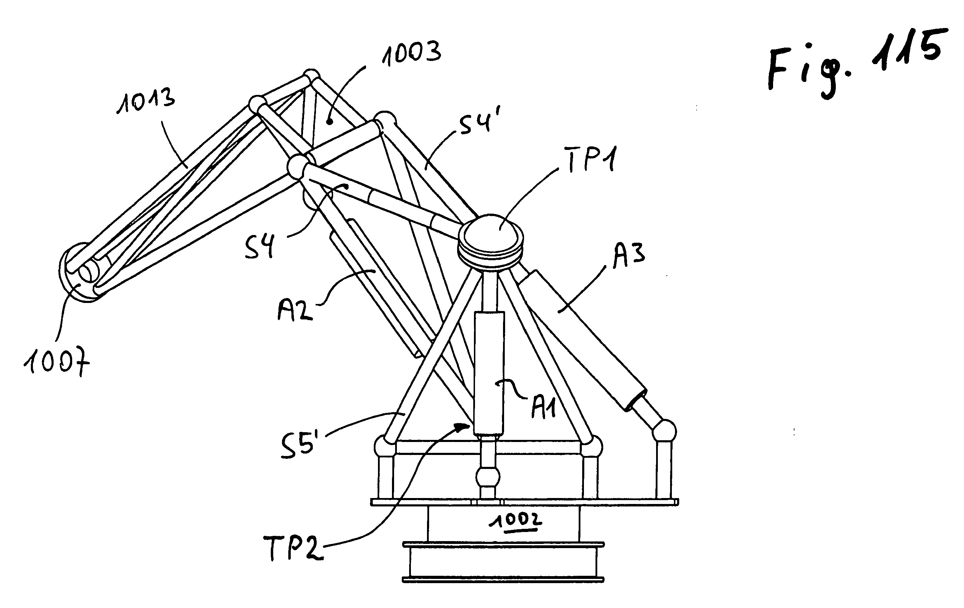

Die Fig. 113 zeigt die Vorrichtung in einer Ansicht analog zur Ansicht der Fig. 109 in ihrer symmetrischen Lage, die Fig. 114 zeigt eine Seitenansicht in verschobener Lage, die Schrägstellung der beweglichen Plattform 1003 und damit des Armes 1013 und der Werkzeughalterung 1007 sind deutlich zu erkennen. Dass es sich tatsächlich bezüglich der festen Plattform 1002 um eine Seitenansicht handelt, geht aus der fluchtenden Lage der Stäbe S5, S5' hervor. Die Fig. 115 zeigt die Situation in einer Rückansicht, erkennbar an der symmetrischen Darstellung der Stäbe S5, S5', und macht deutlich, wie stark die Abweichung von der symmetrischen Anordnung auf einfache Weise erzielt werden kann.

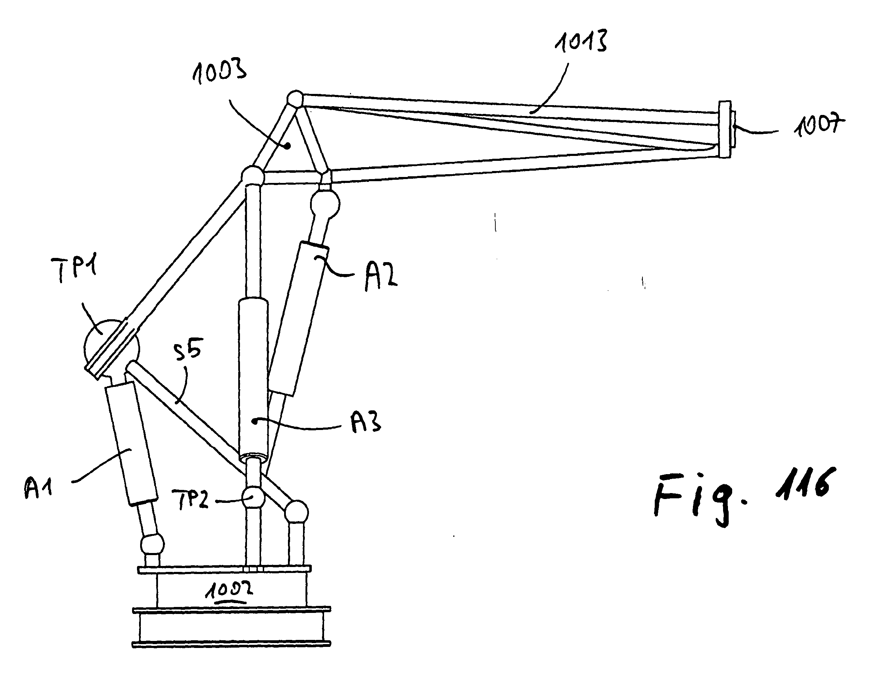

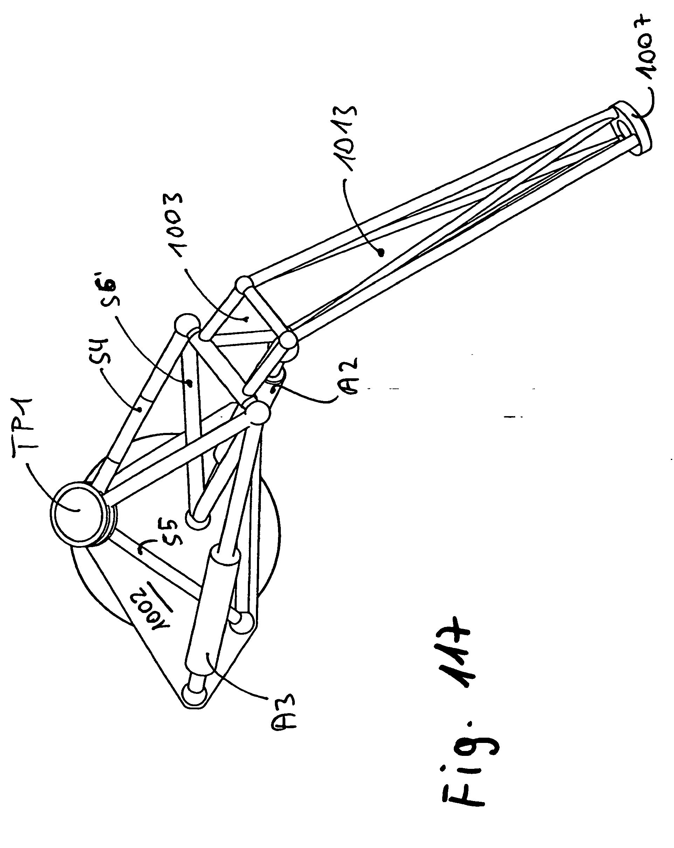

Die Fig. 116 zeigt eine Seitenansicht analog zu der der Fig. 114, allerdings mit der Vorrichtung in symmetrischer Position, hier zeigt auch ein Vergleich mit der zweiachsigen Ausführung gemäß Fig. 111 die Übereinstimmung der Konstruktion und damit die Möglichkeit einer Konstruktion aus dem Baukasten. Schließlich zeigt die Fig. 117 eine Draufsicht, um die erzielbare Winkel- und Lagenänderung deutlich zu machen.

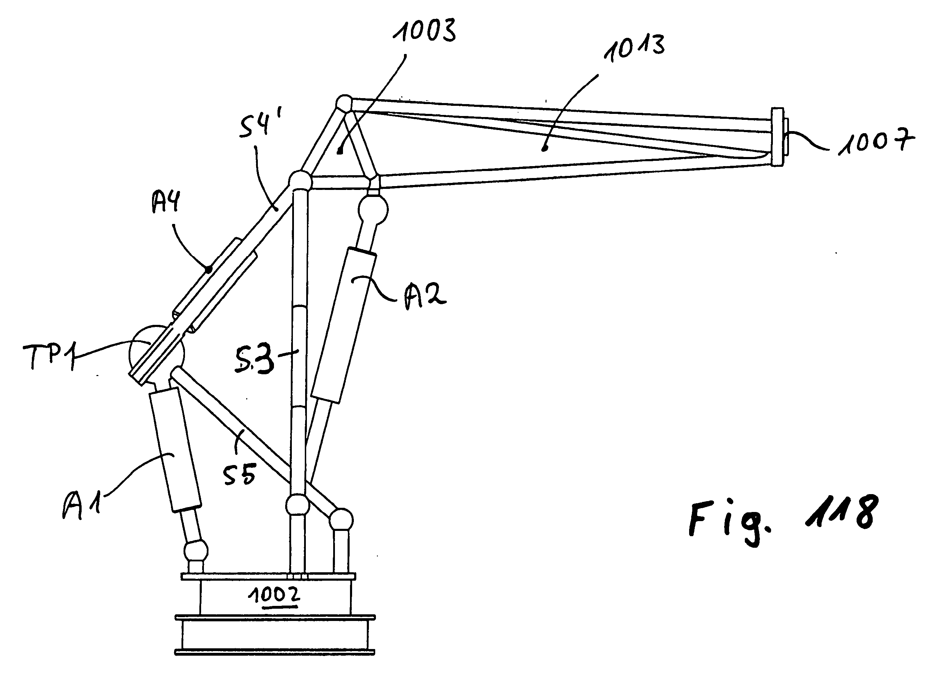

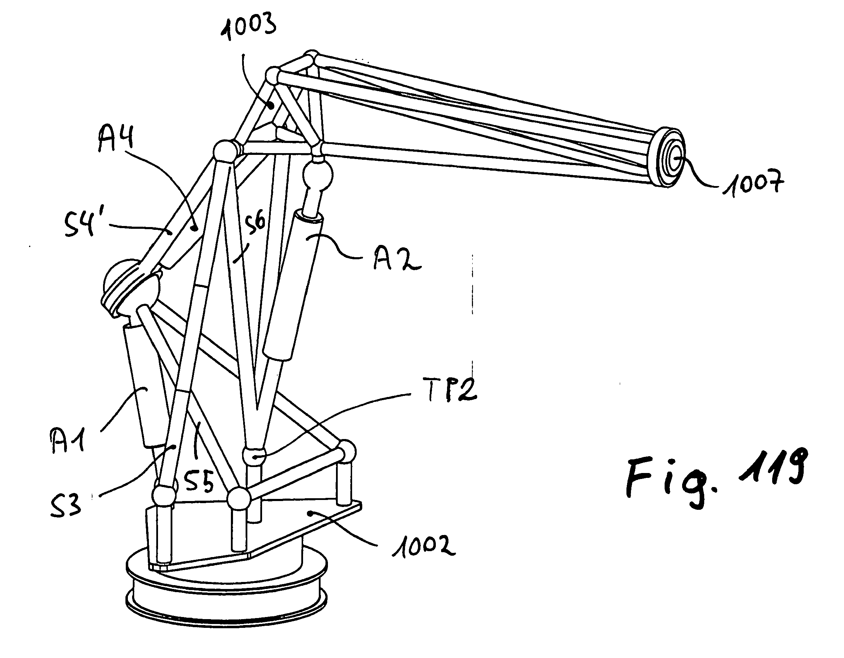

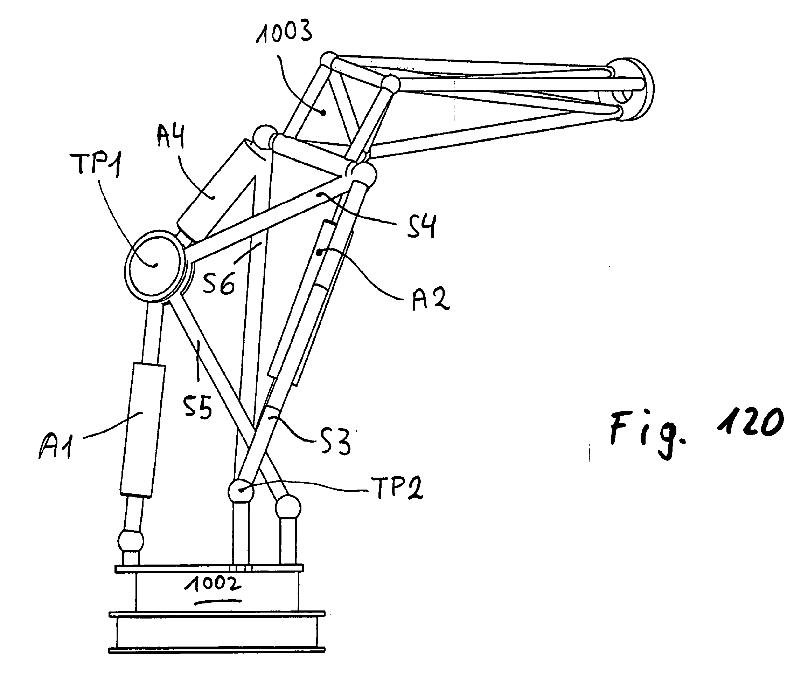

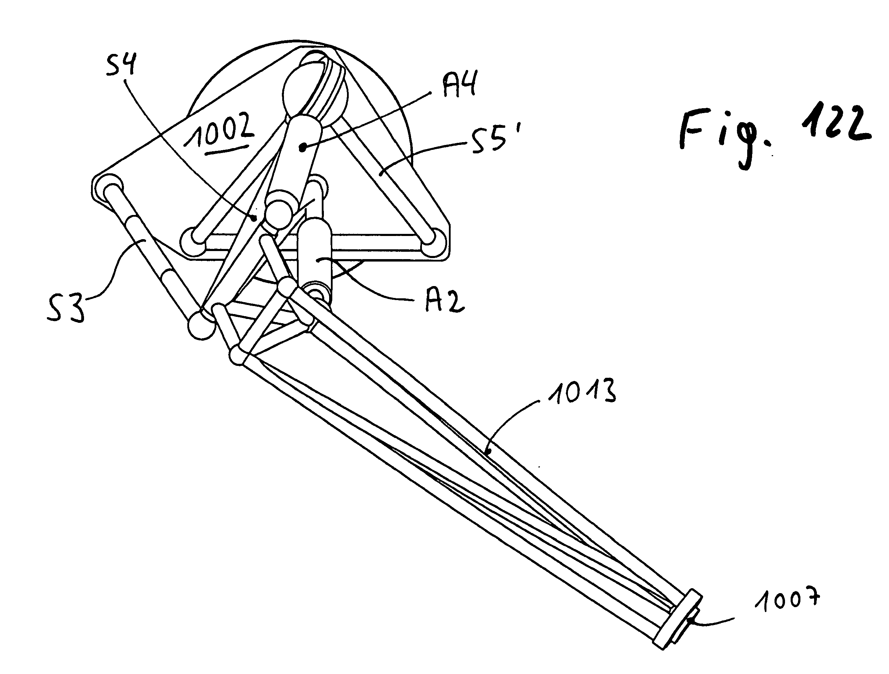

Eine Variante mit drei Aktuatoren, bei denen allerdings der Werkzeugträger nicht im wesentlichen um die Grundachse vollführt sondern um die Hochachse, geht aus den Darstellungen der Fig. 118 bis 122 hervor. Ausgehend von der Variante gemäß den Fig. 109 - 112 mit zwei Aktuatoren ist hier der Stab fester Länge S4 durch einen Aktuator A4 ersetzt. Bei einem Vergleich der Fig. 111 mit der Fig. 118 ist dies unmittelbar einsichtig. Zu bemerken ist noch, dass der Aktuator A4 in der Darstellung der Fig. 118 fluchtend hinter-dem Stab S4' liegt und daher nur durch die den Aktuator andeutende Verdickung über den Umriss des Stabes S4' ragt. Aus einer Zusammenschau der Fig. 118-122 geht die große Beweglichkeit der beweglichen Plattform 1003 und des mit ihr starr verbundenen Armes 1013, der den Werkzeugträger 1007 trägt hervor. Auch hier ist unmittelbar ersichtlich, dass an der kinematischen Vorrichtung selbst außer dem Ersatz des Stabes S4 durch den Aktuator A4 keine Änderung vorgenommen worden ist, wozu aber noch bemerkt werden soll, dass selbstverständlich der Aktuator A4 in seiner Dimensionierung im Allgemeinen vom Aktuator A3 abweicht. Aber schon die Anlenkpunkte selbst können in den meisten Fällen wiederum identisch ausgebildet sein, wodurch man große Losgrößen erhält und Kosten bei der Herstellung und der Lagerhaltung spart.

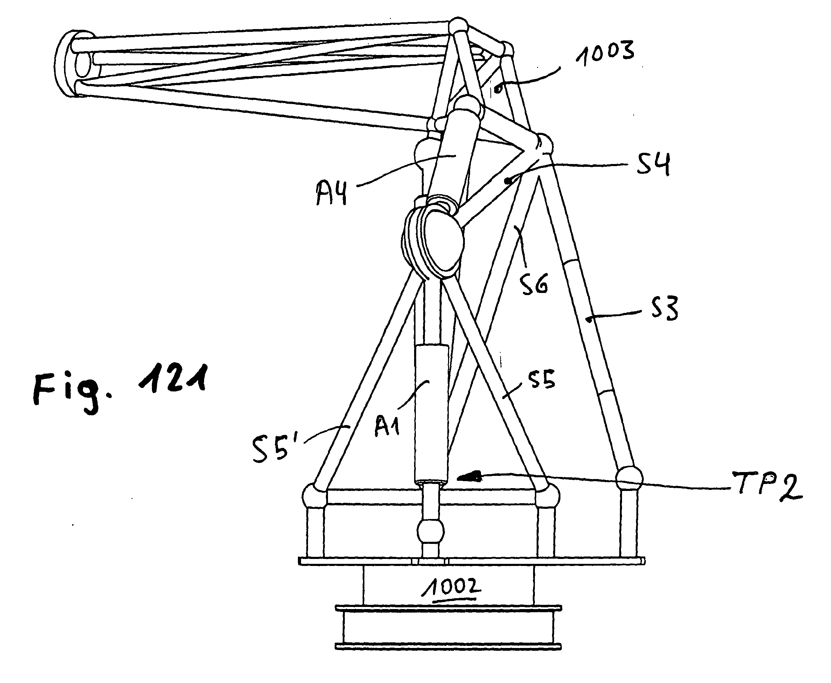

Insbesondere aus der Fig. 121 ist das große Ausmaß der Verdrehung bei reduzierter Länge des Aktuators A4 ersichtlich. Die Beweglichkeit, die ein nach den Fig. 118-122 ausgebildeter Handhabungsroboter aufweist, ist insbesondere beim Lackieren von Automobilkarossen und bei Robotern, die entlang einer Längsfahrbahn (zusätzlich zur Verdrehbarkeit der festen Plattform 1002 um ihre Hochachse) verfahrbar sind, wertvoll und daher sehr geschätzt. Hier können sie auf kleinstem Bau- und Bewegungsraum eine hohe Flexibilität erreichen.

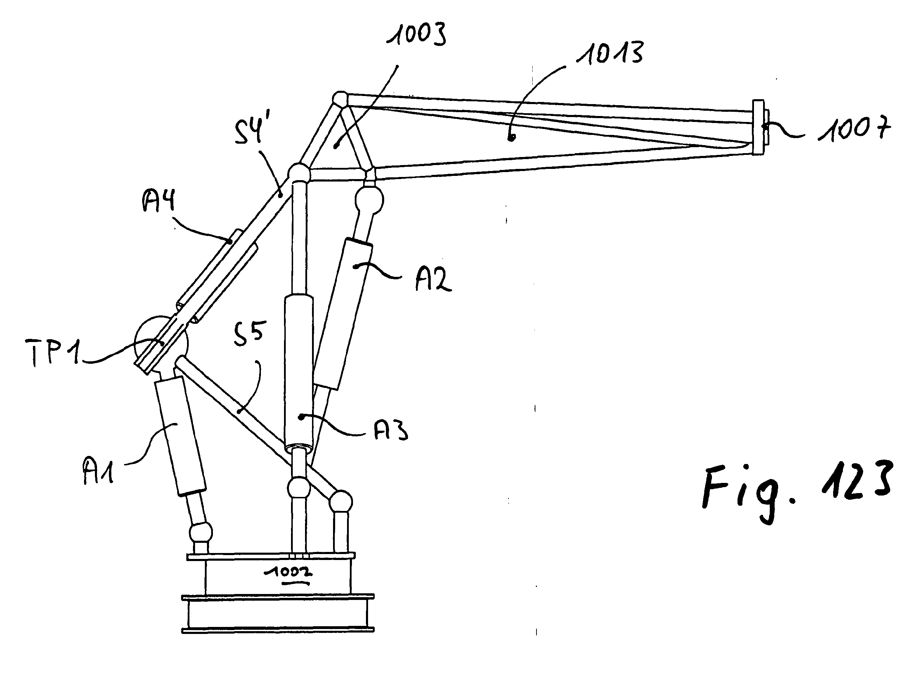

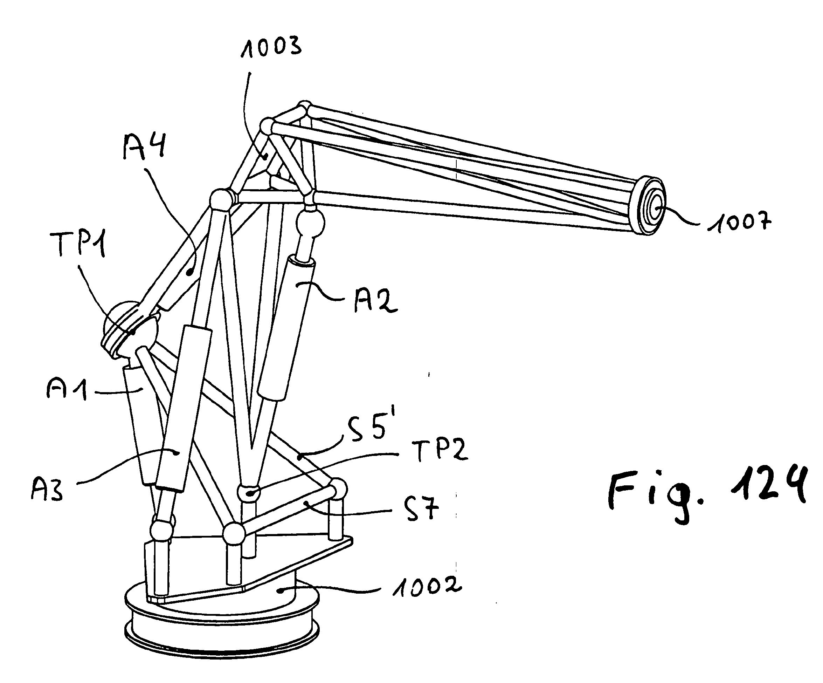

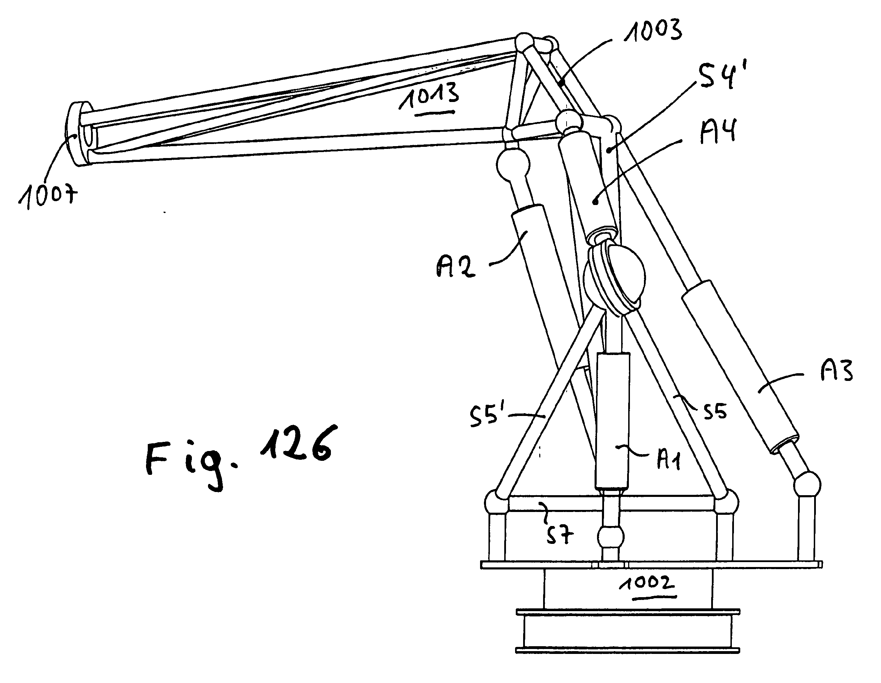

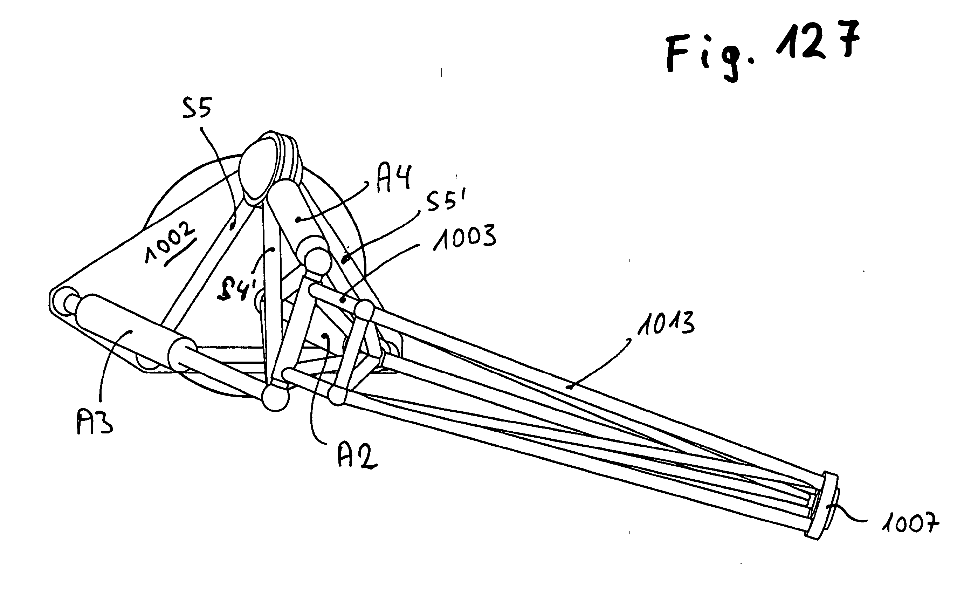

Die Fig. 123-127 zeigen die logische Fortbildung der vorstehend beschriebenen parallelkinematischen Vorrichtungen, bei dieser Variante sind sowohl der Stab S3 der Vorrichtung gemäß den Fig. 109-112 als auch der Stab S4 durch Aktuatoren ersetzt. Eine solche Vierachskinematik ist bei seriellen Robotern nur unter größtem Aufwand und den damit verbundenen Kosten möglich und führt zu extrem niedrigen Verhältnissen von Nutzlast zur Totlast, da, wie eingangs erläutert, alle Antriebe und Führungen vom Werkzeugträger weg bis zur festen Plattform mit der jeweils nächsten Führung und dem nächsten Antrieb mitgetragen und mittransportiert werden müssen. Wie aus den Figuren und dem Vergleich dieser Ausführungsform mit den drei vorstehend beschriebenen Ausführungsformen hervorgeht, bedarf es nur des Austausches der genannten Stäbe durch Aktuatoren, ohne dass sich am Aufbau, den Bauteilen und damit der Masse der beweglichen Plattform 1003 und der anderen Bestandteile der kinematischen Vorrichtung etwas ändert.

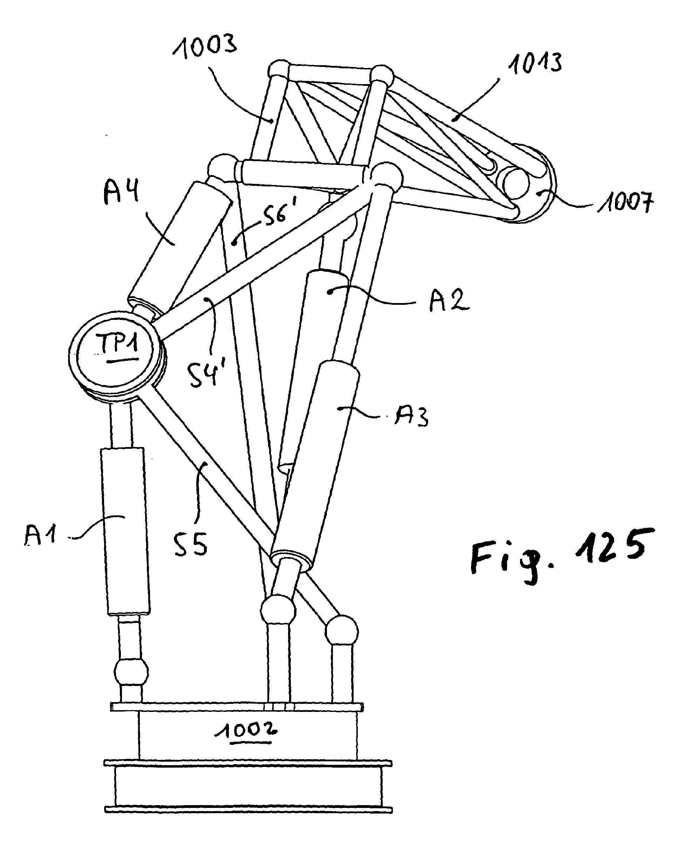

Aus einer Zusammenschau der Fig. 123-127 erkennt man die vielfältigen Bewegungs- und Orientierungsmöglichkeiten, wobei insbesondere darauf hingewiesen werden soll, dass die Fig. 125 eine Seitenansicht ist (der Stab S5 fluchtet mit dem von ihm verdeckten Stab S5') und die Ansicht 126 eine Rückansicht (die Stäbe S5 und S5' sind symmetrisch zur ,,Symmetrieebene" der Vorrichtung, wie sie die erste Vorrichtung dieser Reihe von abgewandelten Vorrichtungen stets aufweist und die anderen dann, wenn die Aktuatoren A3 und A4 ihre Normallage einnehmen).

Es ist die Erfindung nicht auf die dargestellten und beschriebenen Beispiele beschränkt, sondern kann auf unterschiedliche Weise auf eine große Anzahl von Anwendungsgebieten transferiert werden. Dabei sind selbstverständlich auch Kombinationen mit Vorrichtungen, wie sie eingangs erläutert wurden, möglich, beispielsweise auf dem Gebiet der Mikromanipulatoren oder auf dem Gebiet der Medizintechnik im Kleinen, bei Kränen und Erdbewegungsmaschinen im Großen.

Die verschiedenen in der Beschreibung erläuterten Aspekte der Erfindung wie Kraftecke, Wahl der Symmetrieebene, Benutzung der Pseudo-Tripelpunkte, etc. können auf andere Weise als beschrieben miteinander verbunden werden, die Auswahl und Kombination dieser Aspekte kann der Fachmann in Kenntnis der Erfindung leicht für das jeweilige Anwendungsgebiet adaptieren.

## Patentansprüche

1. Kinematische Verbindung einer festen Plattform (2) mit einer beweglichen Plattform (3) mit bis zu sechs Freiheitsgraden in geschlossenen kinematischen Ketten, sogenannte Parallelkinematik, wobei die Verbindungselemente Aktuatoren: Stäbe veränderlicher Länge oder Stäbe konstanter Länge mit veränderlicher Lage ihres Fußpunktes, gegebenenfalls teilweise passive Stäbe: Stäbe konstanter Länge mit fest auf der festen Plattform angeordneten Fußpunkten, und gegebenenfalls Zugmittel: Seile, Ketten, etc., sind, wobei drei Verbindungselemente in Form eines Pseudo-Tripelpunktes (P3') an einem gemeinsamen Punkt der beweglichen Plattform (3) angreifen, **dadurch gekennzeichnet, dass** der Pseudo-Tripelpunkt einer der folgenden Definitionen genügt:
a) Es greifen zwei der Verbindungselemente nahe benachbart an der beweglichen Plattform an, das dritte Verbindungselement an einem der beiden Verbindungselemente nahe seines Angriffspunktes an der beweglichen Plattform;
b) Es greifen zwei der Verbindungselemente gemeinsam an einem Punkt der beweglichen Plattform an, das dritte Verbindungselement an einem der beiden Verbindungselemente nahe des Angriffspunktes an der beweglichen Plattform;
c) Es greift ein Verbindungselement an einem Punkt der beweglichen Plattform an, das zweite Verbindungselement an diesem Verbindungselement nahe dessen Angriffspunktes an der beweglichen Plattform und das dritte Verbindungselement am zweiten Verbindungselement nahe dessen Angriffspunktes am ersten Verbindungselement;
d) Es greift ein Verbindungselement an einem Punkt der beweglichen Plattform an, das zweite Verbindungselement an diesem Verbindungselement nahe dessen Angriffspunktes an der beweglichen Plattform und das dritte Verbindungselement am ersten Verbindungselement nahe des Angriffspunktes des zweiten Verbindungselements;
Und dass der größte Abstand zwischen den Angriffspunkten der den Pseudo-Tripelpunkt bildenden Verbindungselemente kleiner ist als 20 % der kürzesten Länge des kürzesten der am Pseudo-Tripelpunkt endenden Verbindungselemente.

2. Kinematische Vorrichtung nach Anspruch 1, **dadurch gekennzeichnet, dass** der größte Abstand zwischen den Angriffspunkten der den Pseudo-Tripelpunkt bildenden Verbindungselemente kleiner ist als 10 % der kürzesten Länge des kürzesten Verbindungselementes.

3. Kinematische Vorrichtung nach Anspruch 1 oder 2, **dadurch gekennzeichnet, dass** die -kinematische Vorrichtung zumindest ein Krafteck aufweist, das aus einem Stab (S1) konstanter Länge und einem Aktuator (A1, A3) besteht, die einen gemeinsamen Kopfpunkt (K1) auf der beweglichen Plattform (6) aufweisen, der ein Doppelpunkt oder Pseudodoppelpunkt ist, wobei bevorzugt letzterer einer der folgenden Bedingungen genügt:
a) Es greift jedes der beiden Verbindungselemente für sich nahe des Angriffspunktes des anderen Verbindungselements an der beweglichen Plattform an;
b) Es greift ein Verbindungselement am anderen Verbindungselement nahe dessen Agriffspunkt an der bewegliehen Plattform an.

4. Kinematische Vorrichtung nach Anspruch 3, **dadurch gekennzeichnet, dass** die Fußpunkte des Stabes (S1) und des Aktuators (A1) nur eine Verschwenkung der beiden Elemente (A1, S1) um zueinander parallele Achsen (15) zulassen, die normal zur Ebene der beiden Elemente (A1, S1) verlaufen.

5. Kinematische Vorrichtung nach Anspruch 3, **dadurch gekennzeichnet, dass** der Kopfpunkt (K1) des Stabes (S1) und des Aktuators (A1) nur eine Verschwenkung der beweglichen Plattform (6) um eine Achse (15') zulassen, die normal zur Ebene der beiden Elemente (A1, S1) verlauft.

6. Kinematische Vorrichtung nach einem der Ansprüche 3 bis 5, **dadurch gekennzeichnet, dass** die Lage der beweglichen Plattform (6) bezüglich des Kopfpunktes (K1) durch einen Aktuator (A2) festgelegt wird.

7. Kinematische Vorrichtung nach Anspruch 3, **dadurch gekennzeichnet, dass** am Kopfpunkt (K1) ein weiterer Stab (S2) oder Aktuator (A3) angreift.

8. Kinematische Vorrichtung nach Anspruch 27, **dadurch gekennzeichnet, dass** nahe des Kopfpunkts (K1) ein Stab (S2) oder Aktuator (A3) am Stab (S1) angreift.

## Claims

1. Kinematic connection between a fixed platform (2) and a movable platform (3) with up to six degrees of freedom in closed kinematic chains, so-called parallel kinematics, wherein the connecting elements are actuators: variable-length rods or constant-length rods with a variable base-point position, possibly partly passive rods: constant-length rods with base points fixed on the fixed platform, and possibly pulling means: cables, chains, etc., wherein three connecting elements engage at a common point of the movable platform (3) in the form of a pseudo triple point (P3'), **characterized in that** the pseudo triple point satisfies one of the following definitions:
a) two of the connecting elements engage close together on the movable platform, and the third connecting element engages on one of the two connecting elements in the vicinity of the point of engagement thereof on the movable platform;
b) two of the connecting elements engage together at a point of the movable platform, and the third connecting element engages on one of the two connecting elements in the vicinity of the point of engagement on the movable platform;
c) one connecting element engages at a point of the movable platform, the second connecting element engages on said connecting element in the vicinity of the point of engagement thereof on the movable platform, and the third connecting element engages on the second connecting element in the vicinity of the point of engagement thereof on the first connecting element;
d) one connecting element engages at a point of the movable platform, the second connecting element engages on said connecting element in the vicinity of the point of engagement thereof on the movable platform, and the third connecting element engages on the first connecting element in the vicinity of the point of engagement of the second connecting element;
and **in that** the greatest distance between the points of engagement of the connecting elements forming the pseudo triple point is smaller than 20% of the shortest length of the shortest of the connecting elements terminating at the pseudo triple point.

2. Kinematic arrangement according to Claim 1, **characterized in that** the greatest distance between the points of engagement of the connecting elements forming the pseudo triple point is smaller than 10% of the shortest length of the shortest connecting element.

3. Kinematic arrangement according to Claim 1 or 2, **characterized in that** the kinematic arrangement has at least one polygon of forces which comprises a constant-length rod (S1) and an actuator (A1, A3), which have a common top point (K1) on the movable platform (3), which is a double point or a pseudo double point, wherein preferably the latter satisfies one of the following conditions:
a) each of the two connecting elements itself engages on the movable platform in the vicinity of the point of engagement of the other connecting element;
b) one connecting element engages on the other connecting element in the vicinity of the point of engagement thereof on the movable platform.

4. Kinematic arrangement according to Claim 3, **characterized in that** the base points of the rod (S1) and of the actuator (A1) allow only pivoting of the two elements (A1, S1) about parallel axes (15) which run normal to the plane of the two elements (A1, S1).

5. Kinematic arrangement according to Claim 3, **characterized in that** the top point (K1) of the rod (S1) and of the actuator (A1) allow only pivoting of the movable platform (3) about an axis (15') which runs normal to the plane of the two elements (A1, S1).

6. Kinematic arrangement according to one of Claims 3 to 5, **characterized in that** the position of the movable platform (3) in relation to the top point (K1) is defined by an actuator (A2).

7. Kinematic arrangement according to Claim 3, **characterized in that** a further rod (S2) or actuator (A3) engages at the top point (K1).

8. Kinematic arrangement according to Claim 7, **characterized in that** a rod (S2) or actuator (A3) engages on the rod (S1) in the vicinity of the top point (K1) .

## Revendications

1. Liaison cinématique d'une plateforme fixe (2) avec une plateforme mobile (3) possédant jusqu'à six degrés de liberté dans des chaînes cinématiques fermées, aussi appelée cinématique parallèle, dans laquelle les éléments de liaison sont des actionneurs : tiges de longueur variable ou tiges de longueur constante avec position variable de leur pied, le cas échéant en partie des tiges passives : tiges de longueur constante avec pieds disposés de manière fixe sur la plateforme fixe, et, le cas échéant, des moyens de traction : câbles, chaînes, etc., trois éléments de liaison agissant sous la forme d'un pseudo point triple (P3') sur un point commun de la plateforme mobile (3), **caractérisée en ce que** le pseudo point triple satisfait à l'une des définitions suivantes :
a) deux des éléments de liaison agissent en proche voisinage sur la plateforme mobile, le troisième élément de liaison agit sur un des deux éléments de liaison à proximité de son point d'attaque sur la plateforme mobile ;
b) deux des éléments de liaison agissent en commun sur un point de la plateforme mobile, le troisième élément de liaison agit sur un des deux éléments de liaison à proximité du point d'attaque sur la plateforme mobile ;
c) un élément de liaison agit sur un point de la plateforme mobile, le deuxième élément de liaison sur cet élément de liaison à proximité de son point d'attaque sur la plateforme mobile et le troisième élément de liaison sur le deuxième élément de liaison à proximité de son point d'attaque sur le premier élément de liaison ;
d) un élément de liaison agit sur un point de la plateforme mobile, le deuxième élément de liaison sur cet élément de liaison à proximité de son point d'attaque sur la plateforme mobile et le troisième élément de liaison sur le premier élément de liaison à proximité du point d'attaque du deuxième élément de liaison ;
et que la plus grande distance entre les points d'attaque des éléments de liaison formant le pseudo point triple est inférieure à 20 % de la plus courte longueur du plus court des éléments de liaison aboutissant au pseudo point triple.

2. Dispositif cinématique selon la revendication 1, **caractérisé en ce que** la plus grande distance entre les points d'attaque des éléments de liaison formant le pseudo point triple est inférieure à 10 % de la plus courte longueur du plus court élément de liaison.

3. Dispositif cinématique selon la revendication 1 ou 2, **caractérisé en ce que** le dispositif cinématique présente au moins un polygone de forces qui se compose d'une tige (S1) de longueur constante et d'un actionneur (A1, A3) qui présentent une tête (K1) commune sur la plateforme mobile (6), laquelle est un point double ou un pseudo point double, ce dernier satisfaisant de préférence à une des conditions suivantes :
a) chacun des deux éléments de liaison agit pour soi à proximité du point d'attaque de l'autre élément de liaison sur la plateforme mobile ;
b) un élément de liaison agit sur l'autre élément de liaison à proximité de son point d'attaque sur la plateforme mobile.

4. Dispositif cinématique selon la revendication 3, **caractérisé en ce que** les pieds de la tige (S1) et de l'actionneur (A1) permettent seulement un pivotement des deux éléments (A1, S1) autour d'axes (15) parallèles l'un à l'autre qui s'étendent perpendiculairement au plan des deux éléments (A1, S1).

5. Dispositif cinématique selon la revendication 3, **caractérisé en ce que** la tête (K1) de la tige (S1) et de l'actionneur (A1) permet seulement un pivotement de la plateforme mobile (6) autour d'un axe (15') qui s'étend perpendiculairement au plan des deux éléments (A1, S1).

6. Dispositif cinématique selon une des revendications 3 à 5, **caractérisé en ce que** la position de la plateforme mobile (6) par rapport à la tête (K1) est fixée par un actionneur (A2).

7. Dispositif cinématique selon la revendication 3, **caractérisé en ce qu'**une autre tige (S2) ou un autre actionneur (A3) agit sur la tête (K1).

8. Dispositif cinématique selon la revendication 7, **caractérisé en ce qu'**une tige (S2) ou un actionneur (A3) agit sur la tige (S1) à proximité de la tête (K1).
